# EUROPEAN PATENT APPLICATION

(11) **EP 4 715 546 A1**
(43) Date of publication of application: **25.03.2026**
(21) Application number: 24838341.6
(22) Date of filing: 19.03.2024
(51) Int. Cl.: G06F 3/0481, G06F 16/11

(54) **DATA INTERACTION METHOD, ELECTRONIC DEVICE AND STORAGE MEDIUM**

(30) Priority: 12.07.2023 CN 202310862288
(71) Applicant: Honor Device Co., Ltd., Shenzhen, Guangdong 518040 (CN)
(72) Inventor: XIAO, Liang, Shenzhen, Guangdong 518040 (CN)
(74) Representative: MERH-IP Matias Erny Reichl Hoffmann Patentanwälte PartG mbB
(86) International application number: PCT/CN2024/082530
(87) International publication number: WO 2025/011081

(57) **Abstract**

This application provides a data exchange method, an electronic device, and a storage medium, and relates to the field of terminal application technologies. In this method, a parallel space is set in a main system, and processes of creating, enabling, exiting, erasing, moving data into, and moving data out of the parallel space are provided. Specifically, when the parallel space is in use, the parallel space may directly enable data that can be migrated by the main system, so that data in the main system is migrated to the parallel space, data exchange between the main system and the parallel space is achieved, and data exchange is more convenient and faster.

## Description

This application claims priority to Chinese Patent Application No. 202310862288.2, filed with the China National Intellectual Property Administration on July 12, 2023 and entitled "DATA EXCHANGE METHOD, ELECTRONIC DEVICE, AND STORAGE MEDIUM", which is incorporated herein by reference in its entirety.

### TECHNICAL FIELD

Embodiments of this application relate to the field of terminal application technologies, and in particular, to a data exchange method, an electronic device, and a storage medium.

### BACKGROUND

As electronic devices provide increasing functions, people increasingly rely on the electronic devices for activities related to work, life, and the like. For ease of use by a user, two systems are set in some electronic devices, and both systems may be configured to store data to meet requirements of different users.

Currently, the two systems in the electronic device are two separate systems. For example, if the user enters a system A, the electronic device cannot simultaneously use a system B. If the user enters the system B, the electronic device cannot use the system A at the same time. Consequently, data between the two systems cannot be exchanged, and user experience is poor.

### SUMMARY

Embodiments of this application provide a data exchange method, an electronic device, and a storage medium, so as to resolve a problem in the conventional technology that data in two systems cannot be exchanged and user experience is poor.

To achieve the foregoing objective, the following technical solutions are used in this application:

According to a first aspect, an embodiment of this application provides a data exchange method, including:
displaying, by an electronic device, an application home screen of a subsystem application, where the subsystem application is a subsystem application running in a main system of the electronic device, and the application home screen includes a first control for moving a file in and a second control for moving a file out;
receiving, by the electronic device, a first operation performed on the first control, and displaying, by the electronic device, a first interface in response to the first operation, where the first interface includes an option of a first file category and an option of a second file category;
receiving, by the electronic device, a second operation performed on the option of the first file category, and displaying, by the electronic device, a second interface in response to the second operation, where the second interface includes a first file stored in the main system, and a file category of the first file is the first file category;
receiving, by the electronic device, a third operation, where the third operation includes an operation of selecting the first file, and displaying, by the electronic device, a third interface of the subsystem application in response to the third operation, where the third interface includes the first file;
receiving, by the electronic device, a fourth operation performed on the second control, and displaying, by the electronic device, a fourth interface of the subsystem application in response to the fourth operation, where the fourth interface includes an option of a third file category and an option of a fourth file category;
receiving, by the electronic device, a fifth operation performed on the option of the third file category, and displaying, by the electronic device, a fifth interface in response to the fifth operation, where the fifth interface includes a second file stored in the subsystem application, and a file category of the second file is the third file category; and
receiving, by the electronic device, a sixth operation, where the sixth operation includes an operation of selecting the second file, and displaying, by the electronic device, a sixth interface of the main system in response to the sixth operation, where the sixth interface includes the second file.

In this way, the first control for moving a file in and the second control for moving a file out are set on the application home screen of the subsystem application, a file in the main system is migrated to the subsystem application after an operation performed on the first control is received, and a file in the subsystem application is migrated to the main system after an operation performed on the second control is received. Therefore, the electronic device implements data exchange between the main system and the subsystem application, and user experience is improved.

As an example of this application, the displaying, by the electronic device, a first interface includes:
displaying, by the electronic device, the application home screen and the first interface in a split-screen manner.

In this way, the electronic device may display the first interface and the application home screen in a split-screen manner, so that operations of the user on the first interface and the application home screen are more convenient.

As an example of this application, an application adding button exists on the application home screen. When the electronic device displays the application home screen of the subsystem application, the method further includes:
receiving, by the electronic device, a seventh operation, where the seventh operation is performed on the application adding button;
displaying, by the electronic device, an eighth interface in response to the seventh operation, where the eighth interface includes an icon of a first application;
receiving, by the electronic device, an eighth operation, where the eighth operation includes an operation of selecting the first application; and
displaying the icon of the first application on the application home screen in response to the eighth operation, where the icon of the first application is used to start the first application.

In this way, the electronic device may display the icon of the first application by receiving the operation performed on the application adding button of the application home screen. After receiving the operation including selecting the icon of the first application, the electronic device may install the first application in the subsystem application. This application provides a method for installing an application in the subsystem, thereby improving performance of the subsystem application.

As an example of this application, when the electronic device displays the application home screen of the subsystem application, the method further includes:
receiving, by the electronic device, a ninth operation, where the ninth operation is performed on an icon of a second application displayed on the application home screen;
displaying, by the electronic device, a ninth interface in response to the ninth operation, where the ninth interface includes a first option of uninstalling the second application;
receiving, by the electronic device, a tenth operation, where the tenth operation is performed on the first option; and
displaying, by the electronic device, a tenth interface in response to the tenth operation, where the tenth interface includes a prompt that the electronic device is performing identity verification of a user;
where after the electronic device determines that an identity of the user is valid, the application home screen does not display the icon of the second application.

In this way, when an application is uninstalled from the subsystem application, the electronic device needs to verify the identity of the user. Only after determining that the identity of the user is valid, the electronic device can uninstall the application, thereby ensuring security of use of the subsystem application.

As an example of this application, the displaying, by an electronic device, an application home screen of a subsystem application includes:
displaying, by the electronic device, the system home screen of the main system;
receiving, by the electronic device, an eleventh operation, where the eleventh operation is a first gesture operation, or when an icon of a system settings application exists on the system home screen, the eleventh operation includes an operation performed on the icon of the system settings application;
displaying, by the electronic device, an eleventh interface in response to the eleventh operation, where the eleventh interface includes a creation option of the subsystem application;
receiving, by the electronic device, a twelfth operation, where the twelfth operation is performed on the creation option; and
displaying, by the electronic device, the application home screen of the subsystem application in response to the twelfth operation.

In this way, this application provides a method for creating a subsystem application in the electronic device by using a gesture or a settings application when the electronic device displays the system home screen of the main system, so that the user conveniently selects time for creating a subsystem application according to a requirement, use of the subsystem application is more flexible, and requirements of different users are met. In addition, the electronic device provides a plurality of methods for creating a subsystem application, which improves use performance of the electronic device and meets requirements of different users.

As an example of this application, the displaying, by an electronic device, an application home screen of a subsystem application includes:
displaying, by the electronic device, the system home screen of the main system;
receiving, by the electronic device, a thirteenth operation;
displaying, by the electronic device, a twelfth interface in response to the thirteenth operation, where the twelfth interface includes a prompt that identity verification of a user is being performed; and
after the electronic device determines that an identity of the user is valid, displaying, by the electronic device, the application home screen of the subsystem application.

In this way, the electronic device provides a method for entering the subsystem application from the main system, and when entering the subsystem application, the electronic device needs to verify the identity of the user. After determining that the identity of the user is valid, the electronic device displays a subsystem application, thereby ensuring security of the subsystem application, and providing a more secure subsystem space for the user.

As an example of this application, the thirteenth operation is a second gesture operation.

As an example of this application, the thirteenth operation includes a fourteenth operation and a fifteenth operation, an icon of a system settings application exists on the system home screen, and the fourteenth operation is performed on the icon of the system settings application; and
the displaying, by the electronic device, a twelfth interface in response to the thirteenth operation includes:
displaying, by the electronic device, a thirteenth interface in response to the fourteenth operation, where the thirteenth interface includes an entrance icon for entering the subsystem application;
receiving, by the electronic device, a fifteenth operation performed on the entrance icon; and
displaying, by the electronic device, the twelfth interface in response to the fifteenth operation.

In this way, the electronic device provides a method for starting the subsystem application by using a gesture or by using the settings application of the main system, which provides a plurality of manners for starting the subsystem application, and meets different user requirements.

As an example of this application, the thirteenth interface displays an erase option of the subsystem application; and
when the electronic device displays the thirteenth interface, the method further includes:
receiving, by the electronic device, a sixteenth operation performed on the erase option; and
displaying, by the electronic device, a fourteenth interface in response to the sixteenth operation, where the fourteenth interface includes a prompt that the subsystem application has been erased.

In this way, the electronic device provides a method for erasing the subsystem application by using the erase option in a settings interface. The user may choose to erase the subsystem application when the subsystem application does not need to be used, thereby improving flexibility of use of the subsystem application, enriching functions of the electronic device, and meeting different user requirements.

In an example of this application, the sixteenth operation includes a seventeenth operation, an eighteenth operation, a nineteenth operation, and a twentieth operation, and the displaying, by the electronic device, a fourteenth interface in response to the sixteenth operation includes:
displaying, by the electronic device, a fifteenth interface in response to the seventeenth operation, where the fifteenth interface includes a prompt that identity verification of a user is being performed;
after the electronic device determines that an identity of the user is valid, displaying, by the electronic device, a sixteenth interface, where the sixteenth interface includes a second option of determining to migrate data of the subsystem application to the main system;
receiving, by the electronic device, the eighteenth operation performed on the second option;
displaying, by the electronic device, a seventeenth interface in response to the eighteenth operation, where the seventeenth interface includes an option of a fifth file category and an option of a sixth file category;
receiving, by the electronic device, the nineteenth operation, where the nineteenth operation includes selecting the option of the fifth file category and/or the option of the sixth file category;
displaying, by the electronic device, an eighteenth interface in response to the nineteenth operation, where the eighteenth interface includes a file migration completion prompt and a third option;
receiving, by the electronic device, the twentieth operation performed on the third option; and
displaying, by the electronic device, the fourteenth interface in response to the twentieth operation.

In this way, before the subsystem application is erased, the electronic device may verify the identity of the user, thereby improving use security of the subsystem application. In addition, before the subsystem application is erased, the electronic device further provides a function of migrating data in the subsystem application to the main system, so as to ensure that data in the subsystem application is not lost, thereby improving user experience.

As an example of this application, the method further includes:
displaying, by the electronic device, a nineteenth interface of the main system, where the nineteenth interface is a system home screen of the main system, a lock screen interface, or an application interface of a third application in the main system, and displaying, on the nineteenth interface, a message notification bar in which the subsystem application receives a new message;
receiving, by the electronic device, a twenty-first operation, where the twenty-first operation is performed on the message notification bar;
displaying, by the electronic device, a twentieth interface in response to the twenty-first operation, where the twentieth interface includes a prompt that the electronic device is performing identity verification of a user; and
after the electronic device determines that an identity of the user is valid, displaying, by the electronic device, a twenty-first interface, where the twenty-first interface includes that the subsystem application receives a new message.

In this way, when the user needs to view a new message notification of the subsystem application on the interface of the main system, the electronic device needs to first verify the identity of the user, so as to ensure security of the message in the subsystem application. After determining that the identity of the user is valid, the electronic device displays the new message of the subsystem application.

As an example of this application, when the electronic device displays the application home screen of the subsystem application or an application interface of a fourth application in the subsystem application, the method further includes:
receiving, by the electronic device, a twenty-second operation; and
displaying, by the electronic device, a system home screen of the main system in response to the twenty-second operation, where the system home screen includes an icon of the subsystem application.

In this way, when the electronic device displays the home screen of the subsystem application, the user may return to the system home screen of the main system by using a corresponding operation, and the two systems may be switched to facilitate use by the user.

As an example of this application, the twenty-second operation is a third gesture operation or a lock screen operation.

In this way, this application provides a plurality of methods for returning to the main system from the subsystem application, thereby meeting different user requirements.

As an example of this application, when the electronic device displays the application home screen of the subsystem application or an application interface of a fifth application in the subsystem application, the method further includes:
receiving, by the electronic device, a twenty-third operation, where the twenty-third operation is different from the twenty-second operation;
displaying, by the electronic device, a twenty-second interface in response to the twenty-third operation, where the twenty-second interface includes a multi-task window, and the multi-task window includes a task window of the subsystem application;
receiving, by the electronic device, a twenty-fourth operation performed on the task window of the subsystem application;
displaying, by the electronic device, a twenty-third interface, where the twenty-third interface includes a prompt that identity verification of a user is being performed; and
after the electronic device determines that an identity of the user is valid, displaying, by the electronic device, a twenty-fourth interface, where the twenty-fourth interface includes content corresponding to the task window of the subsystem application.

In this way, multi-task display may be triggered when the electronic device displays the interface of the subsystem application. Identity verification needs to be performed when the user needs to view the content in the task window of the subsystem application in multi-task display. After the identity verification is passed, the electronic device displays the content in the task window of the subsystem application, thereby ensuring data security in the subsystem application.

As an example of this application, when the electronic device displays the system home screen of the main system, the method further includes:
receiving, by the electronic device, a twenty-fifth operation;
displaying, by the electronic device, a twenty-fifth interface in response to the twenty-fifth operation, where the twenty-fifth interface includes a multi-task window, and the multi-task window includes a second task window of the subsystem application;
receiving, by the electronic device, a twenty-sixth operation performed on the second task window;
displaying, by the electronic device, a twenty-sixth interface in response to the twenty-sixth operation, where the twenty-sixth interface includes a prompt that identity verification of a user is being performed; and
after the electronic device determines that an identity of the user is valid, displaying, by the electronic device, a twenty-seventh interface, where the twenty-seventh interface includes content corresponding to the second task window of the subsystem application.

In this way, multi-task display may be triggered when the electronic device displays the system home screen of the main system. Identity verification needs to be performed when the user needs to view the content in the task window of the subsystem application in multi-task display. After the identity verification is passed, the electronic device displays the content in the task window of the subsystem application, thereby ensuring data security in the subsystem application. According to a second aspect, an electronic device is provided. The electronic device includes a processor. The processor is configured to run a computer program stored in a memory, to implement the method according to any one of the implementations of the first aspect of this application.

According to a third aspect, a chip system is provided. The chip system includes a processor. The processor is coupled to a memory, and the processor executes a computer program stored in the memory, to implement the method according to any one of the implementations of the first aspect of this application.

According to a fourth aspect, a computer-readable storage medium is provided. The computer-readable storage medium stores a computer program, and when the computer program is executed by one or more processors, the method according to any one of the implementations of the first aspect of this application is implemented.

According to a fifth aspect, an embodiment of this application provides a computer program product. When the computer program product runs on a device, the device is enabled to perform the method according to any one of the implementations of the first aspect of this application.

It may be understood that for beneficial effects of the second aspect to the fifth aspect, reference may be made to the related descriptions in the first aspect. Details are not described herein again.

### BRIEF DESCRIPTION OF DRAWINGS

FIG. 1 is a schematic diagram of a hardware structure of an electronic device to which an object processing method is applied according to an embodiment of this application;
FIG. 2A to FIG. 2F are a schematic diagram of a part of an interface for creating a parallel space by using setting according to an embodiment of this application;
FIG. 3G to FIG. 3M are a schematic diagram of another part of an interface for creating a parallel space by using setting according to an embodiment of this application;
FIG. 4A to FIG. 4C are a schematic diagram of an interface for creating a parallel space by using a gesture according to an embodiment of this application;
FIG. 5 is a schematic diagram of an interface in a security option in main system setting after a parallel space is created according to an embodiment of this application;
FIG. 6A and FIG. 6B are a schematic diagram of an interface for entering a parallel space by using a home screen icon according to an embodiment of this application;
FIG. 7A to FIG. 7C are a schematic diagram of another interface for entering a parallel space by using a home screen icon according to an embodiment of this application;
FIG. 8A to FIG. 8E are a schematic diagram of another interface for entering a parallel space by using a home screen icon according to an embodiment of this application;
FIG. 9A to FIG. 9F are a schematic diagram of an interface for entering a parallel space by using a gesture according to an embodiment of this application;
FIG. 10A to FIG. 10F are a schematic diagram of an interface for entering a parallel space by using setting according to an embodiment of this application;
FIG. 11 is a schematic diagram of an interface for displaying a parallel space by a display screen according to an embodiment of this application;
FIG. 12 is a schematic diagram of another interface for displaying a parallel space by a display screen according to an embodiment of this application;
FIG. 13A to FIG. 13D are a schematic diagram of an interface for exiting a parallel space according to an embodiment of this application;
FIG. 14A to FIG. 14D are a schematic diagram of an interface for moving data into a parallel space according to an embodiment of this application;
FIG. 15A to FIG. 15D are a schematic diagram of another interface for moving data into a parallel space according to an embodiment of this application;
FIG. 16A to FIG. 16D are a schematic diagram of another interface for moving data into a parallel space according to an embodiment of this application;
FIG. 17A to FIG. 17D are a schematic diagram of another interface for moving data into a parallel space according to an embodiment of this application;
FIG. 18 is a schematic diagram of another interface for moving data into a parallel space according to an embodiment of this application;
FIG. 19 is a schematic diagram of another interface for moving data into a parallel space according to an embodiment of this application;
FIG. 20A to FIG. 20D are a schematic diagram of an interface for moving data out of a parallel space according to an embodiment of this application;
FIG. 21A to FIG. 21D are a schematic diagram of another interface for moving data out of a parallel space according to an embodiment of this application;
FIG. 22A to FIG. 22C are a schematic diagram of an interface for adding an application to a parallel space according to an embodiment of this application;
FIG. 23A to FIG. 23E are a schematic diagram of an interface for uninstalling an application from a parallel space according to an embodiment of this application;
FIG. 24A to FIG. 24D are a schematic diagram of an interface for erasing a parallel space according to an embodiment of this application;
FIG. 25A to FIG. 25E are a schematic diagram of another interface for erasing a parallel space according to an embodiment of this application;
FIG. 26A to FIG. 26F are a schematic diagram of another interface for erasing a parallel space according to an embodiment of this application;
FIG. 27A to FIG. 27C are a schematic diagram of an interface for displaying a new message notification in a parallel space by a main system notification bar according to an embodiment of this application;
FIG. 28 is a schematic diagram of an interface for displaying a new message notification in a parallel space on a lock screen of a main system according to an embodiment of this application;
FIG. 29 is a schematic diagram of an interface for displaying a new message notification in a parallel space on a system home screen of a main system according to an embodiment of this application;
FIG. 30A and FIG. 30B are a schematic diagram of an interface for gallery display in a parallel space according to an embodiment of this application;
FIG. 31A to FIG. 31C are a schematic diagram of another interface for gallery display in a parallel space according to an embodiment of this application;
FIG. 32A to FIG. 32D are a schematic diagram of another interface for gallery display in a parallel space according to an embodiment of this application;
FIG. 33A to FIG. 33C are a schematic diagram of an interface for setting a parallel space according to an embodiment of this application;
FIG. 34A to FIG. 34C are a schematic diagram of an interface for displaying content in a parallel space in a multi-task manner according to an embodiment of this application; and
FIG. 35A to FIG. 35C are a schematic diagram of another interface for displaying content in a parallel space in a multi-task manner according to an embodiment of this application.

### DESCRIPTION OF EMBODIMENTS

In the following descriptions, for the purpose of description instead of limitation, specific details such as a specific system structure and a technology are proposed, to provide a thorough understanding of embodiments of this application. However, persons skilled in the art should understand that this application may also be implemented in another embodiment without these specific details.

It should be understood that when being used in this specification and the appended claims of this application, the term "include" indicates presence of a described feature, entirety, step, operation, element, and/or component, but does not rule out presence or addition of one or more other features, entireties, steps, operations, elements, components, and/or sets thereof.

It should be further understood that in embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects.

In addition, in the descriptions of this specification and the appended claims of this application, the terms such as "first", "second", "third", and "fourth" are used only to distinguish between descriptions, and should not be understood as an indication or implication of relative importance.

Referring to "one embodiment", "some embodiments", or the like that is described in this specification of this application means that specific features, structures, or characteristics described with reference to one or more embodiments of this application are included in the one or more embodiments. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specially emphasized in other manners.

A data exchange method provided in embodiments of this application is applicable to an electronic device. The electronic device may be a tablet computer, a mobile phone, a wearable device, a notebook computer, an ultra-mobile personal computer (ultra-mobile personal computer, UMPC), a netbook, a personal digital assistant (personal digital assistant, PDA), or another electronic device. A specific type of the electronic device is not limited in embodiments of this application.

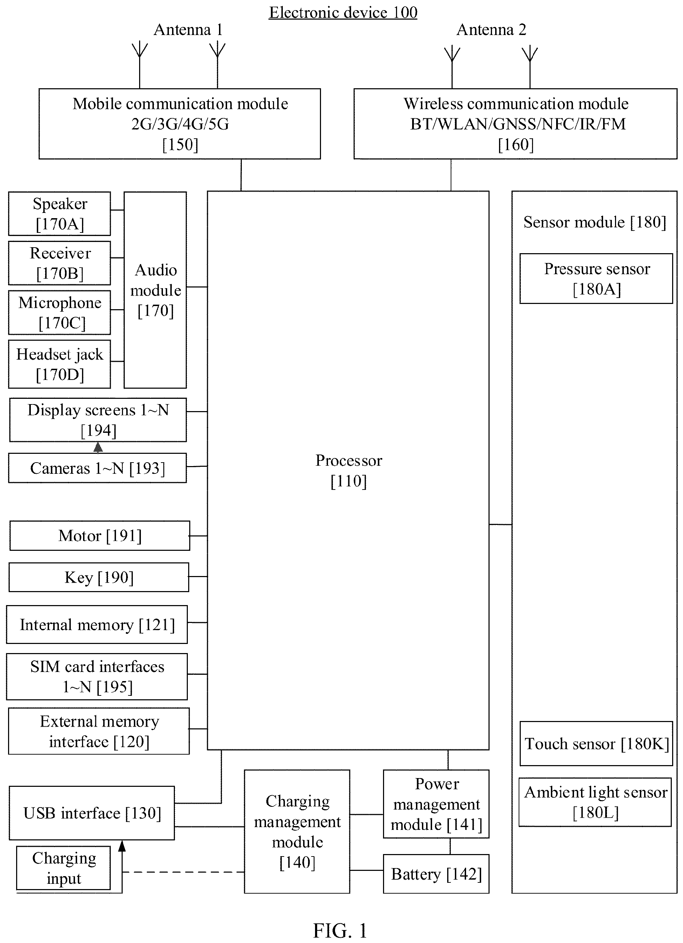

FIG. 1 is a schematic diagram of a structure of an electronic device. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, a camera 193, a display screen 194, a subscriber identification module (subscriber identification module, SIM) card interface 195, and the like. The sensor module 180 may include a pressure sensor 180A, a touch sensor 180K, an ambient light sensor 180L, and the like.

It may be understood that the structure shown in this embodiment of this application does not constitute a specific limitation on the electronic device 100. In some other embodiments of this application, the electronic device 100 may include more or fewer components than those shown in the figure, combine some components, split some components, or have different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a coprocessor (sensor coprocessor, SCP), a baseband processor, a neural-network processing unit (neural-network processing unit, NPU), and/or the like. Different processing units may be independent devices, or may be integrated into one or more processors. For example, the processor 110 is configured to perform the data exchange method in embodiments of this application.

The controller may be a nerve center and a command center of the electronic device 100. The controller may generate an operation control signal based on an instruction operation code and a time sequence signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121, to perform various functional applications and data processing of the electronic device 100. The internal memory 121 may include a program storage area and a data storage area. The program storage area may store an operating system and an application required by at least one function (for example, a sound playback function or an image playback function).

In addition, the internal memory 121 may include a high-speed random access memory, and may further include a nonvolatile memory, for example, at least one magnetic disk storage device, a flash memory device, or a universal flash storage (universal flash storage, UFS).

The charging management module 140 is configured to receive a charging input from a charger. The charger may be a wireless charger or a wired charger. In some embodiments of wired charging, the charging management module 140 may receive a charging input from a wired charger through the USB interface 130.

The power management module 141 is configured to be connected to the battery 142, the charging management module 140, and the processor 110. The power management module 141 receives an input from the battery 142 and/or the charging management module 140, and supplies power to the processor 110, the internal memory 121, an external memory, the display screen 194, the camera 193, the wireless communication module 160, and the like.

In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, through the antenna 1, an amplified signal into an electromagnetic wave for radiation.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 may implement an audio function, for example, music playing or sound recording, through the audio module 170, the speaker 170A, the receiver 170B, the microphone 170C, the headset jack 170D, the application processor, and the like.

The audio module 170 is configured to convert a digital audio signal into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device 100 may listen to music or answer a call in a hands-free mode by using the speaker 170A.

The receiver 170B, also referred to as an "earpiece", is configured to convert an audio electrical signal into a sound signal. When a call is answered or voice information is listened to by using the electronic device 100, the receiver 170B may be put close to a human ear to listen to a voice.

The microphone 170C, also referred to as a "mic" or "mike", is configured to convert a sound signal into an electrical signal. When making a call or sending voice information, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to listening to a voice message. In some other embodiments, three, four, or more microphones 170C may alternatively be disposed in the electronic device 100, to collect a sound signal, reduce noise, further recognize a sound source, implement a directional sound recording function, and so on. The headset jack 170D is configured to connect to a wired headset. The headset jack 170D may be the USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed in the display screen 194. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device 100 determines intensity of a pressure based on a change of the capacitance. When a touch operation is performed on the display screen 194, the electronic device 100 detects intensity of the touch operation by using the pressure sensor 180A. The electronic device 100 may also calculate a touch position based on a detected signal of the pressure sensor 180A.

The touch sensor 180K is also referred to as a "touch panel". The touch sensor 180K may be disposed on the display screen 194. The touch sensor 180K and the display screen 194 form a touchscreen, also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194. In some other embodiments, the touch sensor 180K may alternatively be disposed on a surface of the electronic device 100 at a position different from that of the display screen 194.

The ambient light sensor 180L is configured to sense ambient light brightness. The electronic device 100 may adaptively adjust brightness of the display screen 194 based on the sensed ambient light brightness. The ambient light sensor 180L may be further configured to automatically adjust white balance during photographing. The ambient light sensor 180L may further cooperate with the optical proximity sensor 180G to detect whether the electronic device 100 is in a pocket to prevent an accidental touch.

The key 190 includes a power key, a volume key, or the like. The key 190 may be a mechanical key, or may be a touch key. The electronic device 100 may receive a key input and generate a key signal input related to user settings and function control of the electronic device 100.

The motor 191 may generate a vibration alert. The motor 191 may be configured to provide a vibration prompt for an incoming call, and may be further configured to provide vibration feedback for a touch.

The electronic device 100 implements a display function through the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro OLED, a quantum dot light emitting diode (quantum dot light emitting diodes, QLED), or the like. In some embodiments, the electronic device 100 may include one or N display screens 194, where N is a positive integer greater than 1.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The SIM card interface 195 is configured to be connected to a SIM card. The SIM card may be inserted into the SIM card interface 195 or removed from the SIM card interface 195 to implement contact with and separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may be further compatible with SIM cards of different types. The SIM card interface 195 may be further compatible with an external memory card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A specific structure of an execution body of a data exchange method is not specially limited in embodiments of this application, provided that code recording the data exchange method in embodiments of this application can be run to perform communication according to the data exchange method provided in the embodiments of this application. For example, the execution body of the data exchange method provided in embodiments of this application may be a functional module that is in an electronic device and that can invoke a program and execute the program, or may be a communication apparatus, for example, a chip, applied to an electronic device.

As electronic devices provide increasing functions, people increasingly rely on the electronic devices. A user may use an electronic device to perform activities related to work, life, and the like. As an example, a user may store data (for example, a document, a video, an audio, or a picture) into the electronic device, or perform related processing on stored data. Some important data or secret data exists in the data stored by the user. To ensure security of the important data and the secret data, it is necessary to store the important data or the secret data in a more secure storage manner.

For this reason, dual systems are set in some electronic devices. One system may be used by the user for daily use, and the other system may be used by the user as a privacy system. The two systems are completely split and disconnected from each other.

In a use process of the two systems, the user can only enter the systems from a lock screen. For example, the user is currently using a system A. If the user wants to switch to a system B, the user needs to lock the screen of the electronic device. After unlocking, the user enters the system B by entering a verification password, and cannot directly enter the system B when the system A is in use. Therefore, system switching is inconvenient.

In addition, because the two systems are independent and are disposed in a same electronic device, the user can choose to use only one system, which causes that data between the two systems cannot be exchanged, that is, data between the two systems cannot be transmitted, which causes inconvenience for the user. Therefore, it is particularly important that the electronic device provides a convenient system switching method and a convenient data transmission method.

An embodiment of this application provides a data exchange method. The method may be applied to an electronic device. The electronic device includes a main system (or referred to as a main space) and a space (or referred to as a parallel space). The space provides a new space (system) applied to the electronic device other than the main system of the electronic device. The space may store data with relatively high confidentiality. This application further provides a simple and fast interaction manner, so as to implement data migration between two spaces (systems). In addition, this application further provides a fast interaction manner, so as to implement switching between two spaces.

Data (file) in this application may include a document, a picture, a video, an audio, an application, and the like. Data migration or movement in this application has a same meaning, and may be data cutting or copying.

The following describes a specific implementation solution of the data exchange method provided in embodiments of this application.

An embodiment of this application provides a parallel space in an electronic device. The parallel space may be considered as another subsystem (second system) in the electronic device other than a main space. The parallel space is a subsystem application installed in a storage space of the main system, that is, the subsystem application is located at an application layer of the main system. Running of the subsystem application needs to depend on support by the main system. Therefore, the parallel space is a privacy space in the main system, and the subsystem exists in an application form. The subsystem has an independent storage space. In addition, the subsystem is not a subsystem that is completely parallel to the main system, but a subsystem application running at the application layer of the main system. The subsystem application has a system function. For example, after the subsystem application is enabled, a main interface (application home screen) of the subsystem application may be displayed. The main interface may display icons (for example, an instant messaging application, a camera application, and a game application) of a plurality of applications installed in the subsystem application. Certainly, the subsystem also has an independent storage space, and the independent storage space of the subsystem may also store user data that cannot be accessed in the main system and that can be accessed only after the subsystem is entered.

Data such as a picture, a video, and an audio may be stored in the parallel space. In addition, an application may be installed in the parallel space, and an installed application may be run. For example, a communication application, a photographing application, and a game application may be installed in the parallel space.

In addition, to improve a security level of data in the parallel space, an identity of a user may be verified when the parallel space is entered. Therefore, a password or a biometric feature, such as a fingerprint or a face, for entering the parallel space may be set. The password of the parallel space may be different from the password of the main space, or may be the same as the password of the main space. The biometric feature of the parallel space may be the same as the biometric feature of the main space, or may be different from the biometric feature of the main space. This may be selected according to a requirement in actual application.

A name of the parallel space is only used as an example. In actual application, the parallel space may also be denoted as a parallel system, a dual-subsystem application, a dual-sub security system, a split system, a second system, a security system, and the like. In embodiments of this application, the "parallel space" is used for description. In addition, the electronic device in this application may be a foldable-screen mobile phone, a non-foldable-screen mobile phone, or the like. This is not limited herein. For ease of description, in this application, a foldable-screen mobile phone is used as an example for illustrative description.

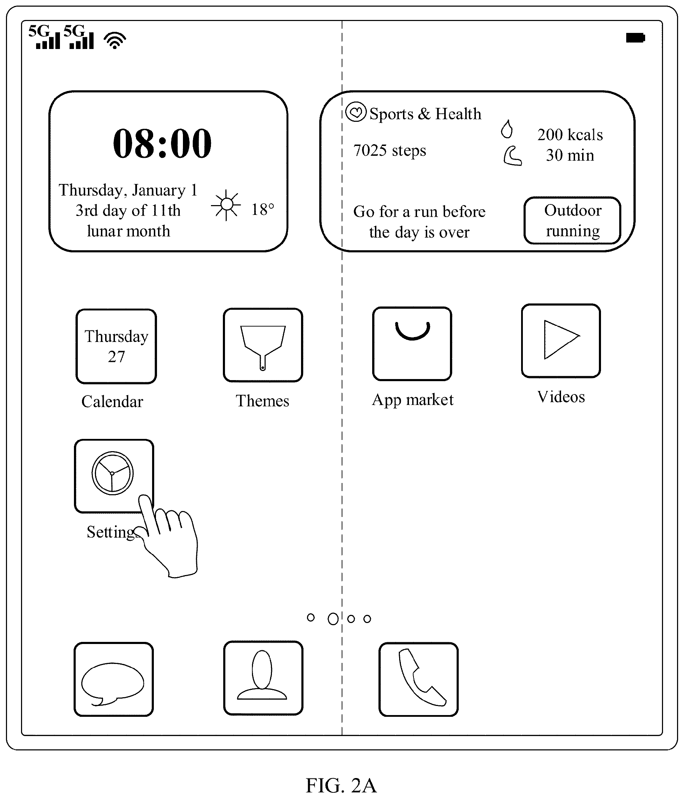

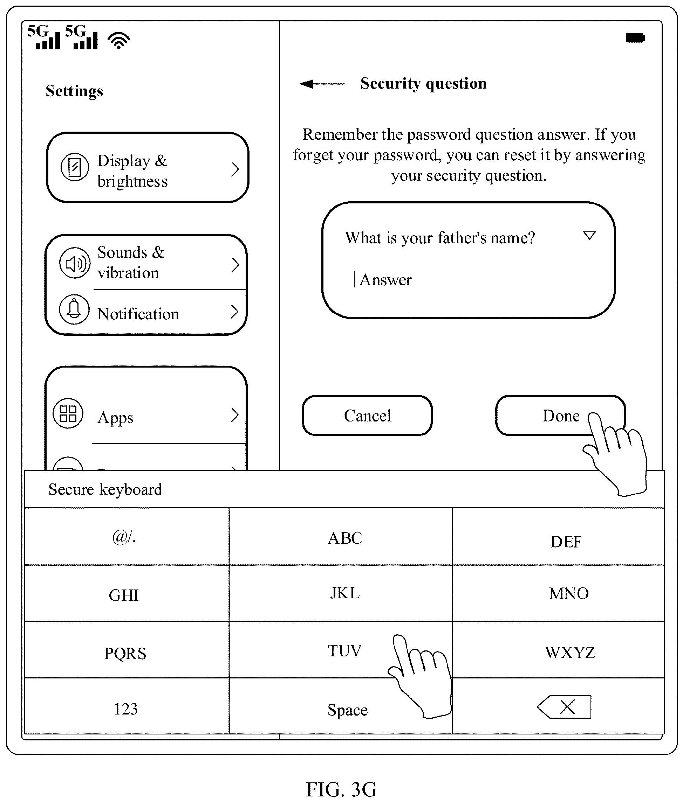

The following first describes a method for creating a parallel space according to an embodiment of this application. Refer to FIG. 2A to FIG. 2F and FIG. 3G to FIG. 3M, which are schematic process diagrams of a method for creating a parallel space according to an embodiment of this application.

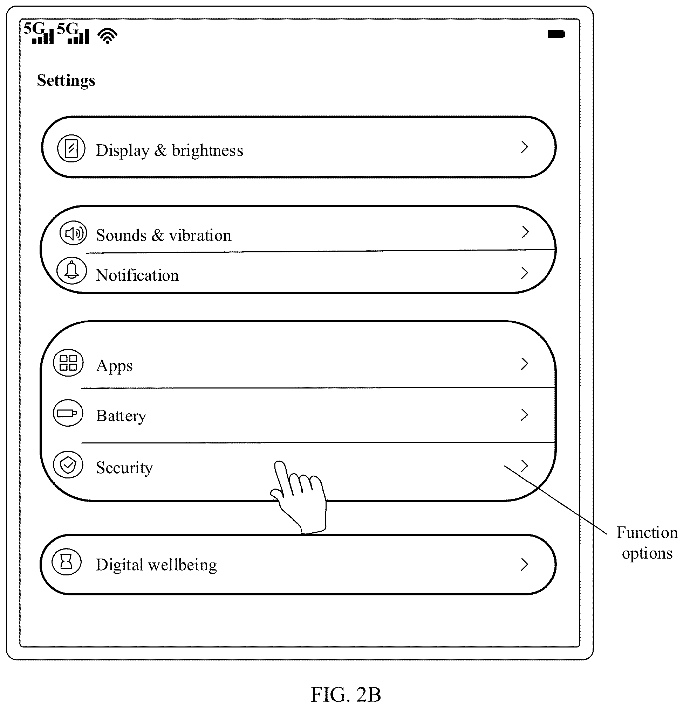

As shown in FIG. 2A, a display screen of the electronic device displays a system home screen of a main system. The system home screen of the main system includes icons or controls of applications installed in the main system, such as Calendar, Theme, Application Gallery, and Time. Each application icon in the interface is used to start a corresponding application. A settings application in the interface is used to set a function of the electronic device. If a user needs to set the system, the user needs to tap the "settings" icon on the system home screen of the main system. The electronic device displays an interface shown in FIG. 2B in response to the operation of tapping the "settings" icon in the main system interface by the user.

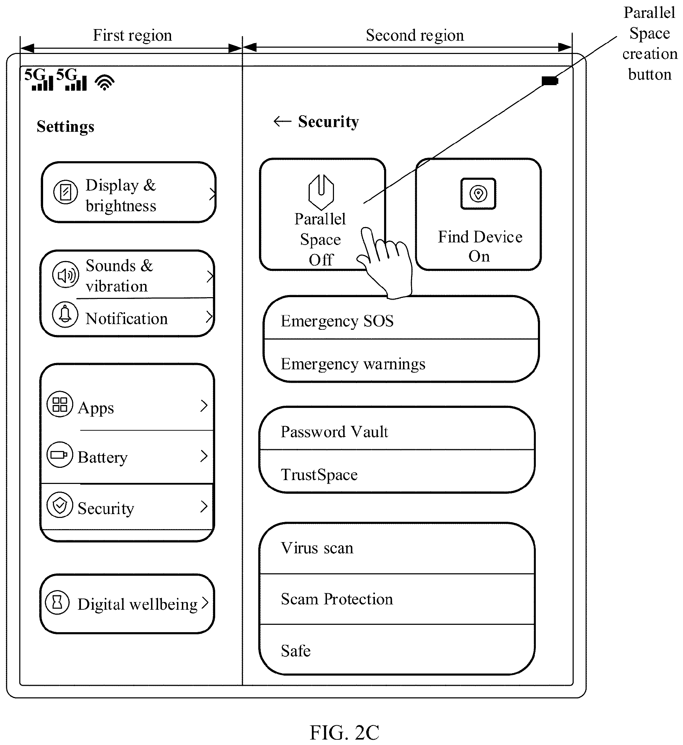

As shown in FIG. 2B, after the user taps the "settings" icon, the electronic device displays a settings interface of the main system, and a function option that can be set in the main system exists in the settings interface, for example, a function option such as "display and brightness", "sound and vibration", and "security". Different functions may be set in different function options, for example, audio of an incoming call and/or audio of incoming information of the main system may be set in the sound and vibration option. In the "display and brightness" option, a display font, a display size, and screen brightness of the main system may be set. In the "security" option, a function related to security of the main system may be set. In the "security" option, if the user needs to create a parallel space, the user may tap the "security" option in the settings interface, and the electronic device displays a function item included in the "security" option in response to the user tapping the "security" option in the settings interface, specifically, as shown by an interface in FIG. 2C.

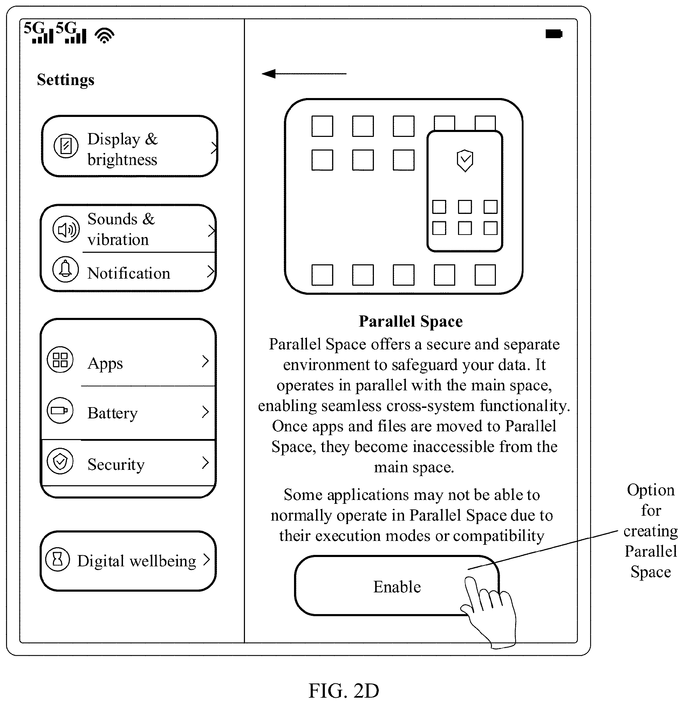

As shown in FIG. 2C, after the user taps the "security" option in the settings interface, the display screen of the electronic device performs split-screen display, where a first region (left region) of the display screen is used to display the settings interface shown in FIG. 2B, and a second region (right region) of the display screen is used to display a function item corresponding to the "security" option. The function item corresponding to the "security" option may include items such as creation of a parallel space, setting of finding device, setting of emergency rescue, and setting of payment protection. If the user needs to create a parallel space, the user needs to tap a parallel space creation button in the interface ("parallel space off" option or icon). When no parallel space is created in the electronic device, the "parallel space" option in the interface shown in FIG. 2C displays "off". In addition, after the electronic device performs display in a split-screen manner, the "security" option in the first region may be in a "selected" state. For example, the "security" option is in a state with a background color, and all options except the "security" option are in a state without a background color. The background color of the "security" option may be set as required. For example, the background color of the "security" option may be set to gray, light blue, light green, or the like. The electronic device displays an interface shown in FIG. 2D in response to an operation of tapping the "parallel space off" option by the user.

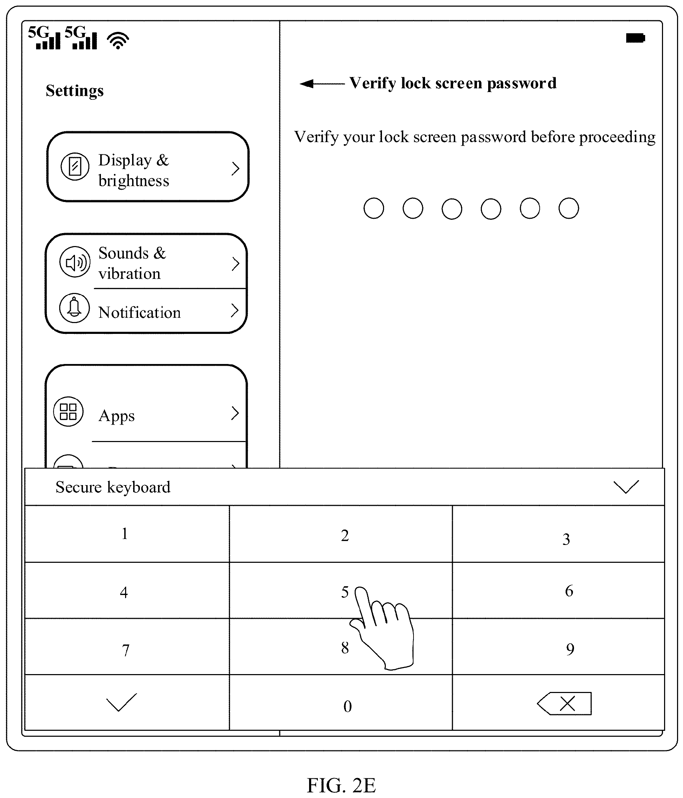

As shown in FIG. 2D, a first region of the display screen displays the settings interface shown in FIG. 2B, and a second region of the display screen displays an introduction to the parallel space and the option of creating the parallel space, as shown by the "enable" option in FIG. 2D. After the user understands the feature and the function of the parallel space, if the user wants to create a parallel space in the electronic device, the user may tap the "enable" option in FIG. 2D. The electronic device displays an interface shown in FIG. 2E in response to the operation of tapping the "enable" option by the user.

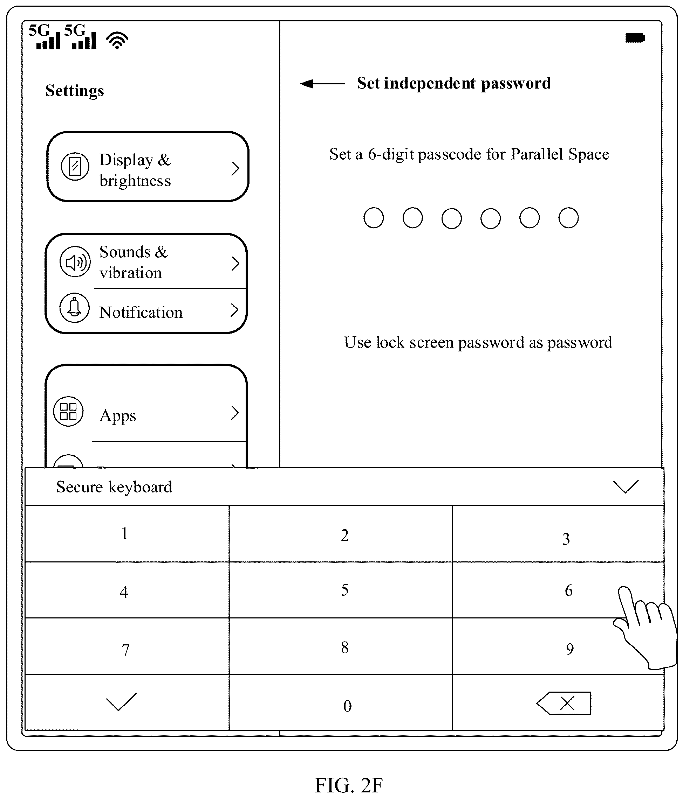

As shown in FIG. 2E, after the user taps the "enable" option, the display screen of the electronic device displays a prompt for verifying a lock screen password and a password entry keyboard. The user needs to input the lock screen password of the electronic device that has been set. The electronic device may continue to complete a parallel space creation operation when the lock screen password entered by the user is correct, thereby ensuring that a current operation of creating the parallel space is a person trusted by the user or the user, thereby improving security of the parallel space. If the electronic device determines that the lock screen password entered by the user is incorrect, the electronic device needs to prompt the user that "incorrect password is entered". The user may continue to enter the lock screen password. After a preset quantity of times of incorrectly entering the lock screen password by the user is reached, the electronic device automatically locks, so as to ensure security of the electronic device. In response to the operation of entering the correct lock screen password by the user, the electronic device displays an interface shown in FIG. 2F.

As shown in FIG. 2F, after the user enters the correct lock screen password, the display screen of the electronic device displays a prompt for setting a password. The user needs to enter an access password when the parallel space is enabled on this interface, so as to ensure use security of the parallel space. The access password for the parallel space set by the user may be the same as the lock screen password, or may be different from the lock screen password, which is not limited herein.

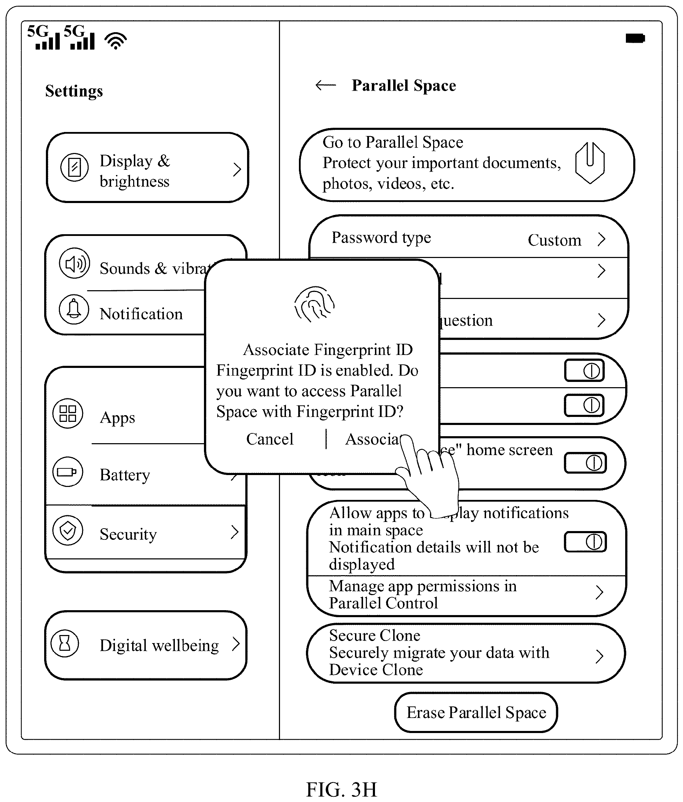

In daily use, a user often forgets a password. To enable the user to reset the password when the user forgets the password and ensure that the password is reset by the user or a person trusted by the user, the electronic device may further prompt the user to set a security question. The security question is used to reset the password when the user forgets the set password. Therefore, as shown in FIG. 3G, after the user enters the access password for the parallel space, the second region of the display screen of the electronic device displays a prompt for setting a security question. As an example, the security question may be set to "What is your father's name?", "What is your mother's name?", or the like. After the user completes setting of the security question and taps the setting completion option ("done" option in the interface), the electronic device displays the interface shown in FIG. 3H.

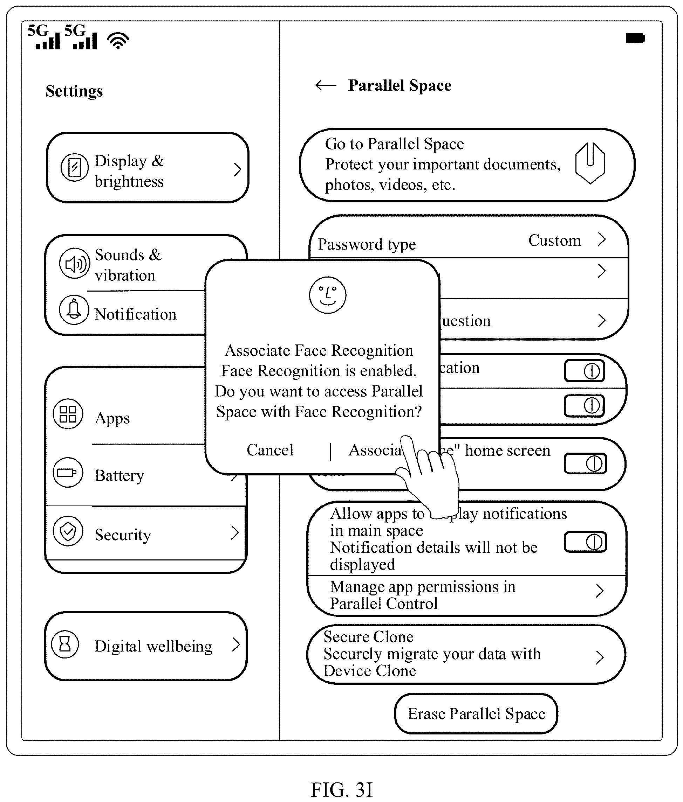

Referring to FIG. 3H, to facilitate fast and convenient access of the user to the parallel space, and to provide another manner for the user to enter the parallel space, the electronic device provides a manner of entering the parallel space by using a fingerprint. When creating a parallel space, the user may choose to associate a fingerprint. Specifically, as shown in FIG. 3H, an "associate fingerprint" (or set fingerprint) prompt appears on the displayed interface. The "associate fingerprint" prompt may be displayed on the interface in a form of a floating window. During fingerprint association, the user needs to press the set fingerprint in a fingerprint collection region ("fingerprint" icon), so that the electronic device collects the fingerprint. After the collection is completed, the user taps the "done" option ("associate" option in the interface) to complete the association. In addition, the user may also directly tap the "associate" option, and the electronic device may automatically associate a stored fingerprint (a fingerprint for entering the main system) with a verification fingerprint for entering the parallel space. Certainly, if the user does not want to use fingerprint verification to enter the parallel space, the user may also select the "cancel" option in the interface to cancel fingerprint association. The electronic device displays an interface shown in FIG. 3I in response to an operation of tapping the "associate" option or the "cancel" option in the interface by the user.

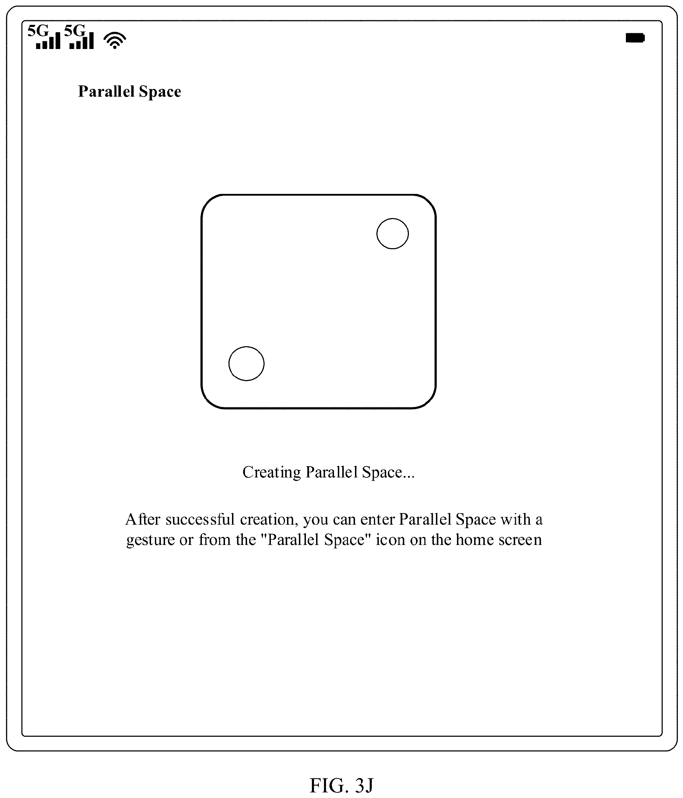

Referring to FIG. 3I, to facilitate fast and convenient access of the user to the parallel space, and to provide another manner for the user to enter the parallel space, the electronic device provides a manner of entering the parallel space by using face recognition. When creating a parallel space, the user may choose to associate a face. Specifically, as shown in FIG. 3I, an "associate face recognition" prompt may appear on the displayed interface. The "associate face recognition" prompt may be displayed on the interface in a form of a floating window. When associating face recognition, the user may tap a face collection region in the interface ("face" icon in the interface) to facilitate the electronic device to collect the face. After the collection is completed, the user may tap the "done" option ("associate" option in the interface) to complete the association. In addition, the user may also directly tap the "associate" option, and the electronic device may automatically associate a stored face with a verification face for entering the parallel space. Certainly, if the user does not want to use face recognition verification to enter the parallel space, the user may also select the "cancel" option in the interface, so as to cancel the face recognition association. The electronic device displays an interface shown in FIG. 3J in response to the operation of tapping the "associate" option or the "cancel" option in the interface by the user.

As shown in FIG. 3J, after face recognition association or association cancellation is performed, the electronic device creates a parallel space. In a process of creating the parallel space, the electronic device displays a prompt interface for creating the parallel space, so as to prompt the user that the parallel space is being created. A method for entering the parallel space may also be displayed in the prompt interface for creating the parallel space, so that after the parallel space is created, the user can find an entrance for the parallel space.

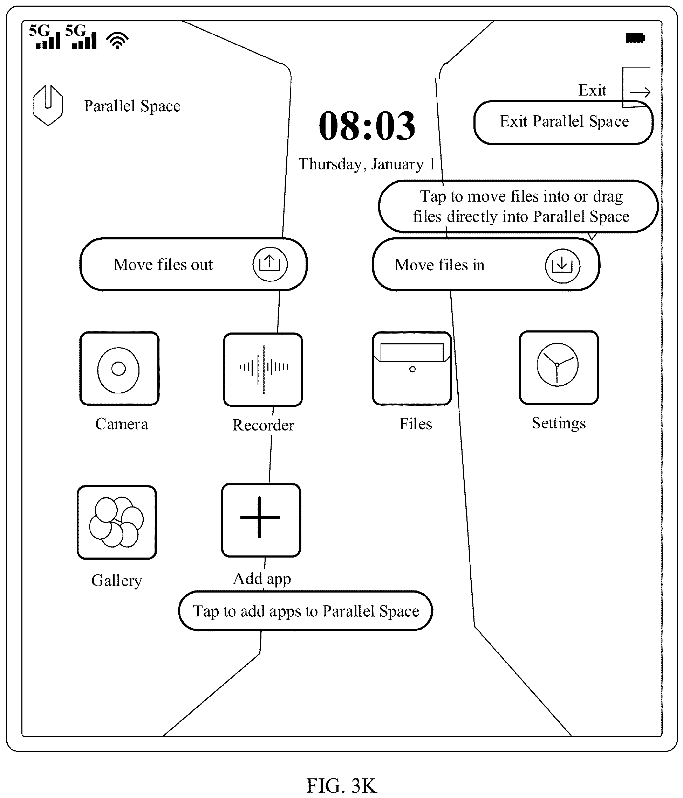

After the parallel space is created, to enable the user to quickly understand the method for using the parallel space, the display screen of the electronic device may display an operation guide of the parallel space. Refer to the operation guide interface shown in FIG. 3K. The operation guide interface may remind the user of a function of each icon. For example, an "exit" icon is a control for exiting the parallel space. Tapping the "exit" icon can exit the parallel space. An "add application" icon is used to add an application to the parallel space. Tapping the "add application" icon can add an application. A "move files in" icon (control or option) is used to enable a data move-in function of the parallel space to move data of the main system into the parallel space. A "remove files out" icon (control or option) is used to enable a data move-out function of the parallel space to move data in the parallel space into the main system.

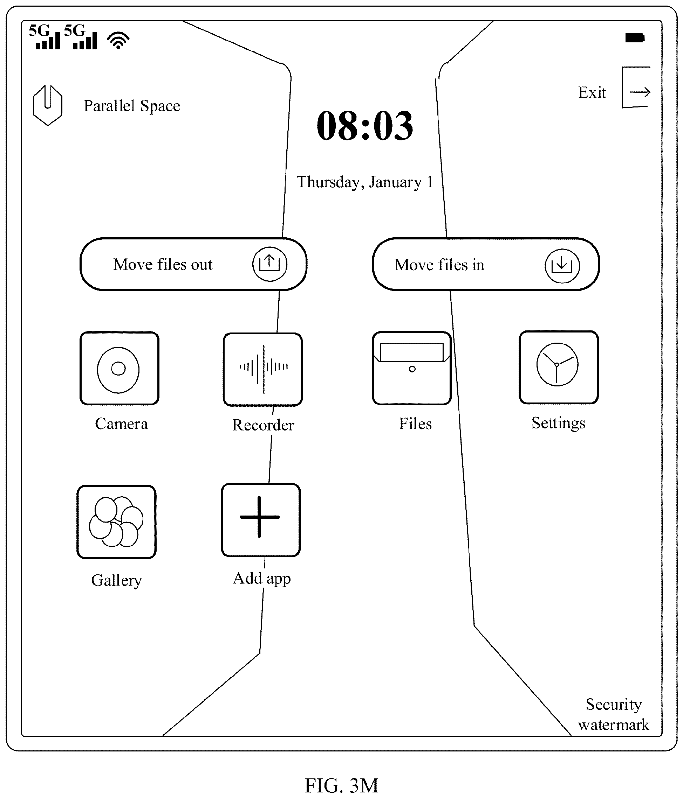

After the operation guide of the parallel space is displayed, the electronic device may directly enter the parallel space, and after entering the parallel space, the display screen of the electronic device displays an application home screen of the parallel space. Refer to FIG. 3M, which shows the application home screen of the parallel space. An icon of an application installed in the parallel space, a time, and the like may exist in the application home screen of the parallel space. In addition, there are "move files out", "move files in", "exit", and "add application" icons in the application home screen of the parallel space. A layout of the application home screen of the parallel space may be in a form of 4×6, 5×5, or 5×6, and may be set according to a requirement. In this application, the layout of the application home screen of the parallel space is displayed in a form of 4×6. After the parallel space is created, 5, 6, or 8 installed applications may exist in the parallel space by default, and the installation is set as required.

In actual application, after the electronic device completes creation of the parallel space, the electronic device may further directly display the system home screen of the main system including the icon of the "parallel space" (that is, the application icon corresponding to the "parallel space" application is displayed on the system home screen of the main system). The icon of the "parallel space" is used to enable the parallel space. For example, the application icon of the "parallel space" may be added to the interface shown in FIG. 2A.

It should be noted that the display screens in FIG. 2C to FIG. 2F and FIG. 3G to FIG. 3I may not perform display in a split-screen manner, and only display content in the second region, but do not display content in the first region. The display screens in FIG. 2C to FIG. 2F and FIG. 3G to FIG. 3I may further display a settings interface in a right region.

The foregoing process of creating the parallel space in FIG. 2A to FIG. 2F and FIG. 3G to FIG. 3M is only an example. In actual application, sequences of steps in FIG. 2A to FIG. 2F and FIG. 3G to FIG. 3M may be exchanged, and the steps may be randomly combined to form a new example of creating the parallel space. For example, after the user taps the "settings" icon in FIG. 2A, the interface shown in the right region in FIG. 2C may be directly displayed. After the interface shown in FIG. 2D is displayed, if the user taps the "enable" option, the electronic device starts to create a parallel space, and correspondingly directly displays the interface shown in FIG. 3J. In another scenario, the icon of the "parallel space is off' in the right region in FIG. 2C may be further disposed in the interface shown in FIG. 2B. After the user taps the "settings" icon in FIG. 2A, the icon of the "parallel space is off' may be directly displayed. After the user taps the icon of the "parallel space is off', the display screen of the electronic device displays the interface shown in the right region in FIG. 2D. After the user taps the "enable" option in FIG. 2D, the electronic device starts to create a parallel space. After the parallel space is created, the electronic device displays the interface shown in FIG. 3M, that is, the electronic device may create the parallel space by using more or fewer steps than the foregoing example.

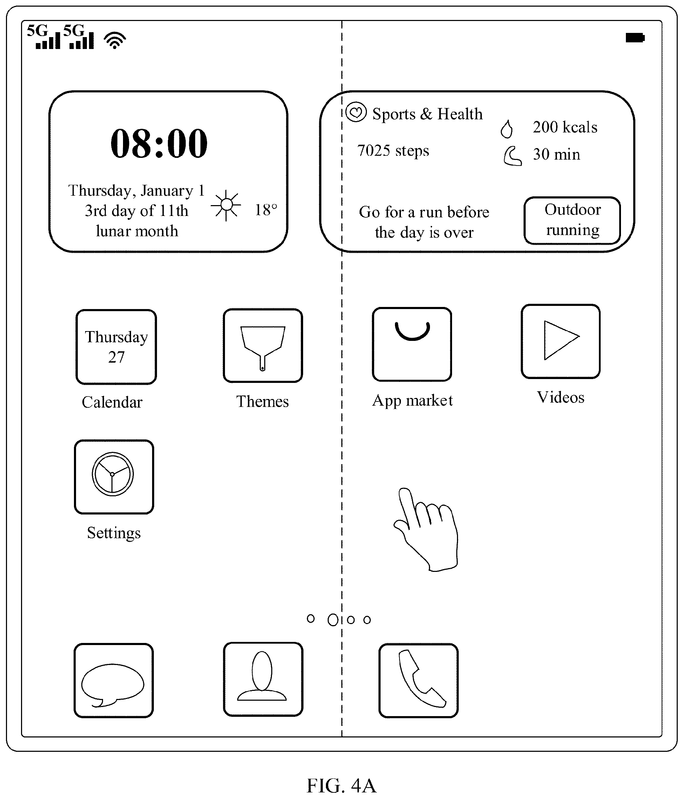

In another implementation, in addition to creating the parallel space by tapping the "settings" icon on the system home screen of the main system in FIG. 2A to FIG. 2F and FIG. 3G to FIG. 3M, this application further provides another method for creating a parallel space by using a gesture. For details, refer to FIG. 4A to FIG. 4C for description.

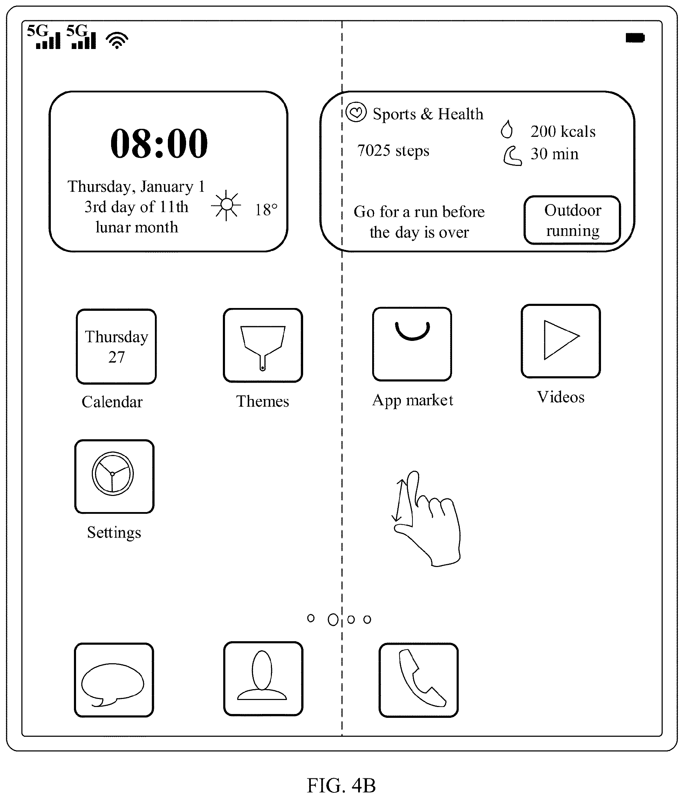

The electronic device displays any system home screen of the main system. A parallel space is created on the displayed system home screen of the main system by using a gesture, and a gesture for creating a parallel space may be set according to a requirement. For example, the gesture for creating a parallel space may be set to a "zoom-in gesture", a "slide upward gesture", a "slide downward gesture", or the like. As an example, as shown in FIG. 4A, the user places two fingers on the system home screen, so that two contact points are formed on the system home screen. In a case in which the two fingers are not lifted, the two fingers spread apart, so that a distance between the two fingers increases, as shown in FIG. 4B. After detecting the gesture for creating a parallel space, the electronic device starts to create a parallel space. After a parallel space is created, the electronic device may directly display an application home screen of the parallel space. As shown in the interface in FIG. 3M, the icon of the "parallel space" may be directly displayed on the system home screen of the main system.

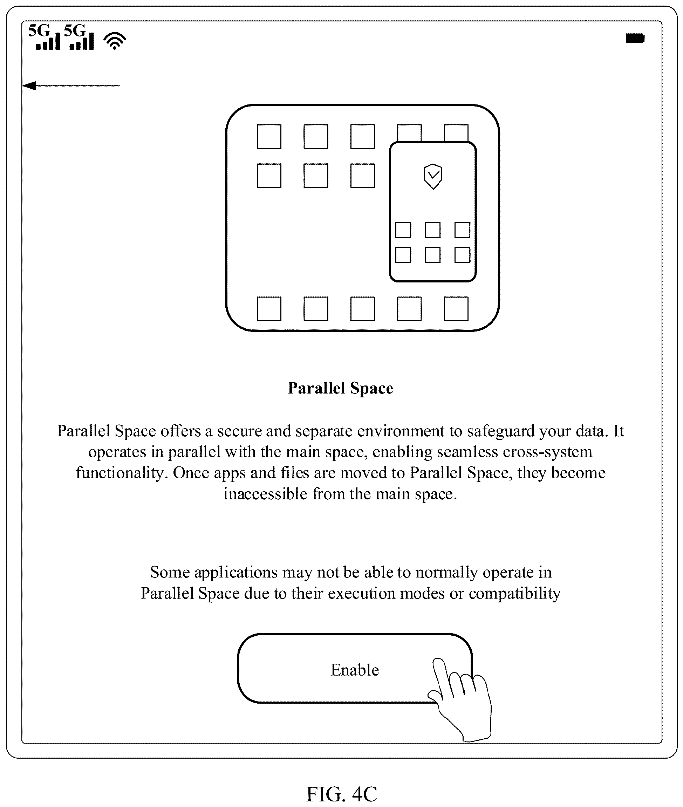

As an example, in a case in which no parallel space is created, after the electronic device detects the gesture for creating a parallel space, the display screen of the electronic device may further display a creation interface of a parallel space. As shown in FIG. 4C, after the user taps the "enable" option in the creation interface, the electronic device starts to create a parallel space.

As an example, after the user taps the "enable" option in the creation interface, the display screen of the electronic device displays content of a numeric keyboard in the second region in FIG. 2E, so as to prompt the user to enter a lock screen password. After the user enters a correct lock screen password, the electronic device successively displays the content of the second region in the interfaces in FIG. 2F to FIG. 3I. After completing corresponding operations, the electronic device successively displays the interfaces in FIG. 3J to FIG. 3M, so as to complete creation of a parallel space. Specifically, for user operations corresponding to the interfaces in FIG. 2F to FIG. 3M, refer to the foregoing process of creating a parallel space by using the settings in the main system. Details are not described herein again.

The foregoing process of creating a parallel space by using a gesture is only an example. In actual application, steps may be randomly combined and deleted according to a requirement.

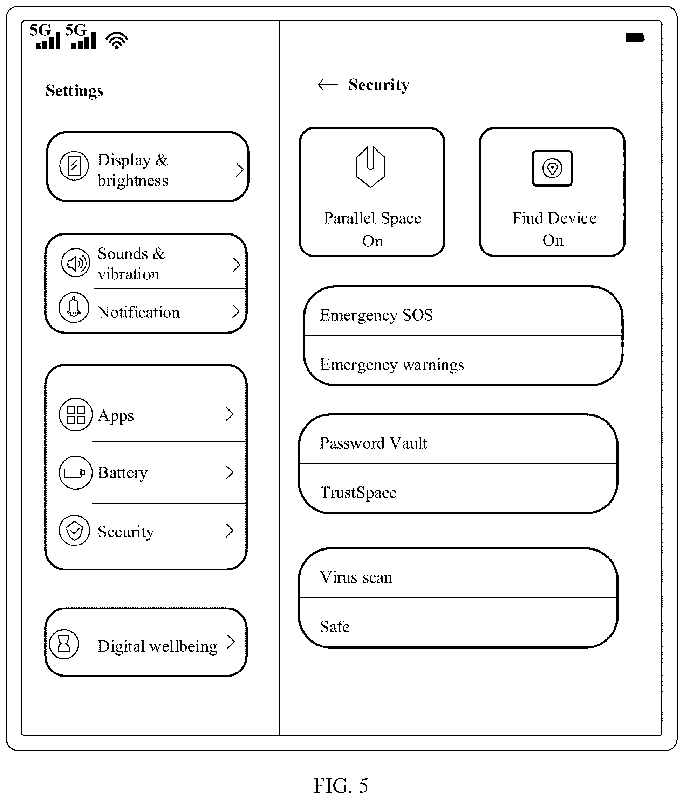

In an embodiment, after a parallel space is created by using a gesture or the settings of the main system, in the security option of the settings function of the main system, a parallel space creation button displays a prompt that a parallel space has been created. For example, an icon of the "parallel space" in the interface changes from "off" to "on", as shown in FIG. 5.

In another embodiment, after a parallel space is created by using a gesture or the settings of the main system, an icon of the "parallel space on" shown in FIG. 5 may be hidden, and is not displayed in the interface of the "security" option.

After creating the parallel space, the user may enable the parallel space to experience functions of the parallel space. Therefore, this application further provides a method for entering (enabling) a parallel space.

In an example, after a parallel space is created, the system home screen of the main system displays an icon of the "parallel space" application. The following shows, by using an example, a method for entering a parallel space by using an icon of the "parallel space" application on the system home screen of the main system.

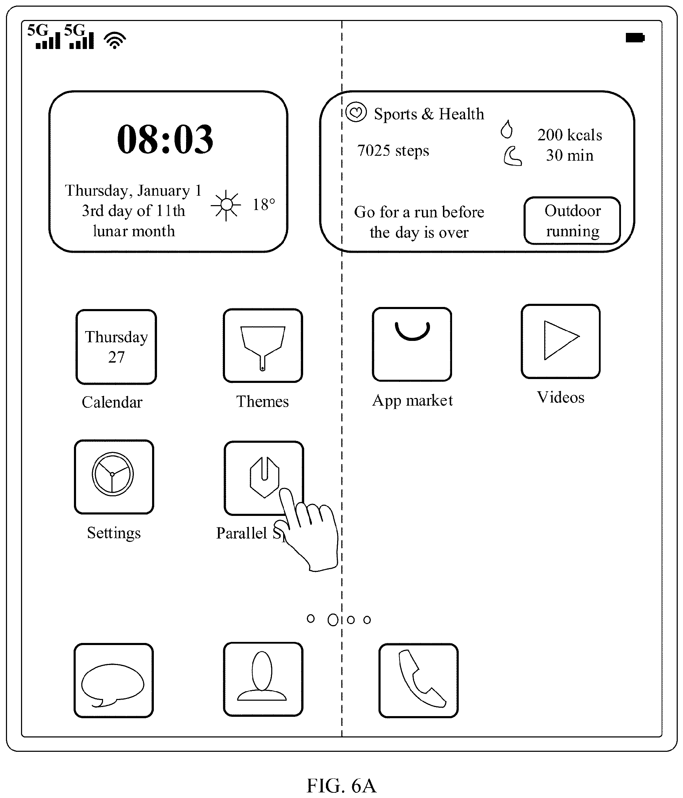

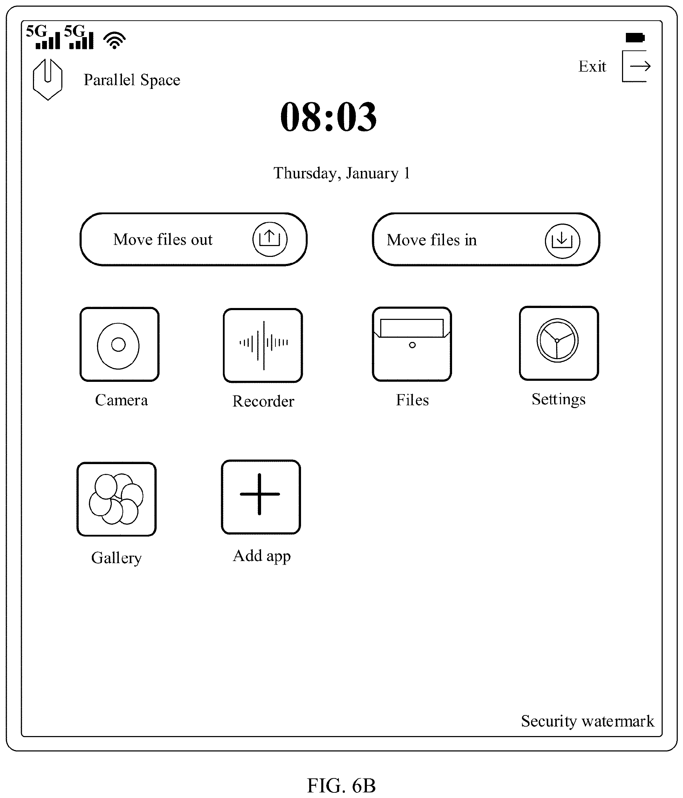

In an embodiment, as shown in FIG. 6A, the display screen of the electronic device displays the system home screen of the main system, and the icon of the "parallel space" application exists in the system home screen. When the user needs to open the parallel space or enter the parallel space, the user can tap the "parallel space" icon. In response to the operation of tapping the "parallel space" icon in the system home screen of the main system by the user, if the user does not enable password, fingerprint, and face recognition verification functions of entering the parallel space, the electronic device directly enters the parallel space, and the display screen of the electronic device displays the application home screen of the parallel space shown in FIG. 6B.

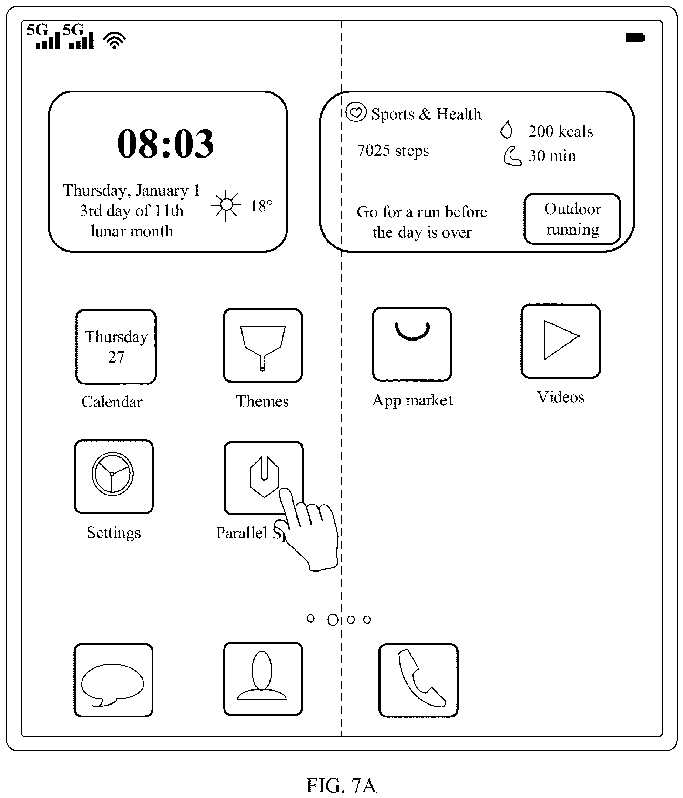

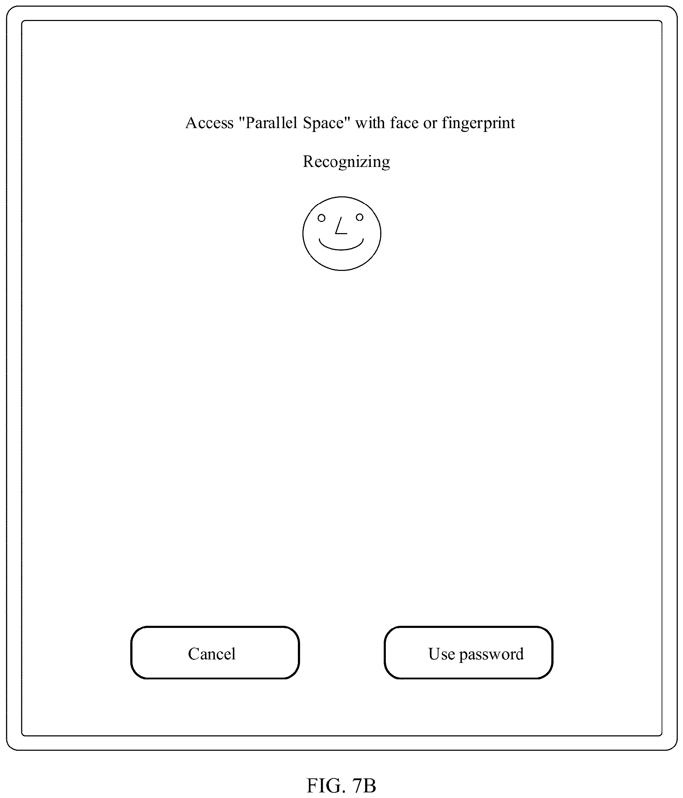

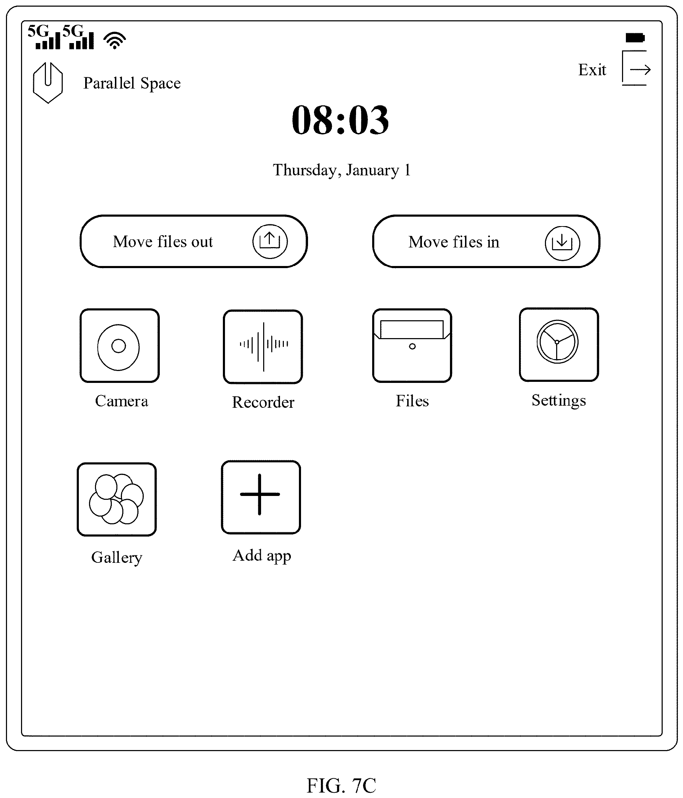

In another embodiment, as shown in FIG. 7A, the display screen of the electronic device displays the system home screen of the main system, and the icon of the "parallel space" application exists in the home screen. When the user needs to open the parallel space or enter the parallel space, the user needs to tap the icon of the "parallel space" application. In response to the operation of tapping the icon of the "parallel space" application in the system home screen of the main system by the user, if the user enables the face recognition or fingerprint verification function, the electronic device performs face recognition or fingerprint recognition, and displays a verification interface shown in FIG. 7B in the verification process, so as to prompt the user that the electronic device is performing face recognition or fingerprint verification. Certainly, if password verification is set by the user, in the verification interface shown in FIG. 7B, the user may further enter the password by tapping the option "use password", so that the electronic device performs password verification. After the electronic device determines that the identity of the user is valid, the electronic device enters the parallel space. The display screen of the electronic device displays the application home screen in the parallel space shown in FIG. 7C. If the user wants to stop the operation of entering the parallel space, the user may tap the "cancel" option in FIG. 7B.

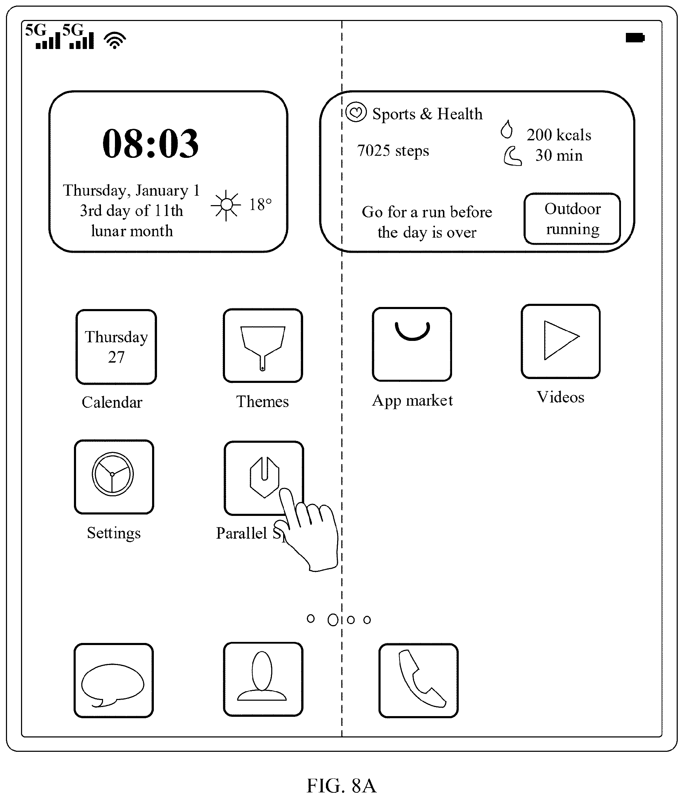

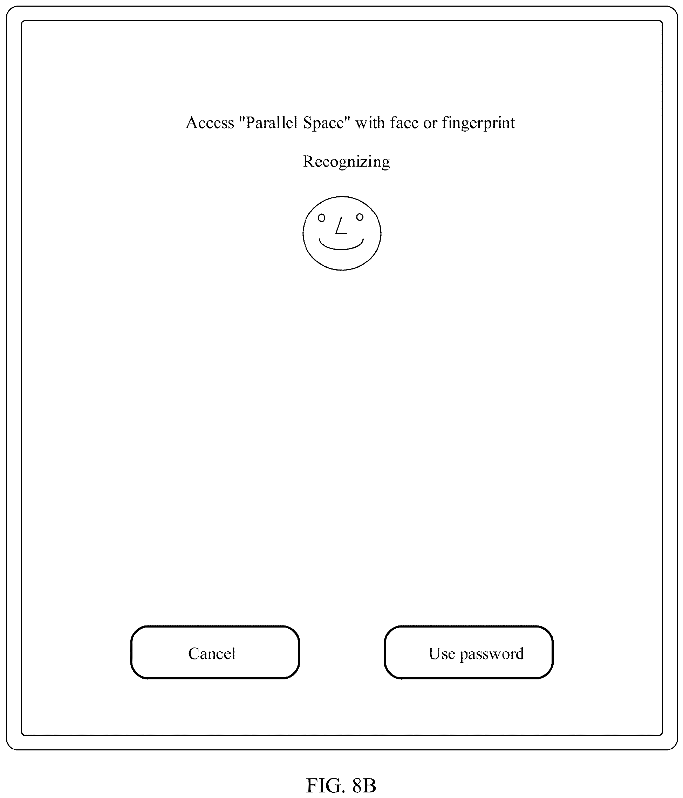

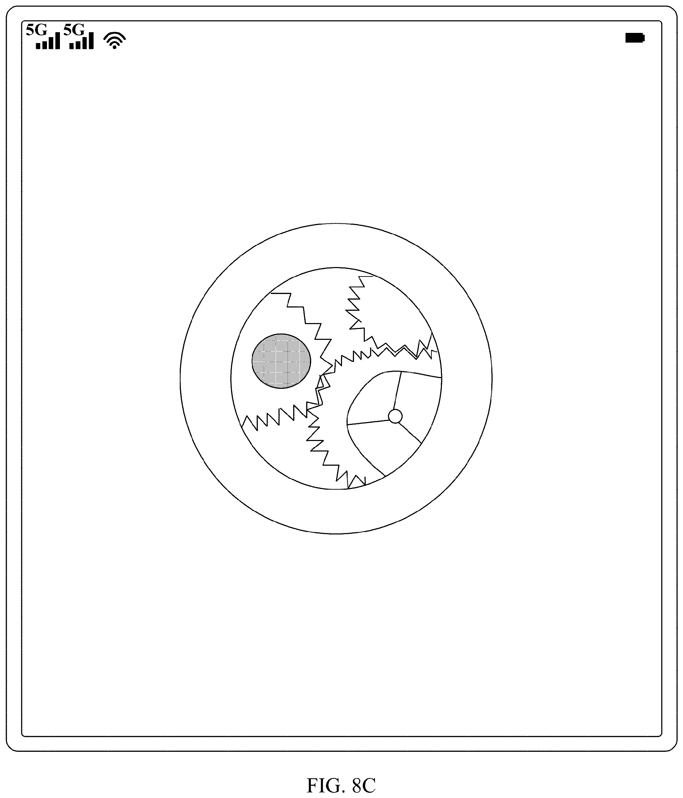

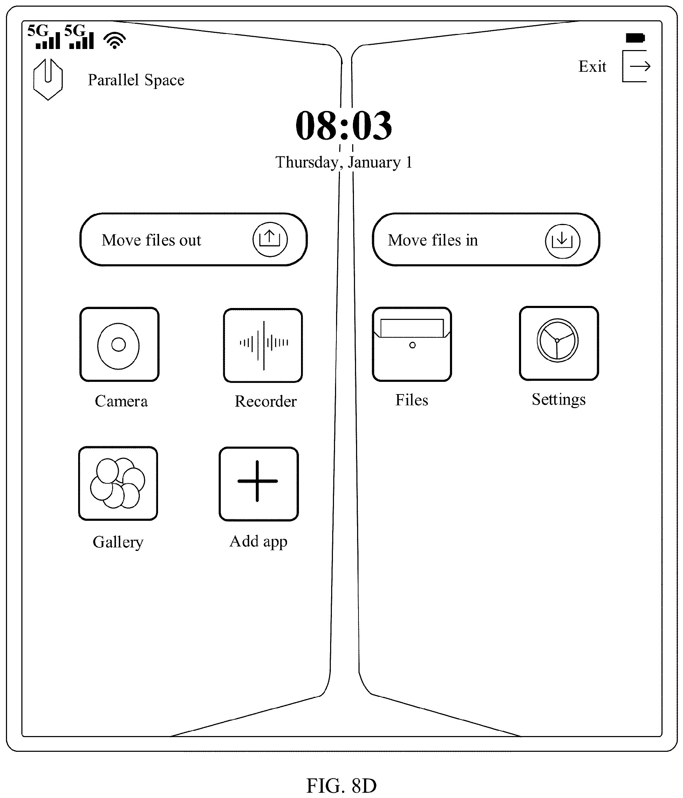

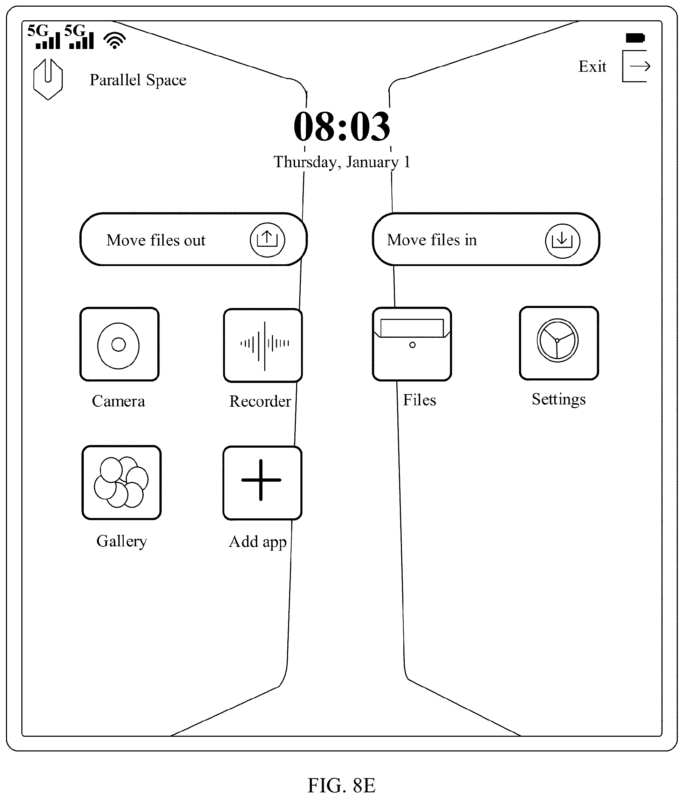

In another embodiment, as shown in FIG. 8A, the display screen of the electronic device displays the system home screen of the main system, and the icon of the "parallel space" exists in the system home screen. In response to the operation of tapping the "parallel space" icon in the system home screen of the main system by the user, the electronic device displays a verification interface shown in FIG. 8B, so as to perform face recognition or fingerprint verification. After the electronic device successfully performs face recognition or fingerprint verification, the electronic device performs animation display of enabling the parallel space. For example, the display screen of the electronic device displays an interface shown in FIG. 8C. There is a gear in the interface shown in FIG. 8C. After the gear rotates for a preset time, the electronic device displays an "open door animation effect". The "door" in the application home screen of the parallel space shown in FIG. 8D changes from a closed state to an open state shown in FIG. 8E. After the animation display ends, the electronic device enters the parallel space. The display screen of the electronic device displays the application home screen of the parallel space shown in FIG. 8E, and an opened-door diagram exists in the application home screen of the parallel space.

In actual application, the animation display may include a gear animation effect and/or an open door animation effect. For ease of description, the following examples are described by using an example in which animation display is set when a parallel space is entered.

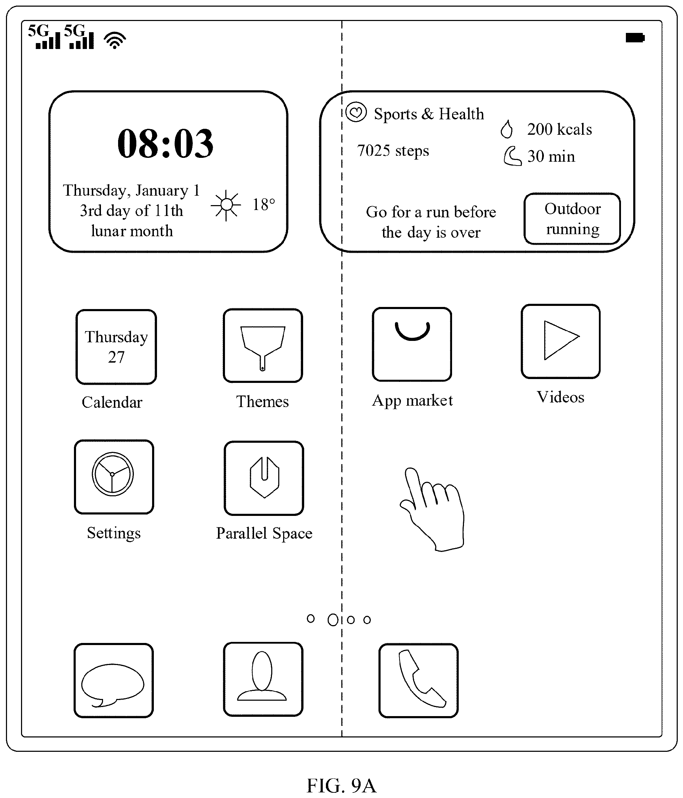

To enable the user to enter a parallel space more quickly and conveniently, this application further provides a method for entering a parallel space by using a gesture. The following shows, by using the example shown in FIG. 9A to FIG. 9F, the method for entering a parallel space by using a gesture.

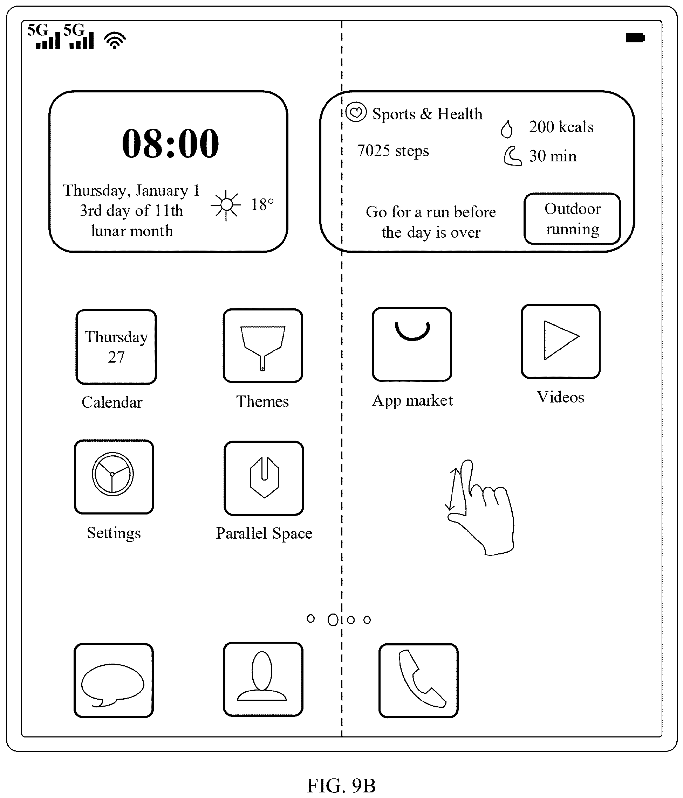

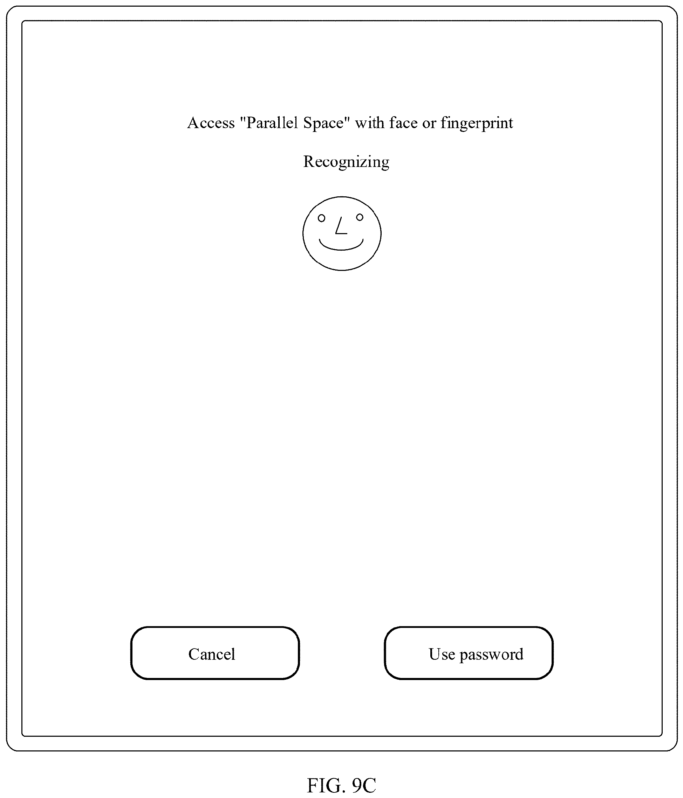

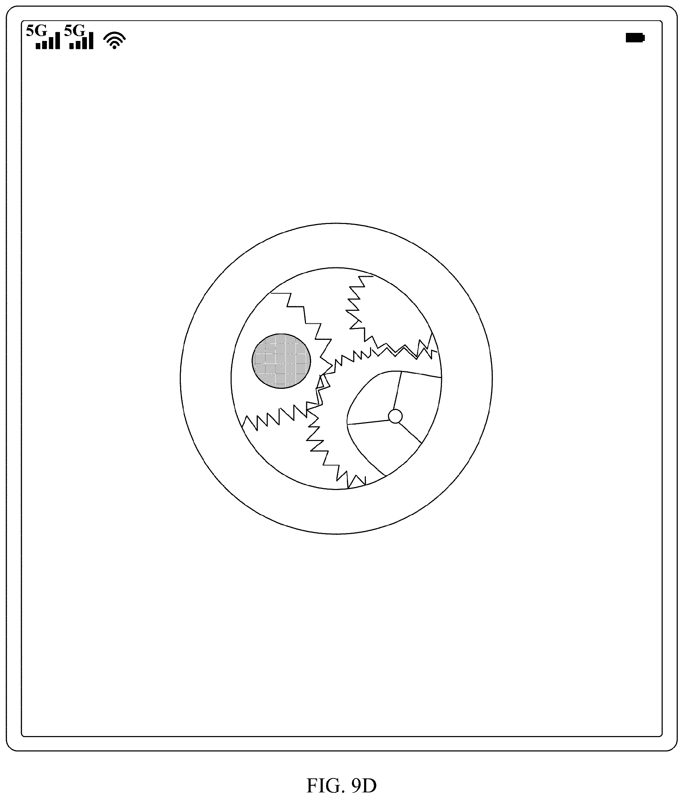

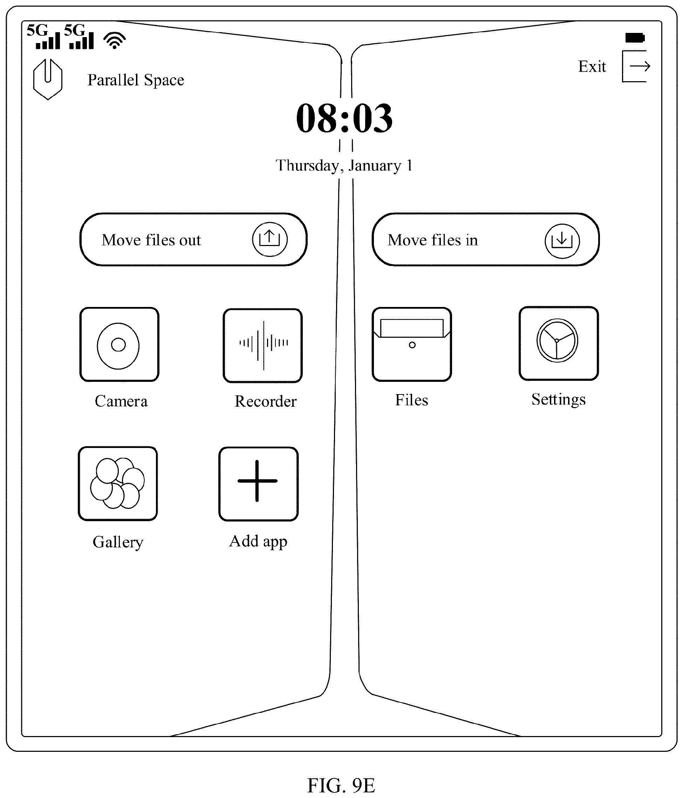

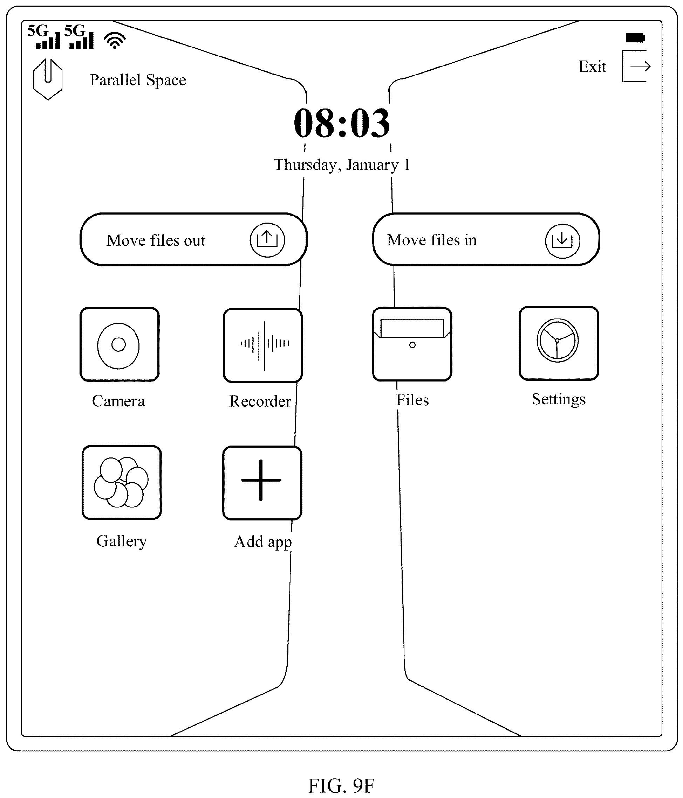

As shown in FIG. 9A, the display screen of the electronic device displays any system home screen of the main system, and the user may enter a parallel space by using a gesture on the displayed system home screen of the main system. The gesture for entering a parallel space may be set according to a requirement. For example, the gesture for entering a parallel space may be set to a "slide upward gesture" or a "zoom-in gesture". The gesture for entering a parallel space may be the same as or may be different from a gesture for creating a parallel space. As an example, as shown in FIG. 9A, a thumb and an index finger are placed on the system home screen of the main system, so as to form two contact points on the display screen. In a case in which the two fingers are not lifted, the two fingers spread apart, so that a distance between the two fingers increases, as shown in FIG. 9B. In response to the electronic device detecting the gesture for entering a parallel space, the electronic device performs face recognition or fingerprint verification, so as to ensure secure enabling of the parallel space. Specifically, when face recognition or fingerprint verification is performed, the display screen of the electronic device may display an interface of FIG. 9C. After the electronic device succeeds in face recognition or fingerprint verification, the electronic device performs animation display of enabling the parallel space, as shown in FIG. 9D, FIG. 9E, and FIG. 9F. For FIG. 9D, FIG. 9E, and FIG. 9F, refer to descriptions in FIG. 8A to FIG. 8E. Details are not described herein again. After the animation display ends, the electronic device enables the parallel space, and displays the application home screen of the parallel space, as shown in FIG. 9F.

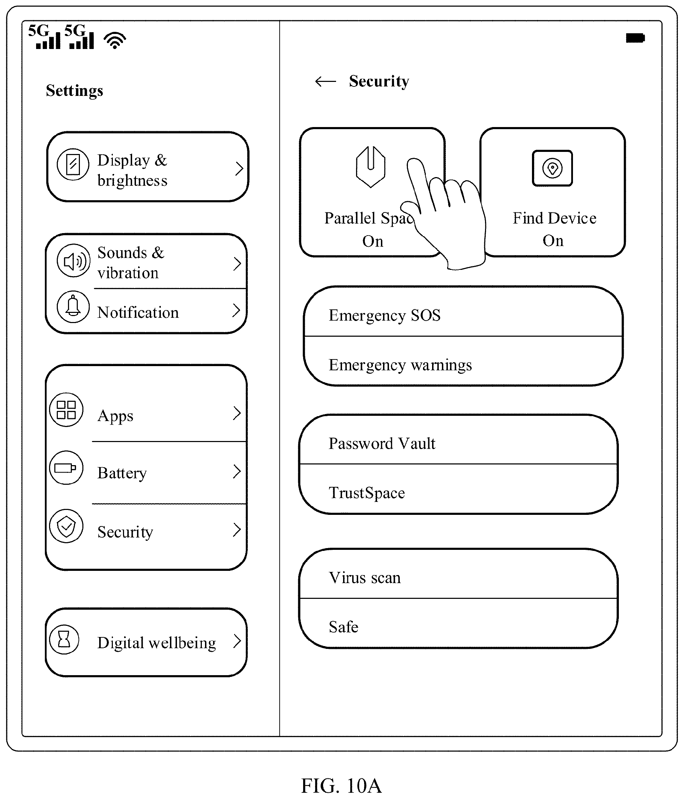

To meet requirements of different users and to provide a plurality of methods for entering a parallel space for the users, this application further provides a method for entering a parallel space by using a settings application of the main system. The following shows, by using an example shown in FIG. 10A to FIG. 10F, a method for entering a parallel space by using the settings of the main system.

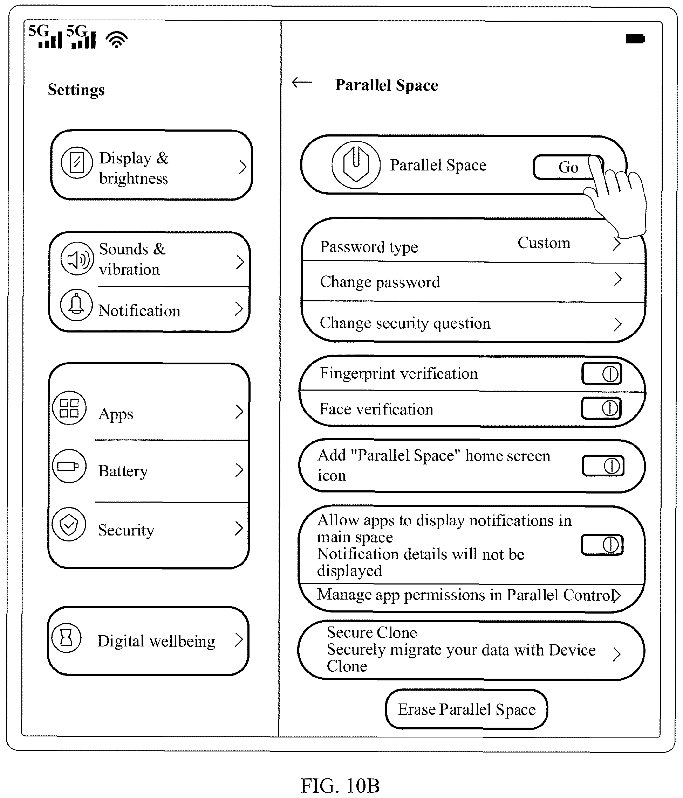

The settings interface corresponding to the settings is entered by using the "settings" icon on the system home screen of the electronic device, and the settings interface displays the "security" option, as shown in FIG. 2B. The user taps the "security" option, and in response to the operation of tapping the "security" option by the user, the display screen of the electronic device displays each function item in the "security" option, and an icon (option) of "parallel space on" exists in the "security" option. For example, as shown in FIG. 10A, each option in the settings is displayed on the left side of the display screen, and each item in the "security" option is displayed on the right side of the display screen. After a parallel space is created, the icon of the parallel space in the security option displays "on". In this case, the icon of "parallel space on" may be tapped to enter the parallel space. In response to the operation of tapping the icon of "parallel space on" shown in FIG. 10A by the user, the display screen of the electronic device displays settings items that can be set in the parallel space, as shown in FIG. 10B.

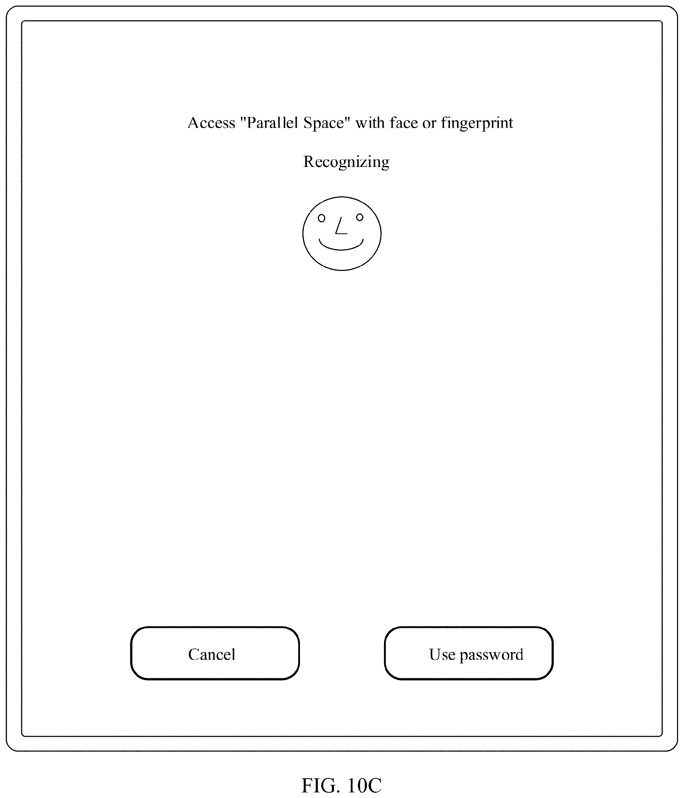

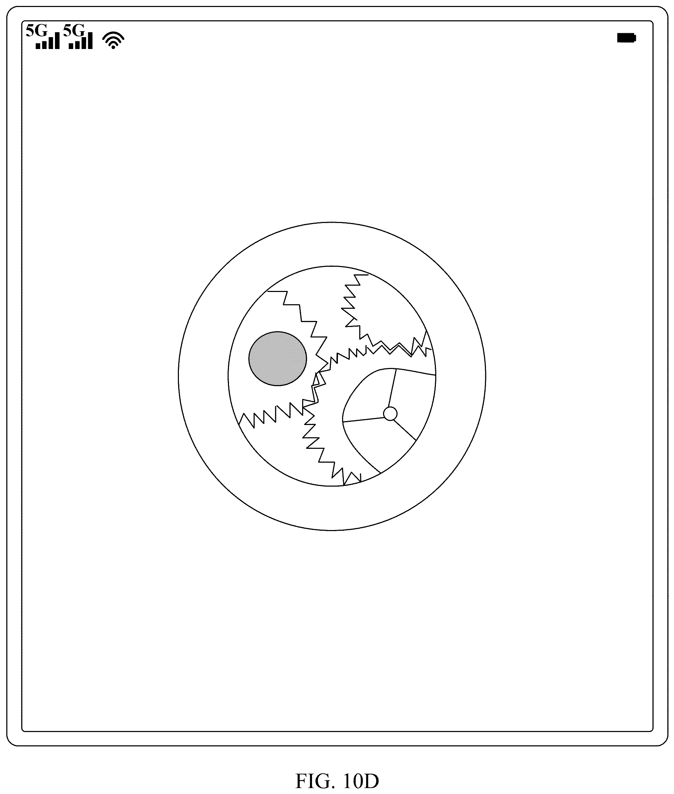

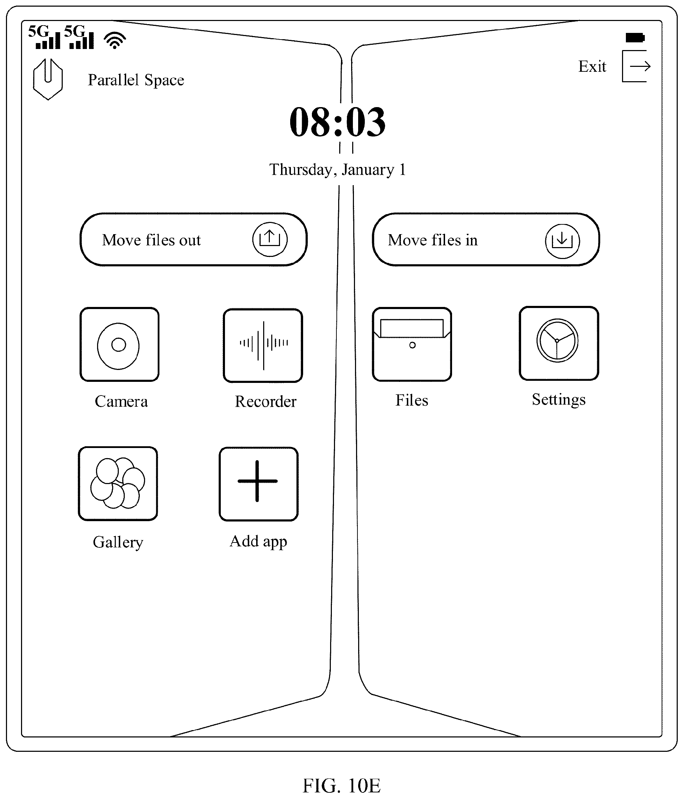

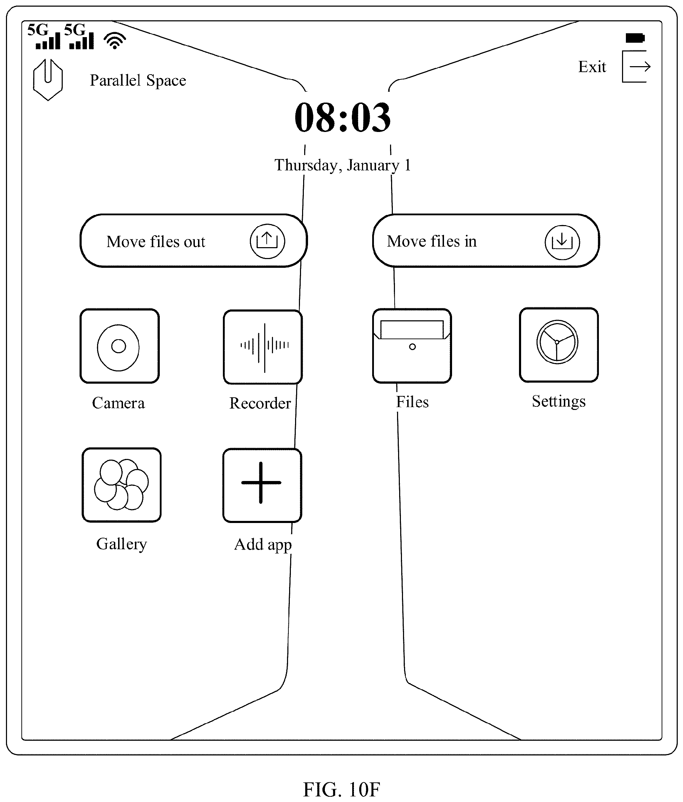

As shown in FIG. 10B, the setting items of the parallel space include an entrance for the parallel space, a password type of the parallel space, password change of the parallel space, fingerprint authentication enabled or not for the parallel space, face authentication enabled or not for the parallel space, password protection question change for the parallel space, add the home screen icon or not for the parallel space, display the notification of the parallel space in the main space or not, and secure clone. The entrance for the parallel space is used to enter the parallel space. When the user needs to enter the parallel space, the icon of the "entrance for the parallel space" may be tapped. In response to the operation of tapping the icon of the "entrance for the parallel space" by the user, the electronic device performs face recognition or fingerprint verification, and displays an interface shown in FIG. 10C when face recognition or fingerprint verification is performed. After the electronic device succeeds in face recognition or fingerprint verification, the electronic device performs animation display of enabling the parallel space, as shown in FIG. 10D, FIG. 10E, and FIG. 10F. For descriptions of FIG. 10D, FIG. 10E, and FIG. 10F, refer to descriptions in FIG. 8A to FIG. 8E. Details are not described herein again. After the animation display ends, the electronic device enables the parallel space, and displays the application home screen of the parallel space, as shown in FIG. 10F. Certainly, if the user does not set face recognition or fingerprint recognition, the electronic device does not need to verify the identity of the user, and does not display the interface FIG. 10C.

In an actual application process, the method for entering a parallel space from the "settings" application may be any combination of interfaces (both interfaces for split-screen display on the display screen may be each considered as one interface) according to the interfaces in FIG. 2A, FIG. 2B, and FIG. 10A to FIG. 10F, so as to form a new method for entering a parallel space from the settings application. In addition, the icons and controls in the "settings" application may be recombined, sorted, and displayed as required.

For example, in a scenario, the icon of the "entrance for the parallel space" in FIG. 10B may be alternatively set on the interface shown in FIG. 2B. After the user taps the "settings" icon in FIG. 2A, the icon of the "entrance for the parallel space" in FIG. 10B may directly appear on the display interface of the electronic device. After the user taps the icon of the "entrance for the parallel space", the electronic device starts to perform user identity verification, and after determining that the identity of the user is valid, the electronic device displays the interface shown in FIG. 10F. In a scenario, the icon of the "entrance for the parallel space" in FIG. 10B may alternatively be set in an interface shown in the right region in FIG. 10A. Specifically, an interface on which each icon (control) is located may be set as required.

It should be noted that if the user does not enable face recognition and fingerprint verification, but enables password verification, FIG. 7B, FIG. 8B, FIG. 9C, and FIG. 10C may be replaced with a fingerprint input interface.

As such, the foregoing three methods for entering a parallel space provided in this application are described. The user may enter the parallel space by using any one of the foregoing three methods, so that manners in which the user enters the parallel space are more diversified, and requirements of different users are met.

In addition, when the display screen of the electronic device displays the interface of the parallel space, display may be further performed in a form of a split-screen or a floating window, which is not limited herein.

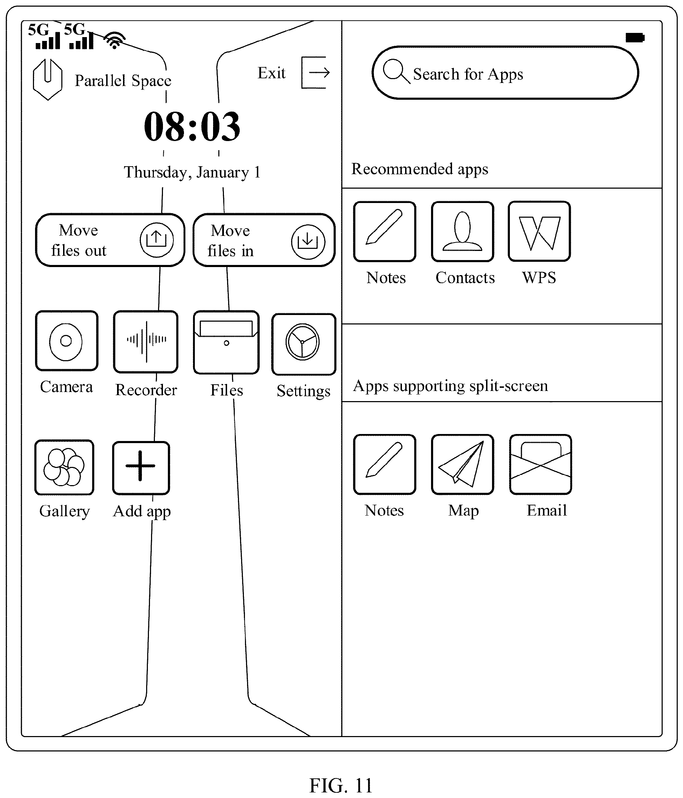

For example, after the electronic device enters the parallel space, the display screen of the electronic device may perform split-screen display. A part of the display screen displays the application home screen of the parallel space, another part of the display screen displays other content, and the other content may be the interface of the main system, for example, an interface of an icon of an installed application or an interface of an application of the main system that is being opened by the user. As an example, as shown in FIG. 11, the left part of the display screen of the electronic device displays the application home screen of the parallel space, and the right part of the display screen of the electronic device displays an icon of an application (a recommended application) installed in the main system and an icon of an application that supports screen splitting.

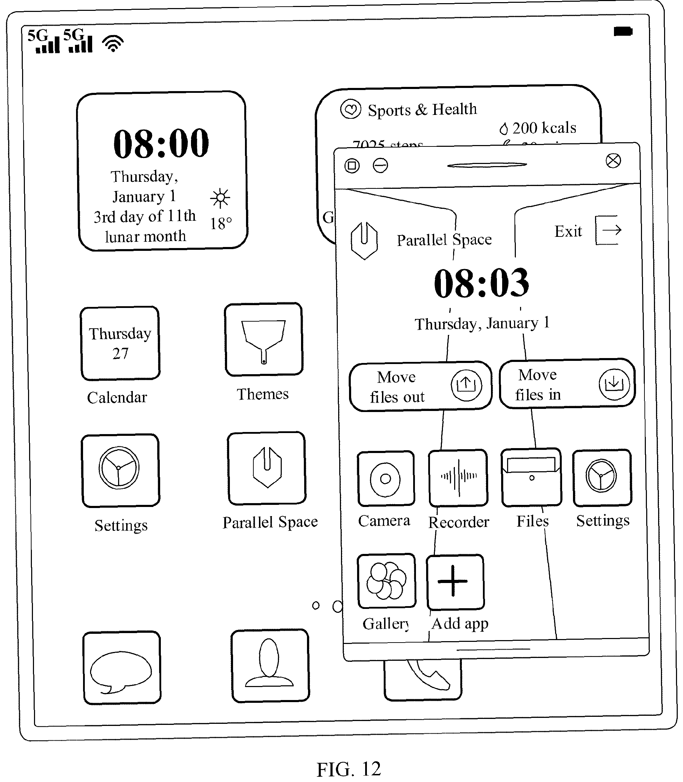

For another example, after the electronic device enters the parallel space, the display screen of the electronic device may further continue to display the system home screen of the main system, and display the interface of the parallel space on the system home screen of the main system in a form of a floating window. As shown in FIG. 12, the display screen displays the system home screen of the main system, and the application home screen of the parallel space is displayed in a form of a floating window. A position of the floating window may be adjusted as required.

It should be noted that, when the display screen performs split-screen display, left-right screen splitting may be performed as shown in FIG. 11, or up-down screen splitting may be performed, which is not limited herein.

In actual use, after entering the parallel space, if the user wants to return to the main system to check the content in the main system without exiting the parallel space, for example, if the user wants to check whether there is a new message in a communication application in the main system, the user needs to return to the main system to check. In a case in which the user does not exit the parallel space, the user may return to the main system by using the following operation, so that the display screen of the electronic device displays the system home screen of the main system, and in this case, the parallel space may return to the background to continue running.

Method 1: When displaying an interface in the parallel space (application home screen or an interface of any application in the parallel space, for example, an interface of WeChat in the parallel space), the electronic device returns to the main system by using a preset gesture. After detecting the preset gesture, the electronic device displays the system home screen of the main system, and the parallel space runs in the background. For example, the user slides from the bottom of the display screen of the electronic device to the top of the display screen (slide upward gesture) by using a finger until the finger position exceeds the midline of the display screen, and then lifts up. After detecting the slide upward gesture, the electronic device returns to the system home screen of the main system.

Alternatively, when the electronic device displays the application interface of the parallel space, the user slides from the left side of the display screen of the electronic device to the right side of the display screen by using a finger (slide rightward gesture). After detecting the slide rightward gesture, the electronic device returns to the home screen of the main system. Alternatively, the user slides from the right side of the display screen of the electronic device to the left side of the display screen (slide leftward gesture) by using a finger. After detecting the slide leftward gesture, the electronic device returns to the home screen of the main system.

Method 2: When the electronic device displays the interface in the parallel space, after the user presses the "lock screen" key, the electronic device locks the screen, and after the electronic device recovers from the lock screen state to an unlock state, the display screen of the electronic device displays the home screen of the main system. For example, in a process of using the parallel space, after the user presses the lock screen key, the electronic device enters the lock screen state, and after the user unlocks the electronic device, the electronic device displays the home screen of the main system.

After the electronic device returns to the interface of the main system from the interface of the parallel space, if the user wants to enter the parallel space again, the user needs to perform an operation according to the foregoing method for entering the parallel space. For example, the user enters the parallel space again according to the operation for entering the parallel space in FIG. 8A to FIG. 8E.

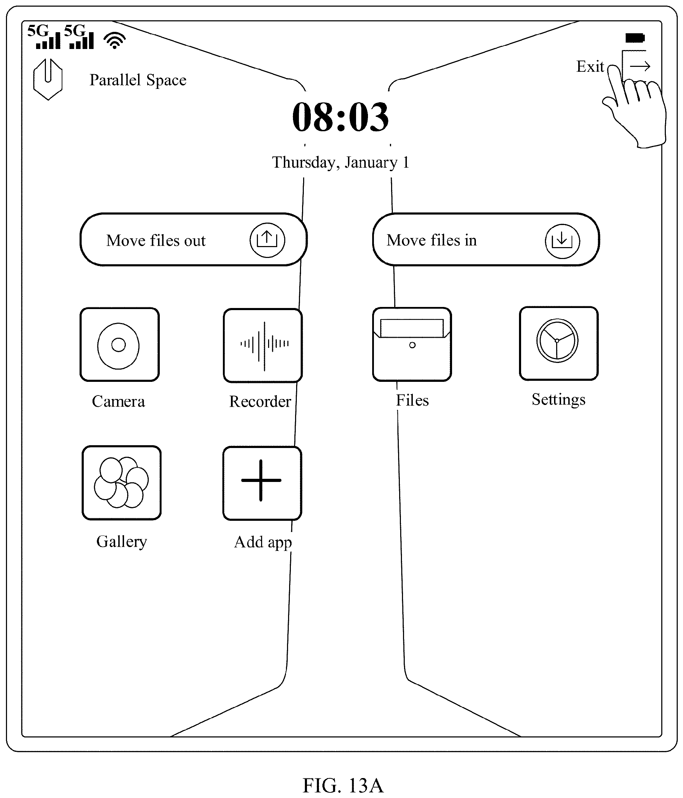

In actual application, if the user wants to exit the parallel space, the user needs to tap the exit control on the application home screen of the parallel space. Exiting the parallel space means closing the parallel space, and stop using the parallel space. After the parallel space is exited, the parallel space will not continue to run in the background. Specifically, referring to FIG. 13A to FIG. 13D, this application provides a method for exiting a parallel space.

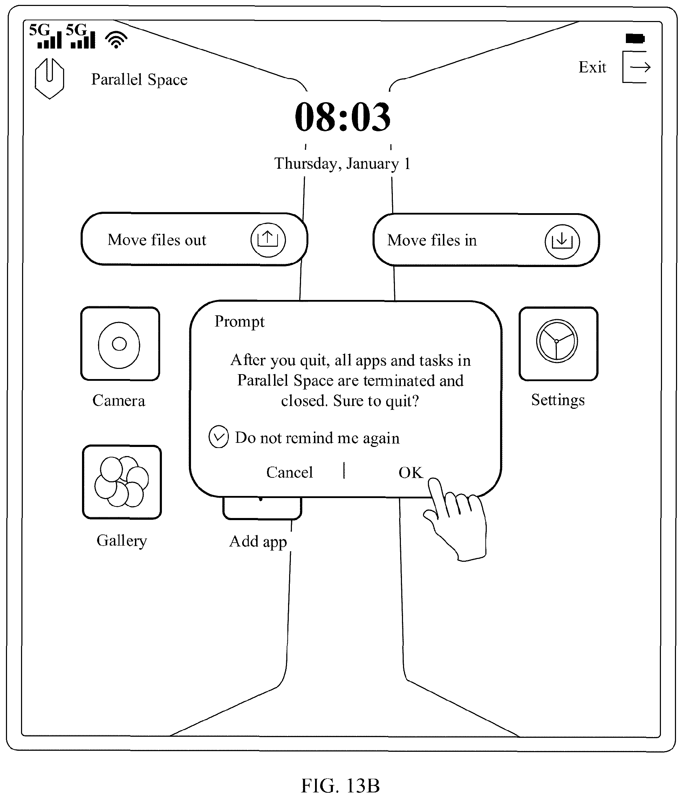

Referring to FIG. 13A, the display screen of the electronic device displays the application home screen of the parallel space, and the display screen of the electronic device displays an interface of FIG. 13B in response to an operation of tapping the "exit" control (button) by the user.

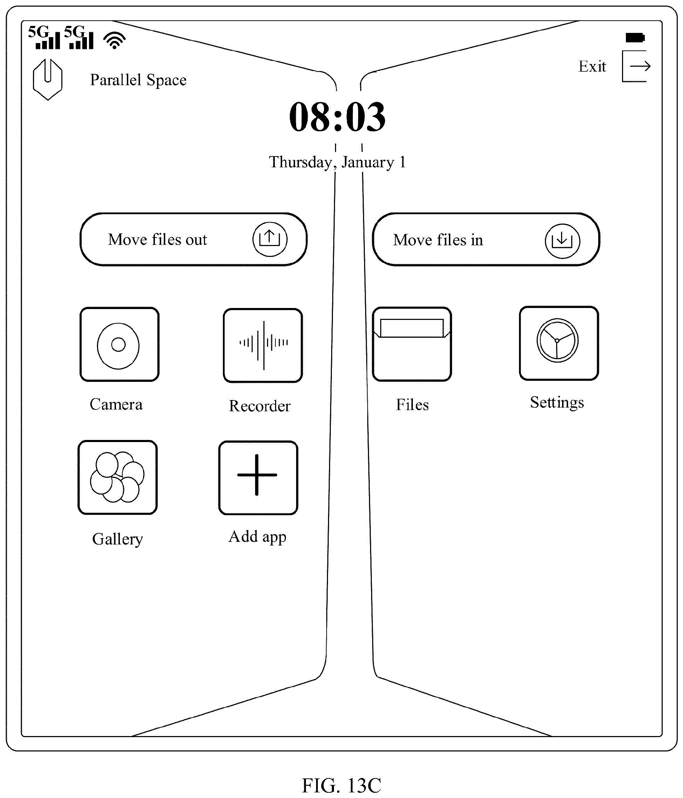

As shown in FIG. 13B, after the user taps the "exit" control, the display screen displays prompt information, so as to prompt the user to determine again whether to exit the parallel space, so as to prevent a phenomenon that the parallel space is closed because of triggering by the user by mistake. The prompt information may be displayed in a form of a floating window. When the user determines that the parallel space needs to be closed, the user can tap the "OK" option in the prompt information. If the user does not need to close the parallel space, the user can tap the cancel" option in the prompt information to ensure that the parallel space can continue to be used. In response to the operation of tapping the "OK" option in the prompt information by the user, the display screen of the electronic device displays the interface of FIG. 13C.

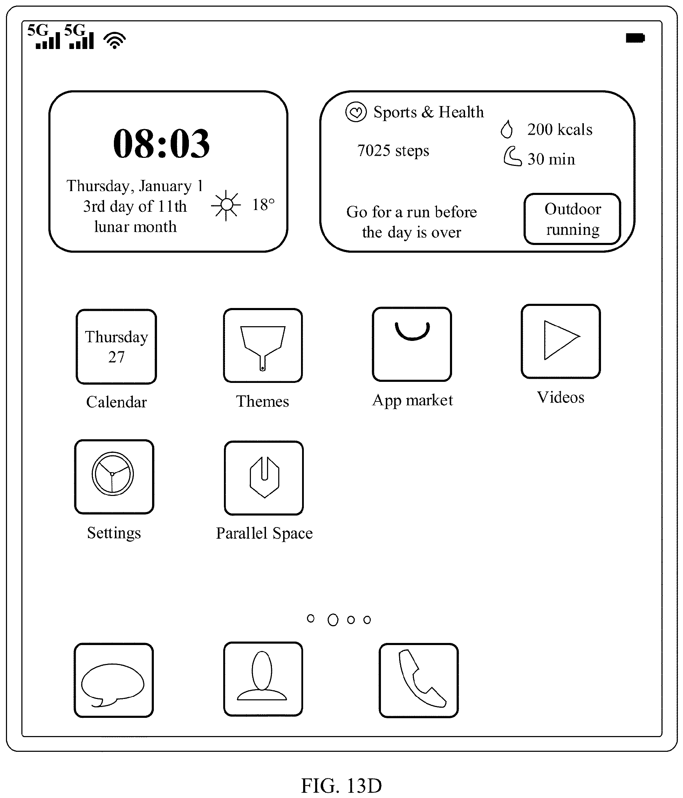

As shown in FIG. 13C, after the user taps the "OK" option, the electronic device performs an animation effect of exiting the parallel space. For example, the electronic device performs an animation effect of closing a door. As shown in FIG. 13C, the animation effect of closing a door represents that the parallel space is being closed. After the electronic device completes performing the animation effect of exiting the parallel space, the electronic device exits the parallel space, and returns to the main system. The display screen of the electronic device displays the system home screen of the main system shown in FIG. 13D.

Certainly, in actual application, after the user taps the "OK" option, the electronic device may not perform the animation effect of exiting the parallel space. The electronic device may directly exit the parallel space, and return to the main system. The display screen of the electronic device directly displays the system home screen of the main system shown in FIG. 13D. Alternatively, after the user taps the "exit" control, the electronic device directly exits the parallel space, and the electronic device directly displays the system home screen of the main system shown in FIG. 13D.

After the parallel space is exited, an application in the parallel space is also exited, and is not in use. In actual application, after the parallel space is exited, the electronic device may display any system home screen in the main system.

Both the main system and the parallel space exist in the electronic device, and both the main system and the parallel space can store data. Therefore, in actual application, when using the parallel space, the user may directly add data in the main system into the parallel space, and does not need to exit the parallel space, open the interface of the main system, and then transmit the data in the main system to the parallel space, so that data in the parallel space is obtained more easily and conveniently. Specifically, a method for adding data into a parallel space is as follows:

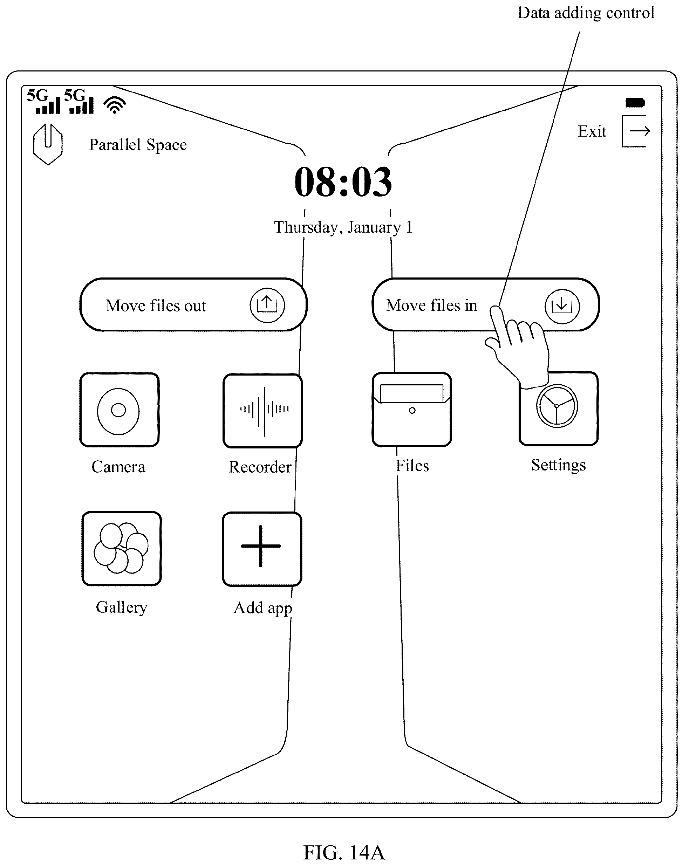

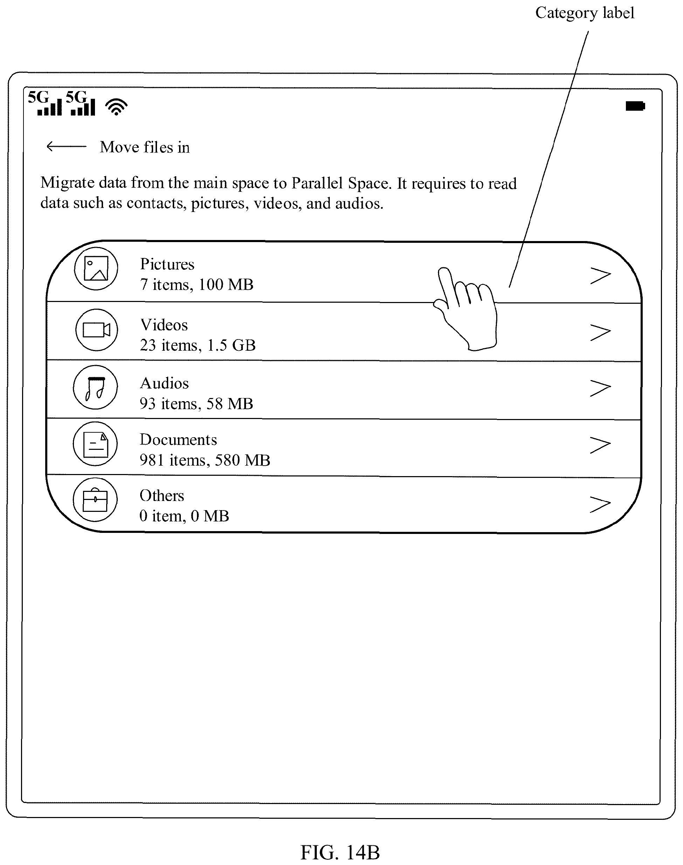

In an embodiment, a data adding control exists in the application home screen of the parallel space. If the user needs to add data in the main system into the parallel space, the data may be added by tapping the data adding control in the interface. Referring to FIG. 14A, the display screen of the electronic device displays the application home screen of the parallel space. If the user needs to move the data in the main system into the parallel space, the user needs to tap the "move files in" control (data adding control) in FIG. 14A. The display screen of the electronic device displays the interface shown in FIG. 14B in response to the operation of tapping the "move files in" control by the user.

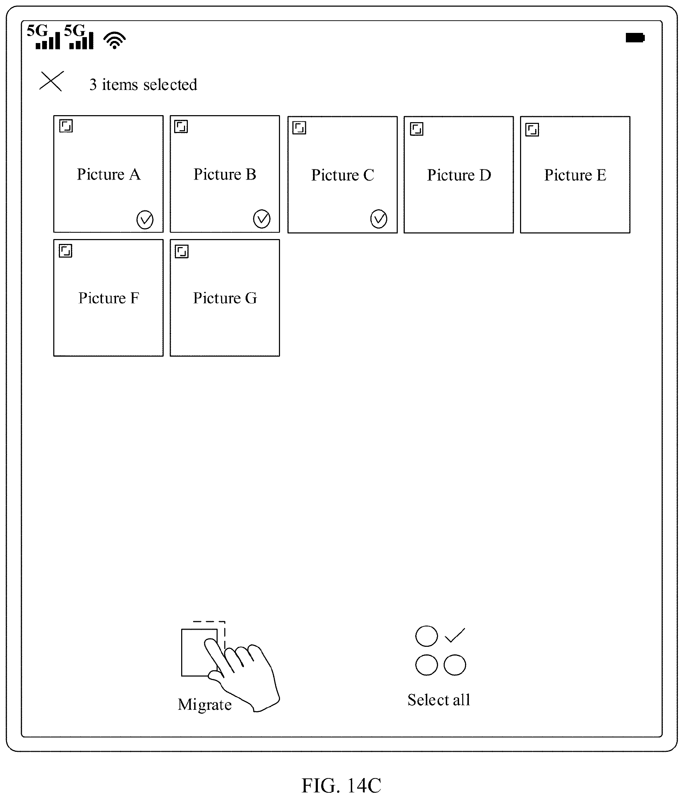

Referring to FIG. 14B, the display screen of the electronic device displays a category label (which may also be referred to as a file category) of movable data, for example, a label of an image, a label of a video, a label of an audio, a label of a document, and a label of other data. In addition, there is also a quantity of movable items of this category of data (corresponding to a quantity of items of this category of file that exist in the main system) in the category label of the movable data. For example, if a quantity of items of a picture in the main system is 7, 7 items are displayed in a picture label, which represents that 7 pictures can be moved from the main system into the parallel space. The user may select a corresponding category label by tapping the category label of the movable data, so that the electronic device displays data in the category label. For example, as shown in FIG. 14B, after the user taps the "picture" label in the interface, the display screen of the electronic device displays an interface of FIG. 14C.

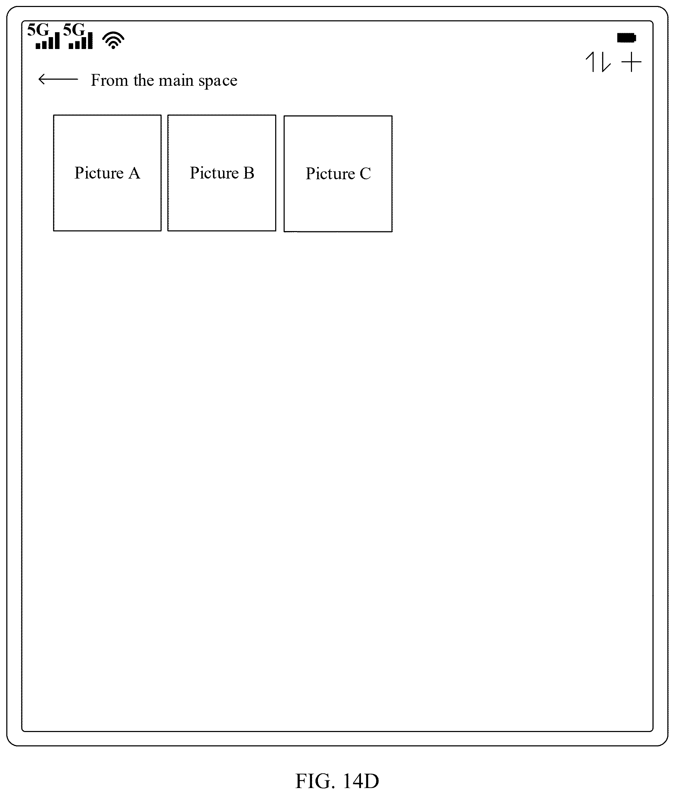

After the user taps the category label in FIG. 14B, the electronic device directly opens a folder corresponding to the category label in the main system, and displays data in the folder. In this case, the parallel space and the main system are opened in the electronic device, and both the dual systems are in an enabled state. As shown in FIG. 14C, after the user taps the "picture" label, the electronic device directly opens a photo application (photo folder) in the main system, and displays the picture in the main system on the display screen of the electronic device. The user selects, in the interface shown in FIG. 14C, a picture that needs to be moved. For example, in the interface of FIG. 14C, a picture A, a picture B, and a picture C are selected (selecting is tapping the picture, and a selected icon is displayed below the selected picture). After the picture is selected, the user taps the "OK" option ("migrate" option in the interface of FIG. 14C), so that the electronic device migrates the selected picture from the main system to the parallel space. The interface of FIG. 14C is an interface that includes a picture and is directly displayed in the main system. In response to the operation of tapping the "migrate" option by the user, the display screen of the electronic device displays an interface shown in FIG. 14D.

As shown in FIG. 14D, the display screen of the electronic device displays the picture migrated from the main space (main system) to the parallel space. The interface shown in FIG. 14D is an interface in the parallel space. In this embodiment of this application, the operation of migrating the data in the main system to the parallel space may be a copy or cut operation on the data. Similarly, the operation of migrating the data in the parallel space to the main system may be a copy or cut operation on the data.

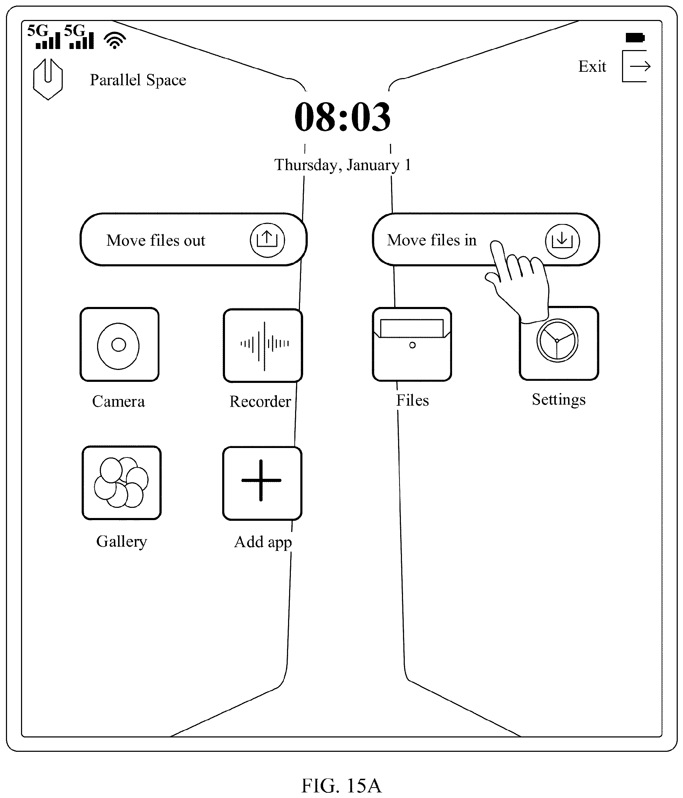

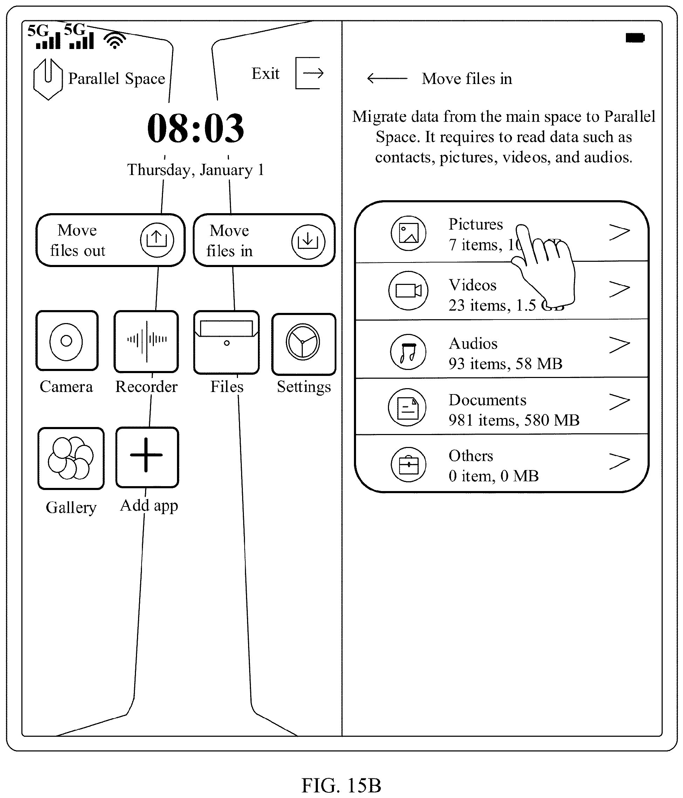

In another embodiment, referring to FIG. 15A, the display screen of the electronic device displays the application home screen of the parallel space. If the user needs to move the data in the main system into the parallel space, the user needs to tap the data adding control in the application home screen of the parallel space, such as the "move files in" control in FIG. 15A. The display screen of the electronic device displays the interface shown in FIG. 15B in response to the operation of tapping the "move files in" control by the user.

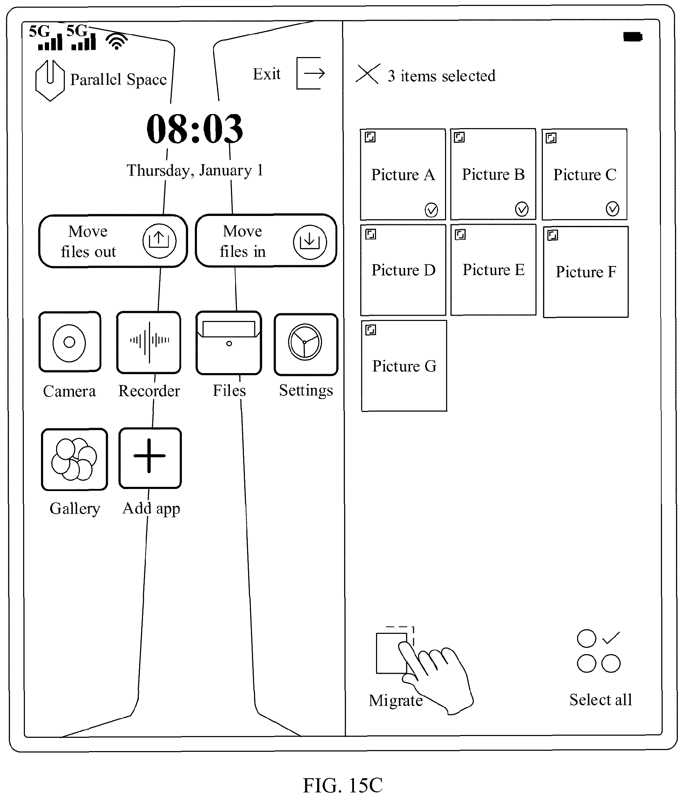

As shown in FIG. 15B, the display screen of the electronic device performs split-screen display, the left part of the display screen displays the application home screen of the parallel space, and the right part of the display screen displays the category label of movable data. After the user taps the "picture" label in the interface, the display screen of the electronic device displays an interface of FIG. 15C.

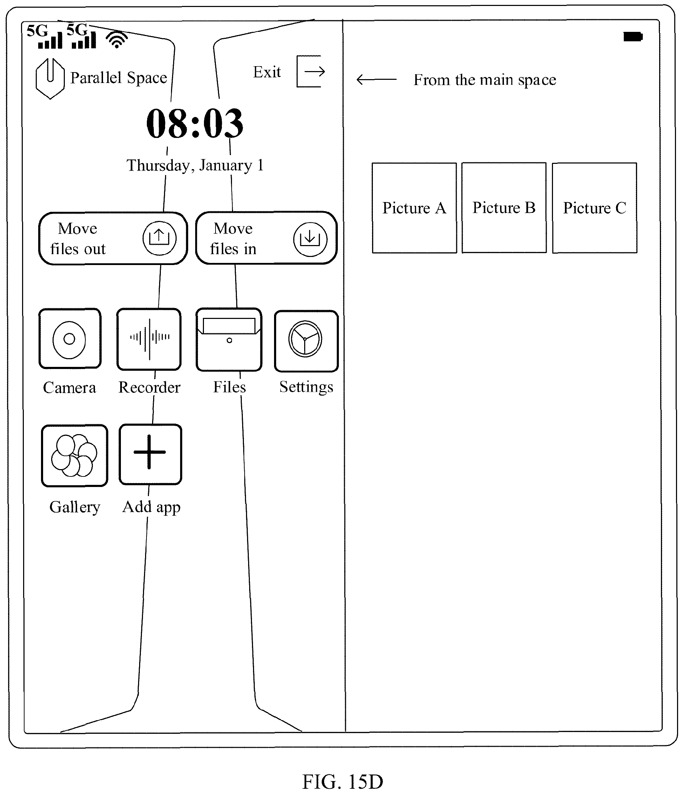

As shown in FIG. 15C, the left part of the electronic device displays the application home screen of the parallel space, and the right part of the display screen displays the picture in the gallery in the main system. In response to the operation of tapping the "migrate" option by the user, the display screen of the electronic device displays an interface shown in FIG. 15D.

As shown in FIG. 15D, the left part of the electronic device displays the application home screen of the parallel space, and the right part of the display screen displays the picture migrated from the main space to the parallel space.

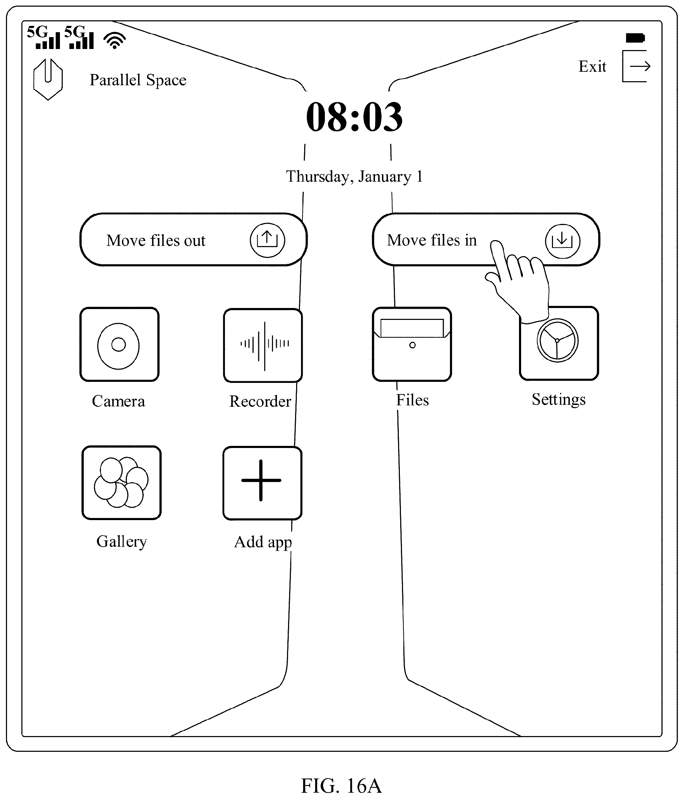

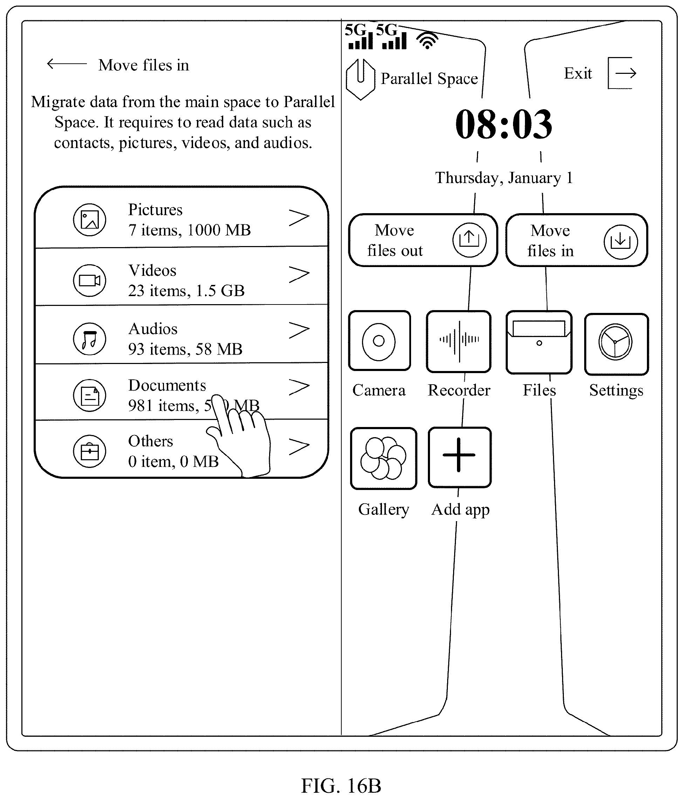

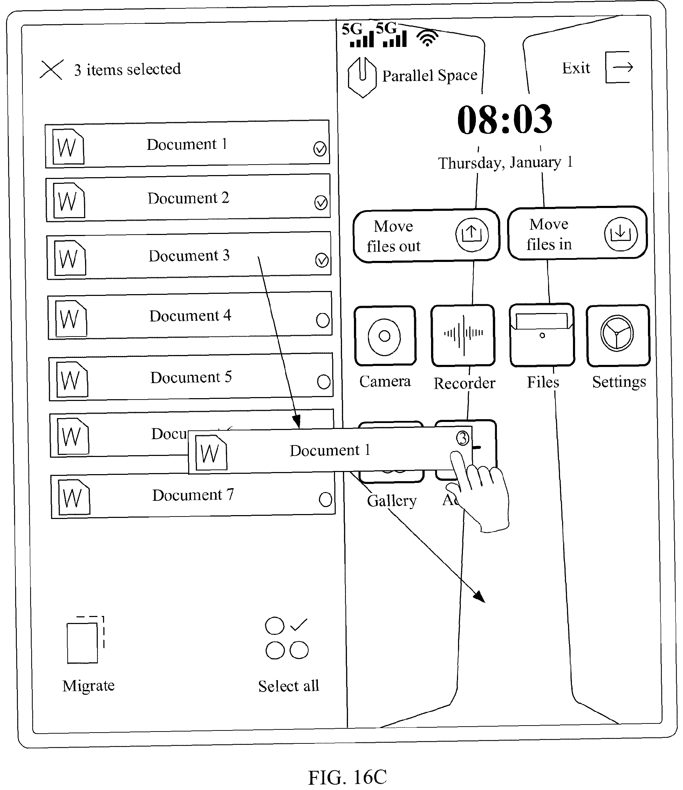

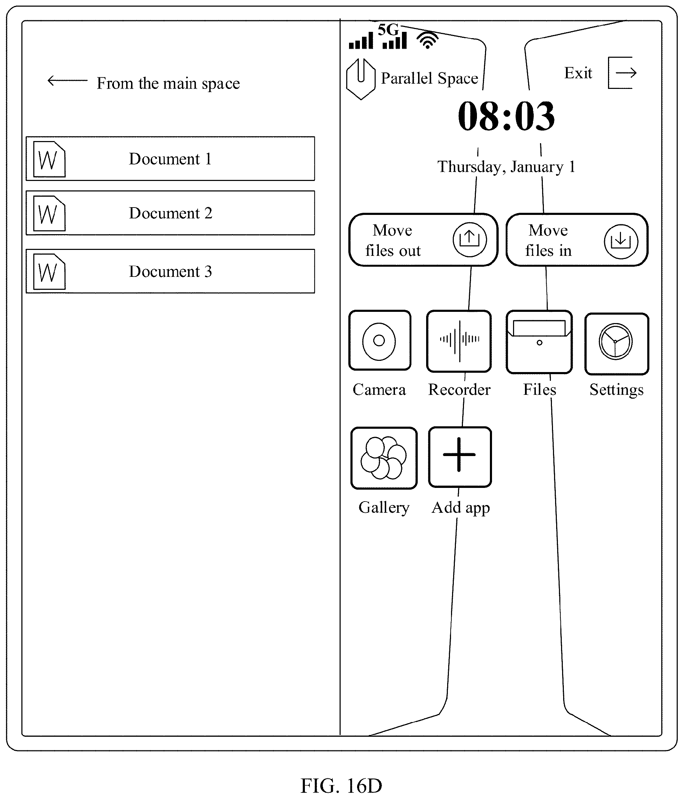

In another embodiment, as shown in FIG. 16A to FIG. 16D, when data is moved from the main space into the parallel space, when the display screen performs split-screen display, the application home screen of the parallel space may be displayed on the right part of the display screen. For example, as shown in FIG. 16A, the display screen of the electronic device displays the application home screen of the parallel space, and the display screen of the electronic device displays an interface shown in FIG. 16B in response to an operation of tapping the "move files in" control by the user. As shown in FIG. 16B, the display screen of the electronic device performs split-screen display, the right part of the display screen displays the application home screen of the parallel space, and the left part of the display screen displays the category label of movable data. After the user taps the "document" label in the interface, the display screen of the electronic device displays an interface of FIG. 16C. As shown in FIG. 16C, the right part of the electronic device displays the application home screen of the parallel space, and the left part of the display screen displays the file in files of the main system. The user may drag, in a dragging manner, a file that needs to be migrated from the left part of the display screen to the application home screen of the parallel space, as shown in FIG. 16C. After the user drags the file that needs to be migrated from the left part of the display screen to the application home screen of the parallel space, the electronic device automatically stores the migrated document into a corresponding application for storing the document in the parallel space. After document migration is completed, as shown in FIG. 16D, the right part of the electronic device displays the application home screen of the parallel space, and the left part of the display screen displays the document migrated from the main space to the parallel space.

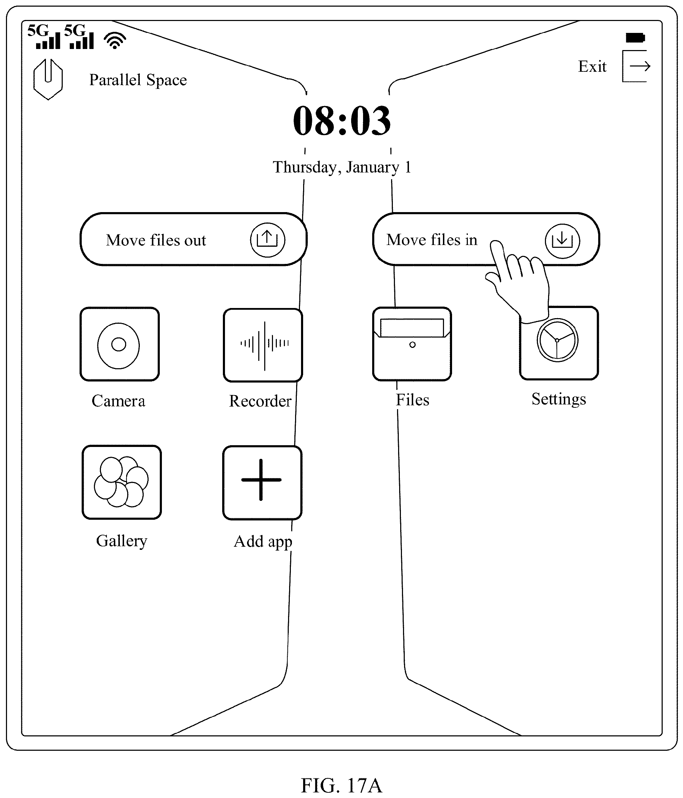

In another embodiment, the data in the main system may be migrated to the parallel space in a dragging manner. For details, refer to FIG. 17A to FIG. 17D for description.

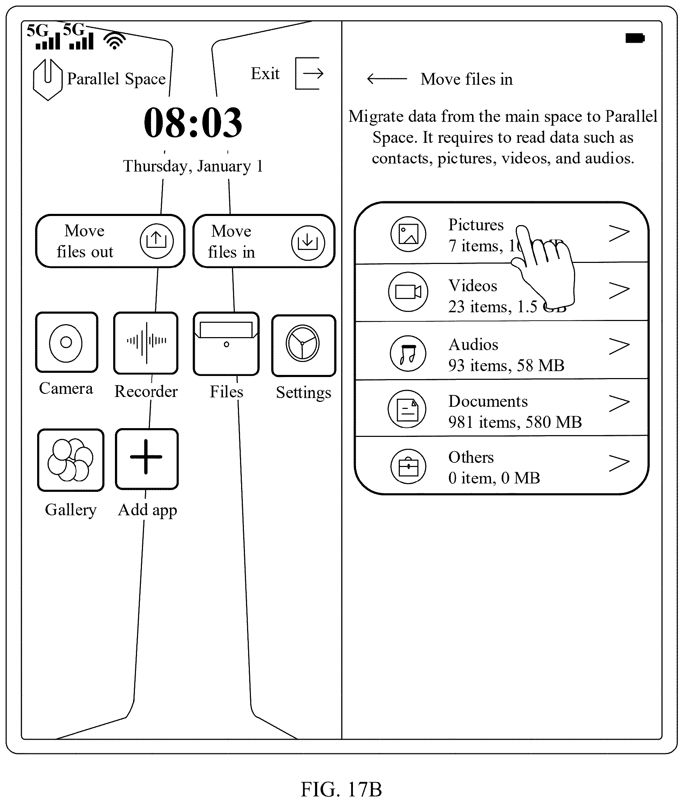

Referring to FIG. 17A, the display screen of the electronic device displays the application home screen of the parallel space. If the user needs to move the data in the main system into the parallel space, the user needs to tap the data adding control in the application home screen of the parallel space, such as the "move files in" control in FIG. 17A. The display screen of the electronic device displays the interface shown in FIG. 17B in response to the operation of tapping the "move files in" control by the user.

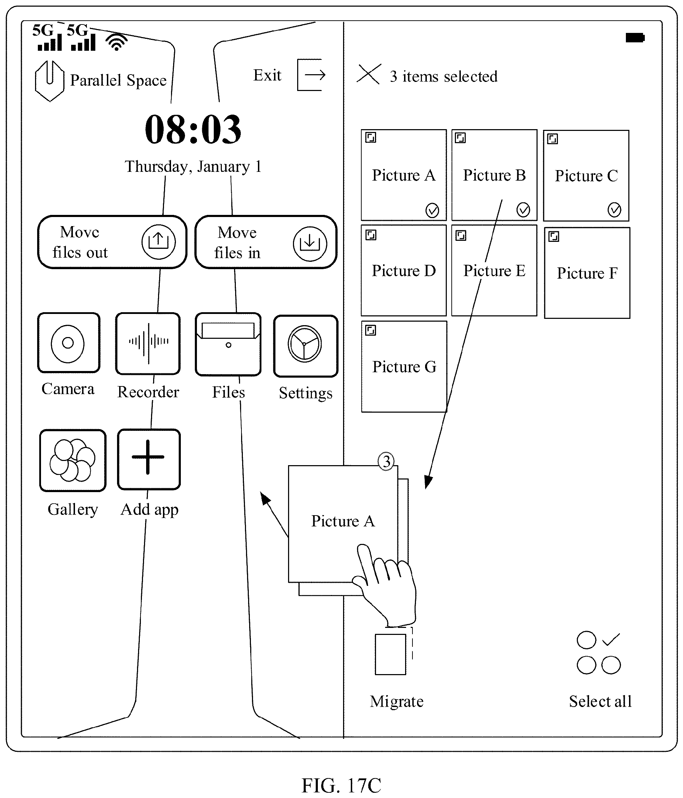

As shown in FIG. 17B, the display screen of the electronic device performs split-screen display, the left part of the display screen displays the application home screen of the parallel space, and the right part of the display screen displays the category label of movable data. After the user taps the "picture" label in the interface, the display screen of the electronic device displays an interface of FIG. 17C.

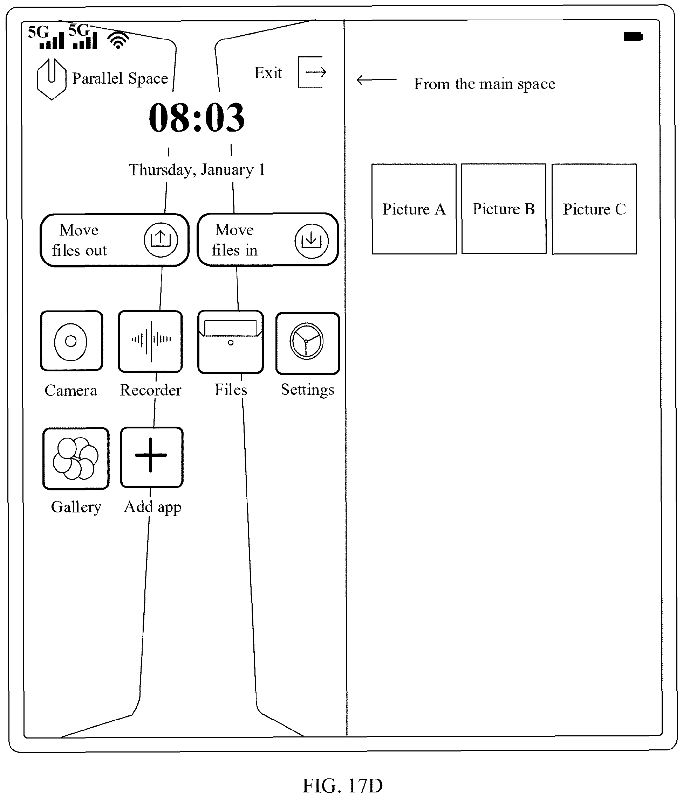

As shown in FIG. 17C, the left part of the electronic device displays the application home screen of the parallel space, and the right part of the display screen displays the picture in the gallery in the main system. The user selects, in the interface shown in FIG. 17C, a picture that needs to be moved, for example, selects a picture A, a picture B, and a picture C from the interface shown in FIG. 17C. After the picture is selected, the user taps any selected picture, and then, without lifting the hand, moves the finger toward the application home screen of the parallel space. In this case, an icon of the picture moves with the finger until the selected picture is moved to the application home screen of the parallel space and the finger is lifted. For example, the finger in the interface shown in FIG. 17C drags the selected picture, and moves the picture from the right part of the display screen to the left part of the display screen. After the user moves the selected picture to the application home screen of the parallel space, the dragged picture is released, and the electronic device automatically stores the picture into the gallery in the parallel space. After the electronic device stores the moved picture, the display screen of the electronic device displays an interface shown in FIG. 17D.

Certainly, in actual application, in the foregoing embodiments shown in FIG. 14A to FIG. 17D, after the user taps the "move files in" control on the application home screen of the parallel space, the display screen of the electronic device may directly display data in the main system that can be moved to the parallel space, for example, a video, a picture, and an audio in the main system, and the user selects data that needs to be migrated from the displayed movable data. For example, if there is a picture in the main system that can be moved to the parallel space, after the user taps the "move files in" control in FIG. 14A, the electronic device displays the interface shown in FIG. 14C, and then selects a picture that needs to be migrated from the displayed picture. In addition, after the user taps the "migrate" option in FIG. 14C, the electronic device may not display data that is moved to the parallel space. For example, the display screen of the electronic device does not display the interface shown in FIG. 14D.

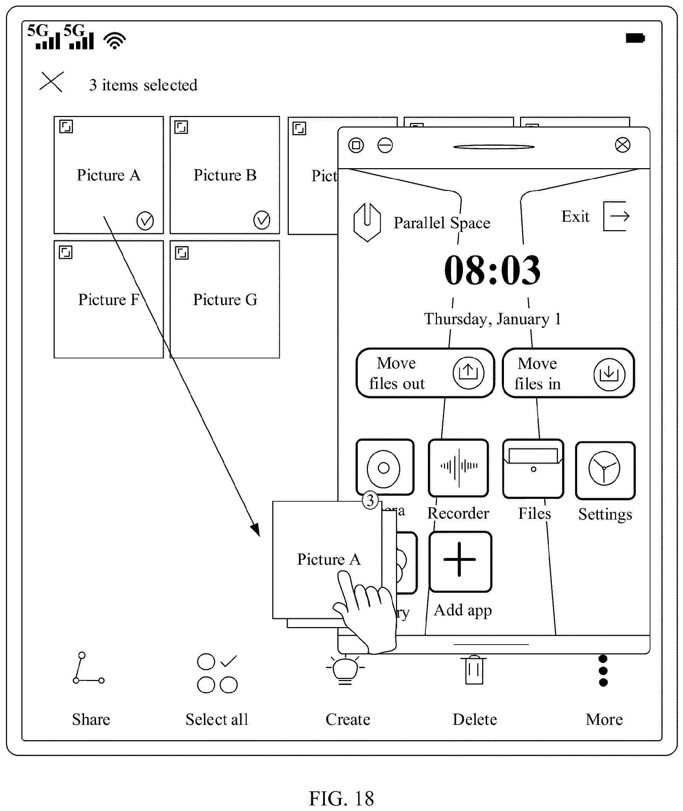

In an embodiment, if the parallel space is displayed in a form of a floating window, after the user taps the "move files in" control, the display screen of the electronic device displays a category label of movable data. After the user selects a category label of data that needs to be moved, the display screen of the electronic device may display a picture in the gallery in the main system. As shown in FIG. 18, after the user selects a picture that needs to be moved, the selected picture may be moved to the application home screen of the parallel space in a dragging manner, so that the electronic device automatically stores the moved picture into a gallery application of the parallel space.

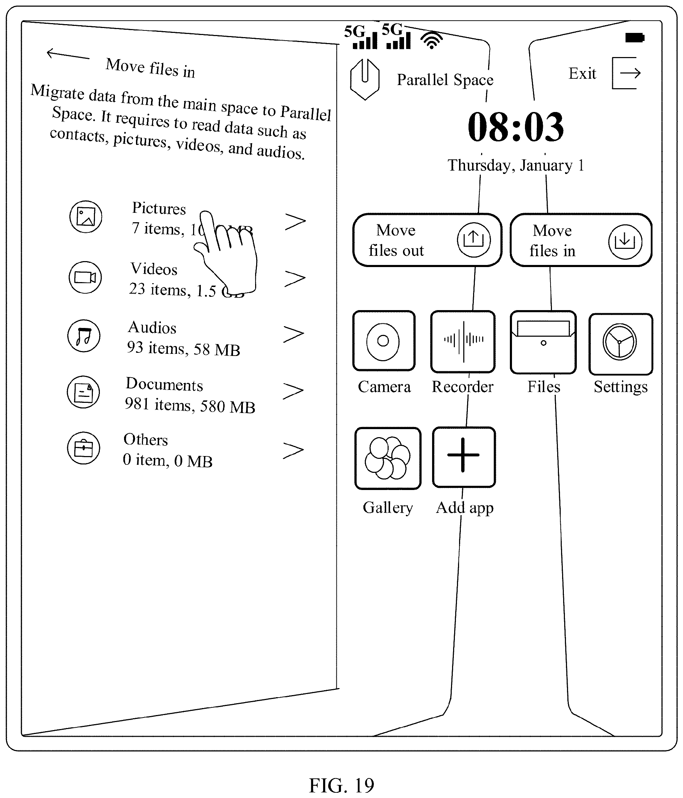

In an embodiment, as shown in FIG. 19, after the user taps the "move files in" control, the display screen of the electronic device performs split-screen display, the right part of the display screen displays the application home screen of the parallel space, the left part of the display screen displays a category label of movable data, and the left part of the display screen displays a transformed interface with the category label of movable data.

In the foregoing, this application provides a plurality of methods for obtaining data for the parallel space from the main space and a plurality of display manners, which meet requirements of different users.

Certainly, in actual application, when data is moved from the main space to the parallel space and the display screen performs split-screen display, the upper half part or the lower half part of the display screen may alternatively display the application home screen of the parallel space.

Correspondingly, methods for migrating a video, an audio, a document, and other data from the main space to the parallel space are the same as the method for migrating a picture in the foregoing example, and details are not described herein again. However, when a video is migrated from the main space to the parallel space, the parallel space opens a video folder in a photo application of the main space (which is equivalent to that the parallel space may directly open a folder in the main system, so that the electronic device can display an interface of the parallel space and an interface of the main system at the same time). When an audio is migrated from the main space to the parallel space, the parallel space opens an audio folder in an audio storage application of the main space. When other data is migrated from the main space to the parallel space, the parallel space opens a folder corresponding to the other data in another data storage application of the main space.

In actual application, the user may move data in the parallel space to the main space when using the parallel space. Specifically, a method for moving data out of the parallel space is described as follows:

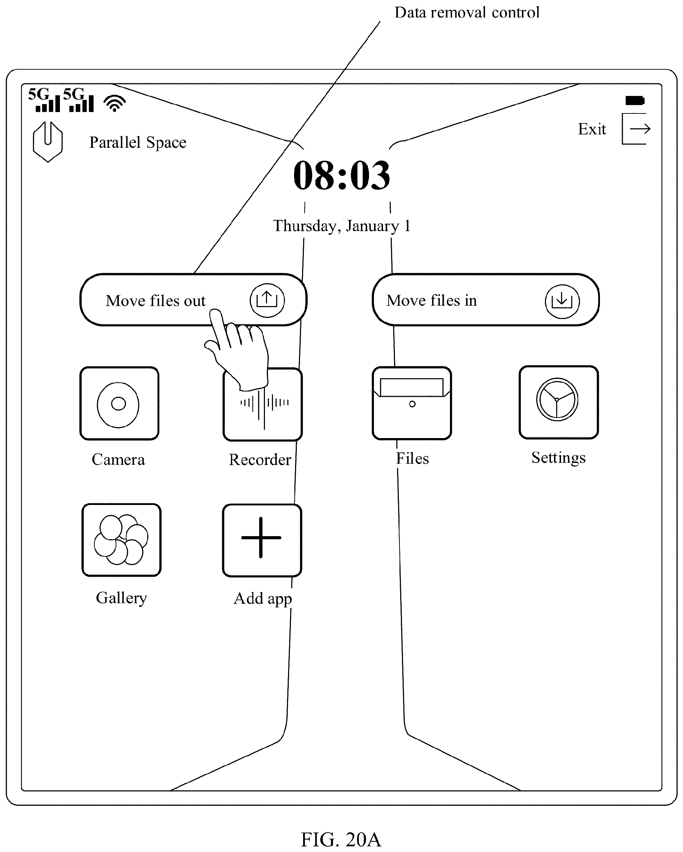

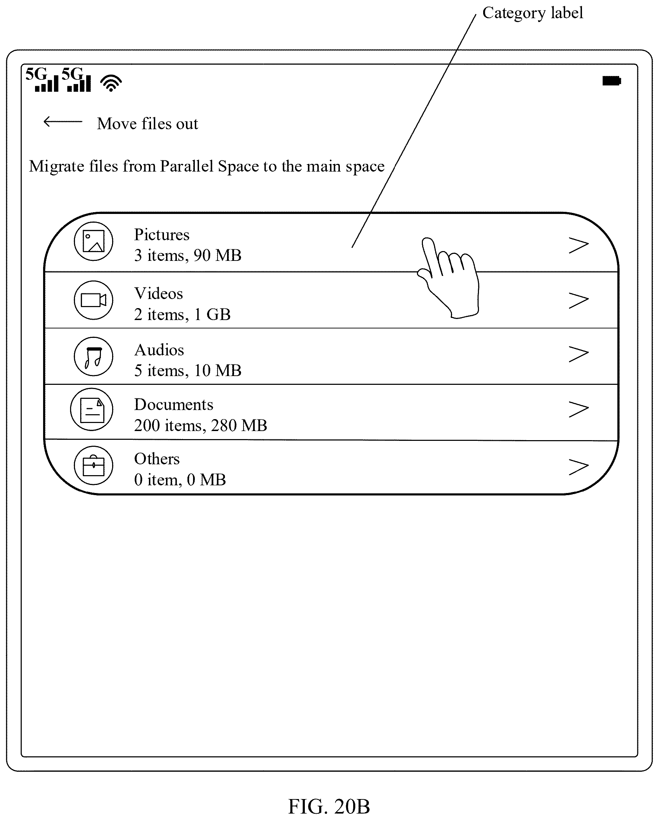

In an embodiment, there is a data removal control for moving out data on the application home screen of the parallel space. If the user needs to migrate the data of the parallel space to the main space, this may be implemented by tapping the data removal control. Specifically, as shown in FIG. 20A, when the user needs to migrate data in the parallel space to the main space, the user needs to tap the "move files out" control. The display screen of the electronic device displays the interface shown in FIG. 20B in response to the operation of tapping the "move files out" control by the user.

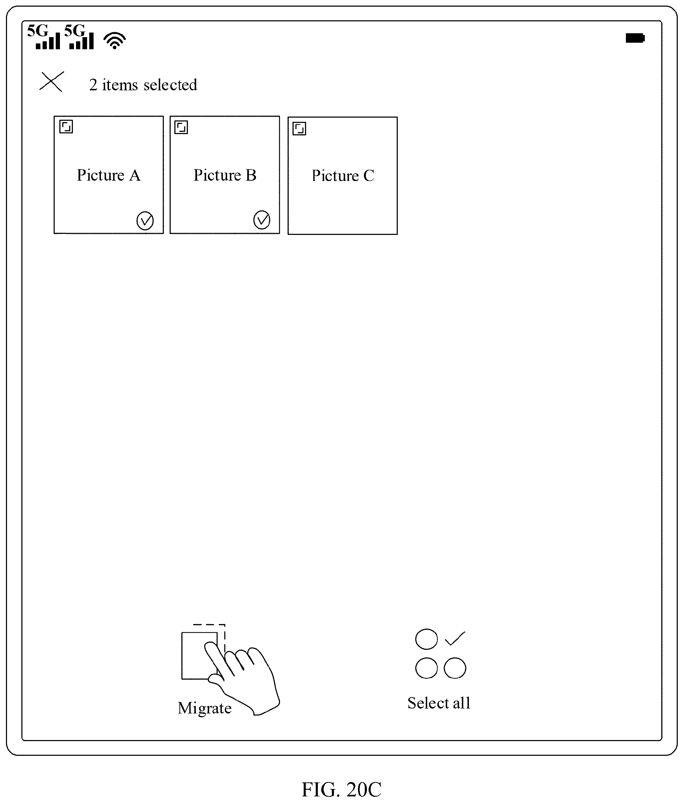

Referring to FIG. 20B, the display screen of the electronic device displays a category label (file category) of movable data in the parallel space, for example, a label of an image, a label of a video, a label of an audio, a label of a document, and a label of other data. In addition, the category label of the movable data stores a quantity of movable items of this category of data (file) (corresponding to a quantity of items of this category of data that exist in the parallel space). For example, if a quantity of items of a picture in the parallel space is 3, 3 items are displayed in the label of the picture, which represents that 3 pictures can be migrated from the parallel space to the main space. The user may tap the category label of the movable data to open the data of the corresponding category in the parallel space. For example, as shown in FIG. 20B, FIG. 20B is an interface in the parallel space. After the user taps the "picture" label in the interface, the display screen of the electronic device displays an interface of FIG. 20C.

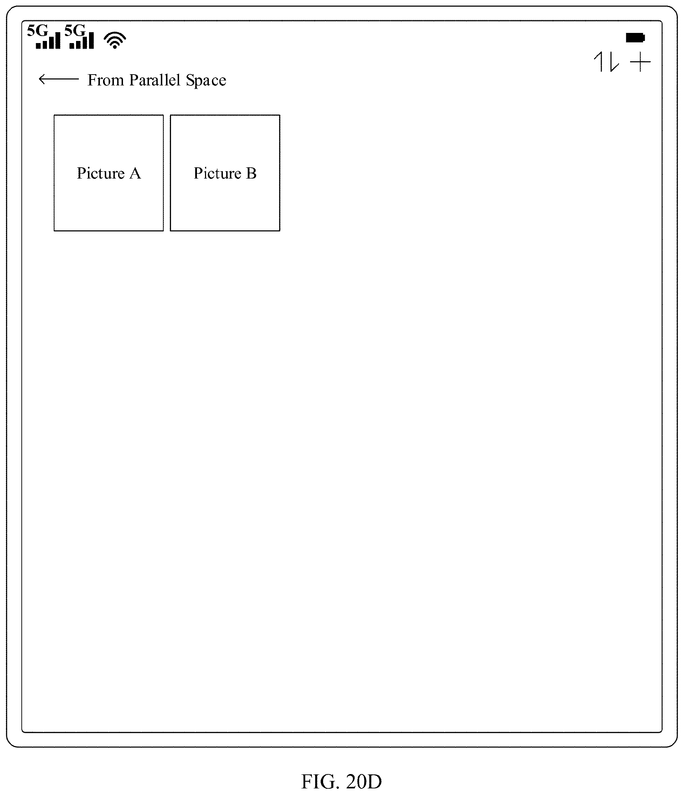

Referring to FIG. 20C, after the user taps the "picture" label, the electronic device directly displays the picture in the gallery application in the parallel space, and the user selects a picture that needs to be migrated from the picture displayed by the electronic device. For example, the user selects a picture A and a picture B from the interface of FIG. 20C. After the picture is selected, the user taps an OK option, such as the "migrate" option in the interface of FIG. 20C, so that the electronic device migrates the selected picture from the parallel space to the main space. FIG. 20C is an interface in the parallel space. In response to the operation of tapping the "migrate" option by the user, the display screen of the electronic device displays an interface shown in FIG. 20D.

Referring to FIG. 20D, the display screen of the electronic device displays the picture migrated from the parallel space to the main space. FIG. 20D shows an interface in the main system. In another example, in response to the operation of tapping the "migrate" option by the user, the electronic device displays an interface including remaining data in the parallel space. For example, after FIG. 20C, the electronic device displays an interface including only a picture c, to prompt the user that only the picture c remains in the current parallel space.

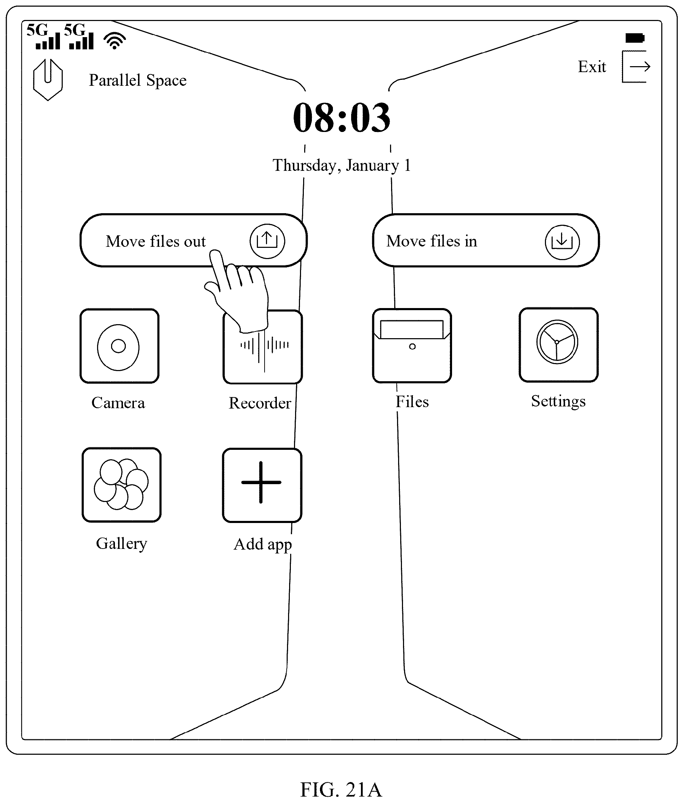

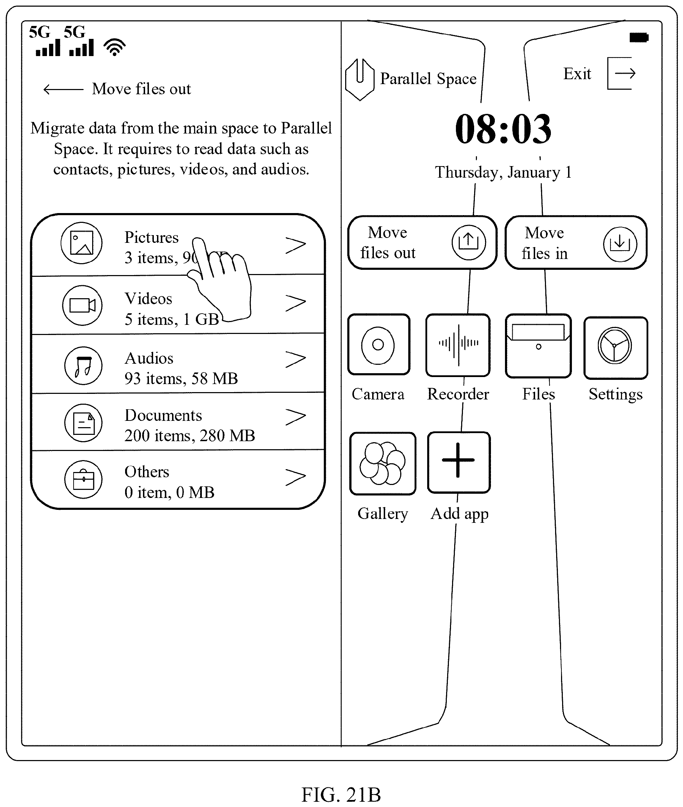

In another embodiment, referring to FIG. 21A, the display screen of the electronic device displays the application home screen of the parallel space. If the user needs to move the data in the parallel space to the main space, the user needs to tap the data removal control in the application home screen of the parallel space, for example, the "move files out" control in FIG. 21A. The display screen of the electronic device displays the interface shown in FIG. 21B in response to the operation of tapping the "move files out" control by the user.

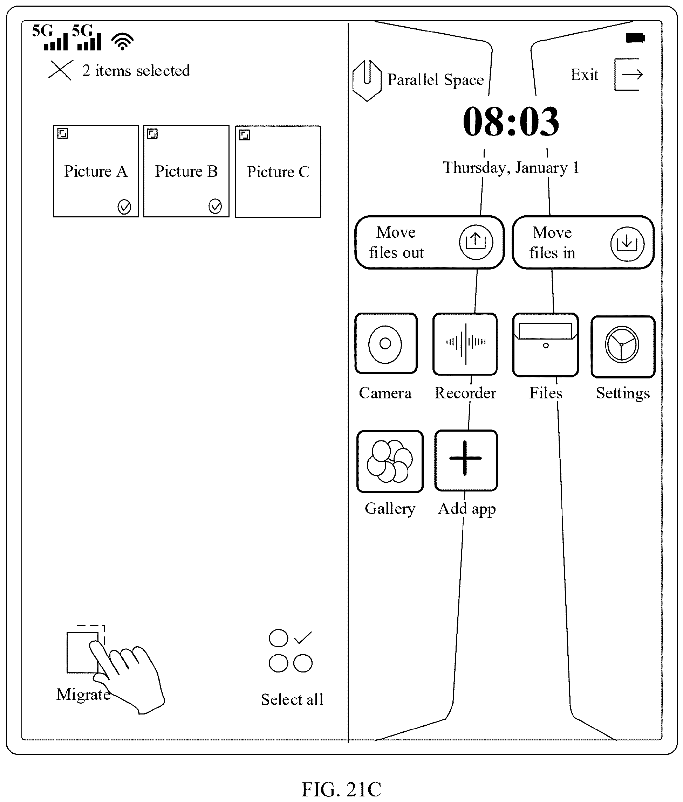

As shown in FIG. 21B, the display screen of the electronic device performs split-screen display, the right part of the display screen displays the application home screen of the parallel space, and the left part of the display screen displays the category label of movable data in the parallel space. After the user taps the "picture" label in the interface, the display screen of the electronic device displays an interface of FIG. 21C.

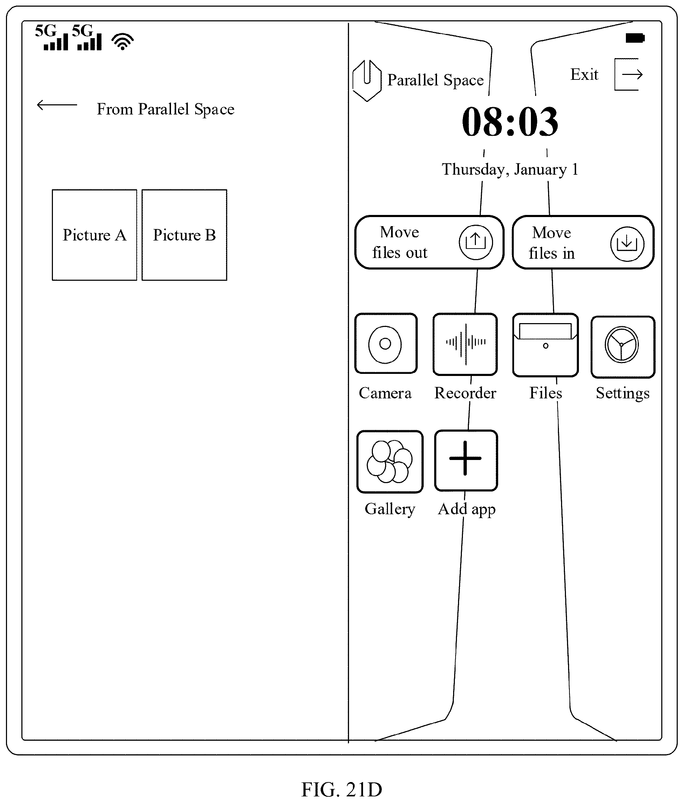

As shown in FIG. 21C, the right part of the electronic device displays the application home screen of the parallel space, and the left part of the display screen displays the picture in the gallery in the parallel space. In response to the operation of tapping the "migrate" option by the user, the display screen of the electronic device displays an interface shown in FIG. 21D.

As shown in FIG. 21D, the right part of the electronic device displays the user interface of the parallel space, and the left part of the display screen displays the picture migrated from the parallel space to the main space.

Correspondingly, if a video, an audio, a document, or other data in the parallel space needs to be migrated to the main space, operation methods thereof are the same as those of the foregoing picture migration method, and details are not described herein again.

It should be noted that when the data in the parallel space is migrated to the main space, if the display screen performs split-screen display in FIG. 21B and FIG. 21C, the data may be directly dragged into the main space in a dragging manner. When the data in the parallel space is migrated to the main space, if the application home screen of the parallel space is displayed in a form of a floating window, data migration may also be performed in a dragging manner. For example, as shown in FIG. 18, the application home screen of the parallel space is displayed in a form of a floating window. After the user taps the "move files out" control, the interface shown in FIG. 20B is displayed in the parallel space. After the user taps the "picture" label, the interface shown in FIG. 20C is displayed in the parallel space, and the system home screen of the main space is displayed on the bottom of the display screen. The user may drag the picture in the parallel space to the system home screen of the main space in a dragging manner, so that the electronic device automatically stores the moved picture into a photo application of the main space.

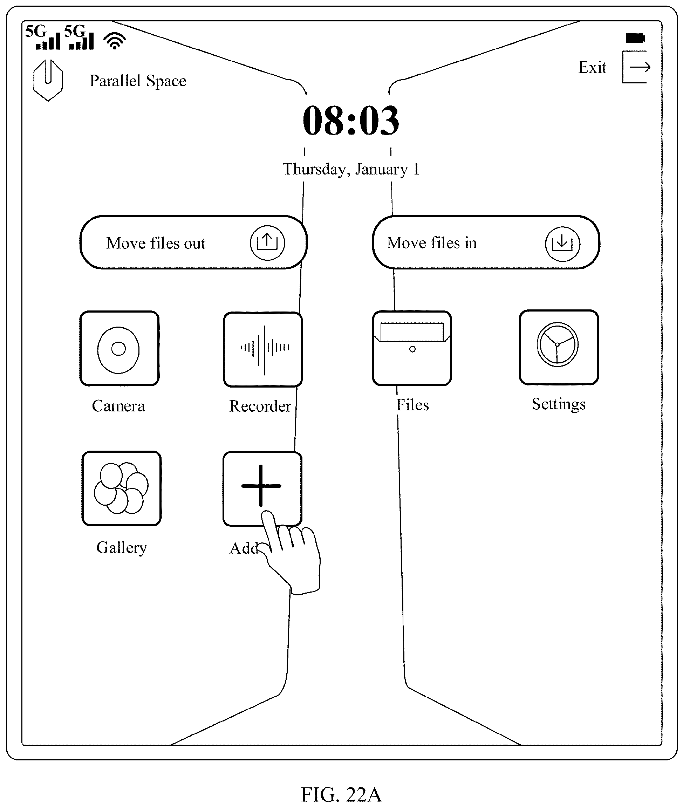

In actual application, for ease of use by the user, and to enrich functions of the parallel space, the user may install an application in the parallel space. Specifically, a method for installing an application in a parallel space is shown in FIG. 22A to FIG. 22C.

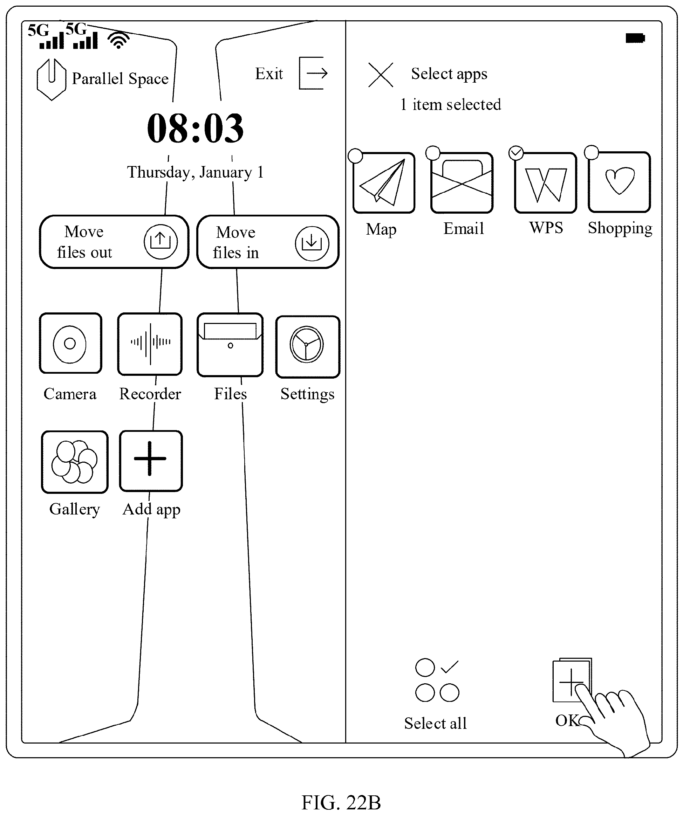

Referring to FIG. 22A, the display screen of the electronic device displays the application home screen of the parallel space, and the application home screen of the parallel space includes an "add application" icon. If the user wants to install an application in the parallel space, the user needs to tap the "add application" icon. In response to the operation of tapping the "add application" icon by the user, the display screen of the electronic device displays an interface of FIG. 22B.

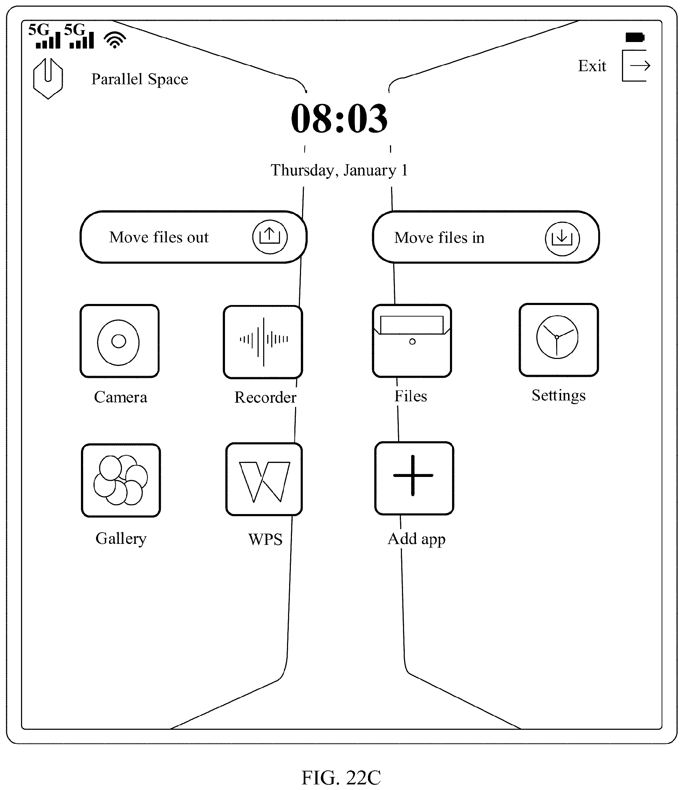

As shown in FIG. 22B, the display screen of the electronic device performs split-screen display, the left region of the display screen displays the application home screen of the parallel space, and the right region of the display screen displays an application that can be installed in the parallel space. The application that can be installed in the parallel space may be an application that has been installed in the main space, or may be an application that is not installed in the main space. The user selects an application that needs to be added in the interface shown in FIG. 22B. For example, the user selects a "WPS" application that needs to be added. After the user selects an application that needs to be added, the user may tap the "OK" option in the interface shown in FIG. 22B. In response to the operation of tapping the "OK" option by the user, the display screen of the electronic device displays an interface of FIG. 22C.

Referring to FIG. 22C, after the user taps the "OK" option, the electronic device automatically installs the selected application, for example, the electronic device automatically installs the "WPS" application, and displays the application home screen of the parallel space after the application installation is completed. In this case, an icon of the newly installed application is added to the application home screen of the parallel space, for example, an icon of "WPS" is added to the interface shown in FIG. 22C.

Certainly, in FIG. 22A to FIG. 22C, FIG. 22B may not perform split-screen display, but display only an application that can be installed in the parallel space (the right part in FIG. 22B). If a large quantity of applications are installed in the parallel space, the parallel space automatically performs pagination, and an icon of a newly installed application is displayed on a next application home screen (or interface). For example, if icons of applications in the parallel space are not fully displayed in the interface displayed in FIG. 22C, the user may display another interface of the parallel space by performing a slide leftward or slide rightward operation, and an icon of an application that is not displayed in the application home screen exists in the another interface.

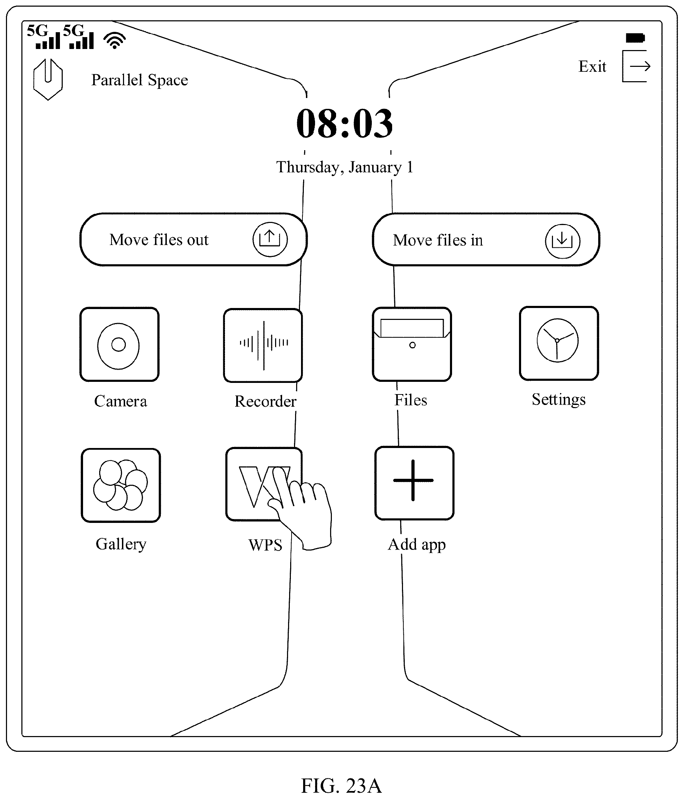

In actual application, if the user does not want to continue to use the application in the parallel space, the user may uninstall the application in the parallel space, so as to simplify content in the parallel space. Specifically, a method for uninstalling an application in a parallel space is shown in FIG. 23A to FIG. 23E.

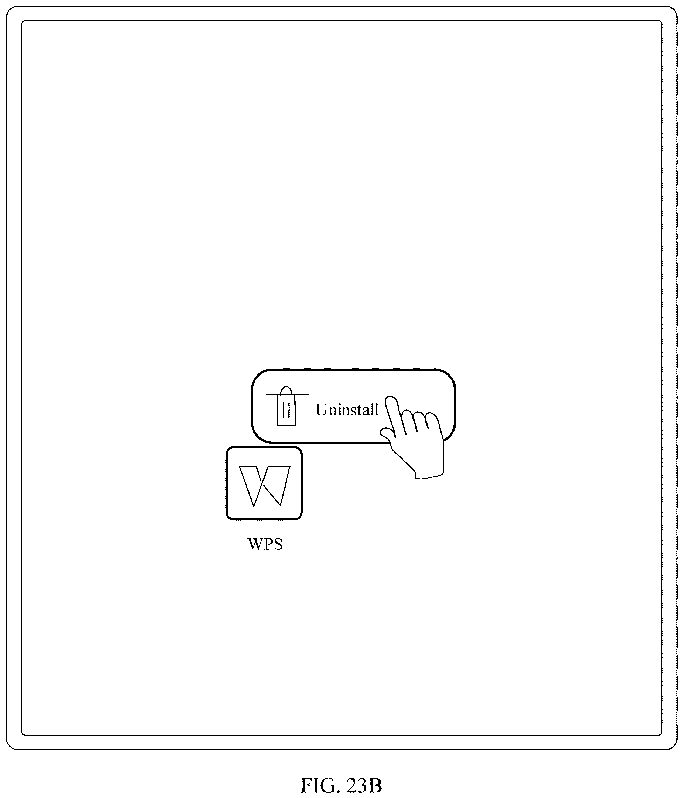

Referring to FIG. 23A, the display screen of the electronic device displays the application home screen of the parallel space, and an icon of an installed application exists in the application home screen of the parallel space. If the user wants to uninstall one application, the user may tap or touch and hold the application to uninstall the application. Specifically, as shown in FIG. 23A, after the user taps the "WPS" icon, the display screen of the electronic device displays an interface shown in FIG. 23B.

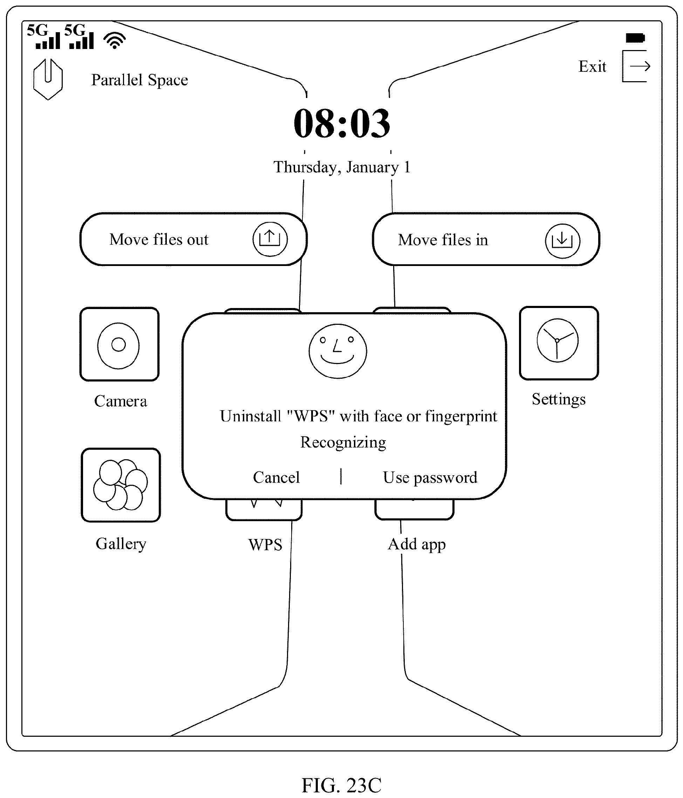

Referring to FIG. 23B, after the user taps or touches and holds an application that needs to be uninstalled, an "uninstall" option appears on the display screen above the application. If the user determines that the application needs to be uninstalled, the user can continue to tap the "uninstall" option. In response to the user tapping the "uninstall" option, the display screen of the electronic device displays an interface shown in FIG. 23C.

As shown in FIG. 23C, to ensure security of application uninstallation in the parallel space, after the user taps the "uninstall" option, the electronic device verifies validity of the current user identity by using a preset user identity, and displays the interface shown in FIG. 23C during verification, to prompt the user that user verification is being performed. If the user taps the "cancel" option in FIG. 23C, user verification may be skipped, or the operation of uninstalling the application may be stopped.

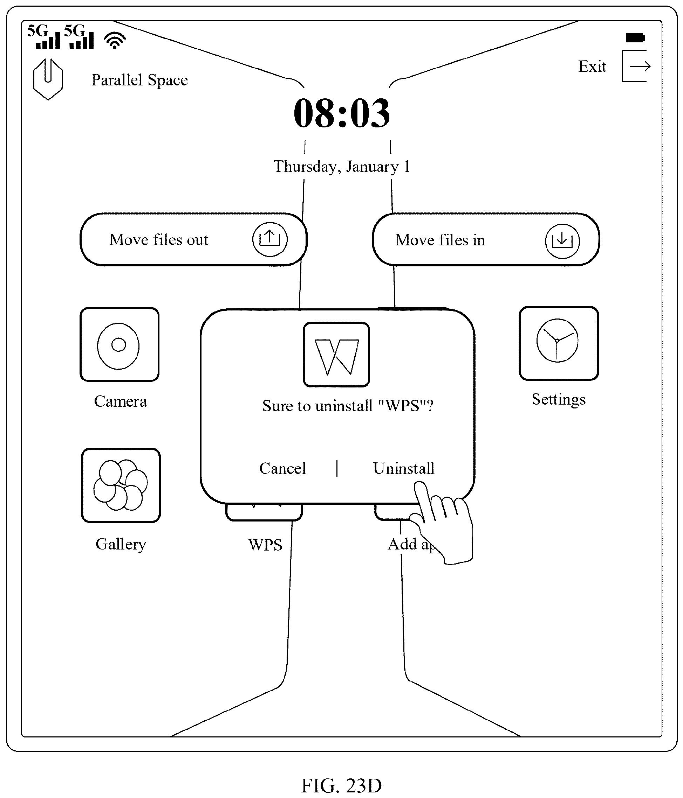

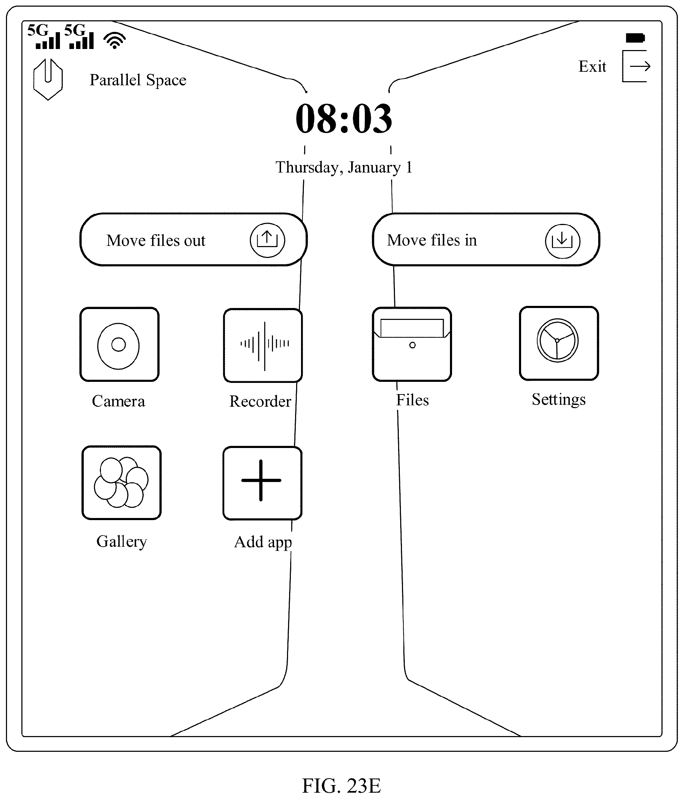

After the electronic device successfully verifies the user identity, the electronic device again queries whether the user needs to uninstall the selected application, so as to prevent a case in which the application is incorrectly uninstalled. For example, as shown in FIG. 23D, a query dialog box is displayed in a form of a floating window on the display screen, so that the user determines whether to continue to uninstall the application. If the user needs to continue to uninstall the application, the user may tap the "uninstall" option in the interface. If the user does not want to continue to uninstall the application, the user may tap the "cancel" option in the interface. In response to the user tapping the "uninstall" option in the interface shown in FIG. 23D, the display screen of the electronic device displays the interface shown in FIG. 23E.

Referring to FIG. 23E, after the user taps the "uninstall" option, the electronic device automatically uninstalls the application selected by the user, and displays the application home screen of the parallel space after uninstalling is completed. In this case, the icon of the uninstalled application no long exists in the application home screen of the parallel space, for example, after the electronic device completes uninstalling "WPS", the icon of "WPS" no long exists in the interface of FIG. 23E.

FIG. 23A to FIG. 23E are only an example of uninstalling an application. In an actual use process, the steps in FIG. 23A to FIG. 23E may be randomly combined. For example, after the electronic device in FIG. 23C determines that the identity of the user is valid, the electronic device directly uninstalls a corresponding application, and displays FIG. 23E after the uninstalling is completed. Alternatively, the electronic device does not verify the identity of the user, but directly displays FIG. 23D after displaying FIG. 23B.

In actual application, if the user does not want to continue to use the parallel space, the user may erase the parallel space. This application provides a method for erasing a parallel space, which not only increases use flexibility of the parallel space, but also meets use requirements of different users. Specifically, the method for erasing a parallel space is described as follows:

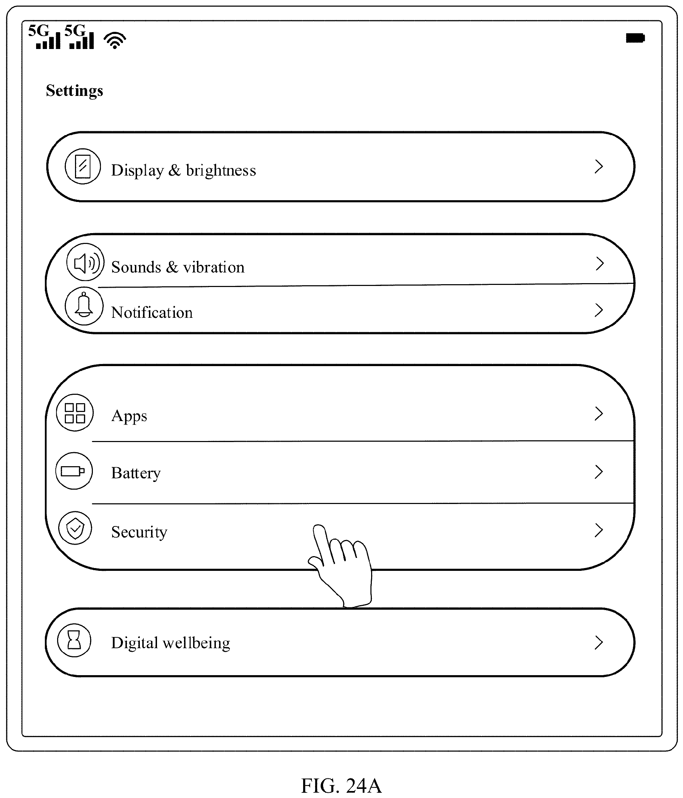

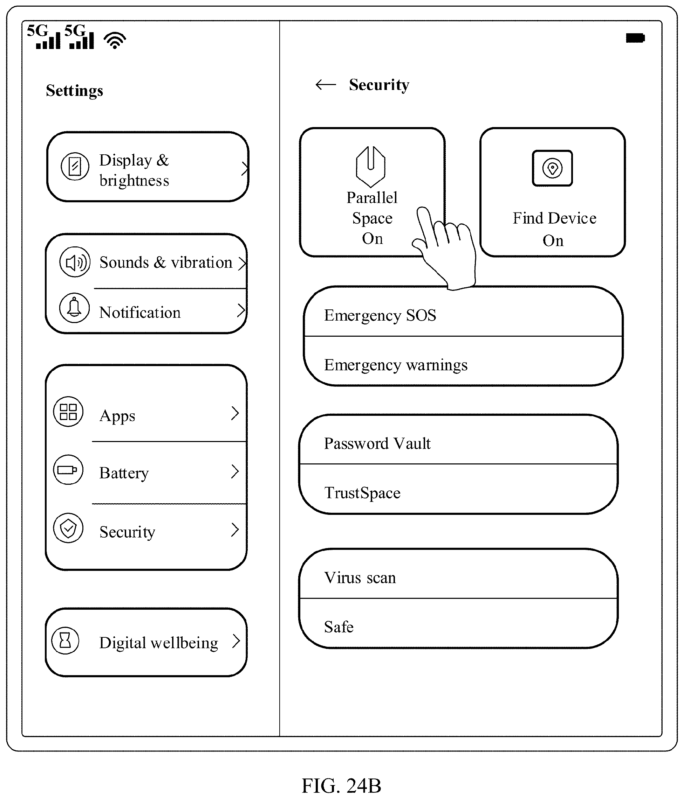

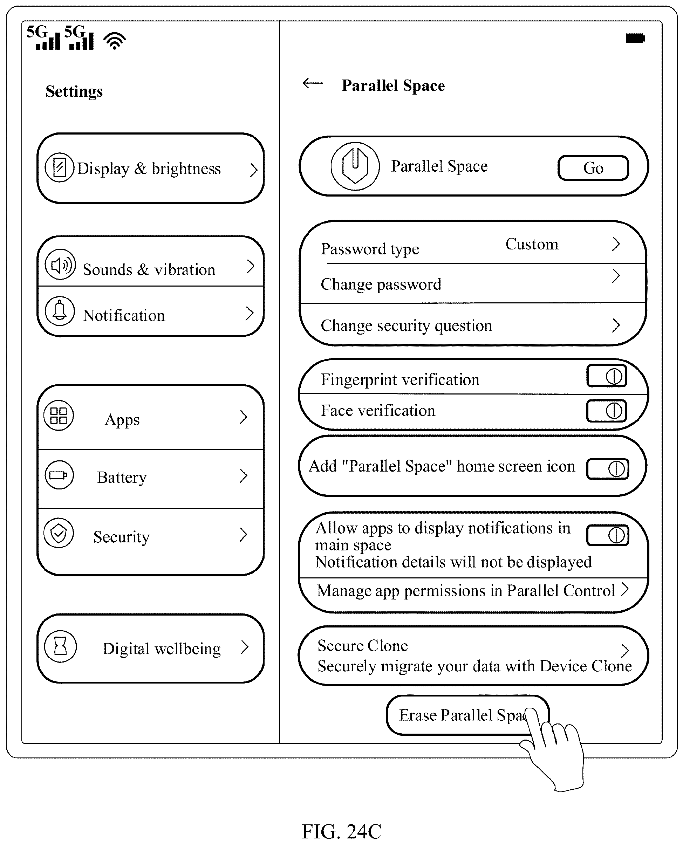

In an embodiment, referring to FIG. 24A, the display screen of the electronic device displays options in "settings" in the main system, and the electronic device displays an interface shown in FIG. 24B in response to an operation of tapping the "security" option by the user. The electronic device displays an interface shown in FIG. 24C in response to an operation of tapping the "parallel space on" icon in the interface shown in FIG. 24B by the user.

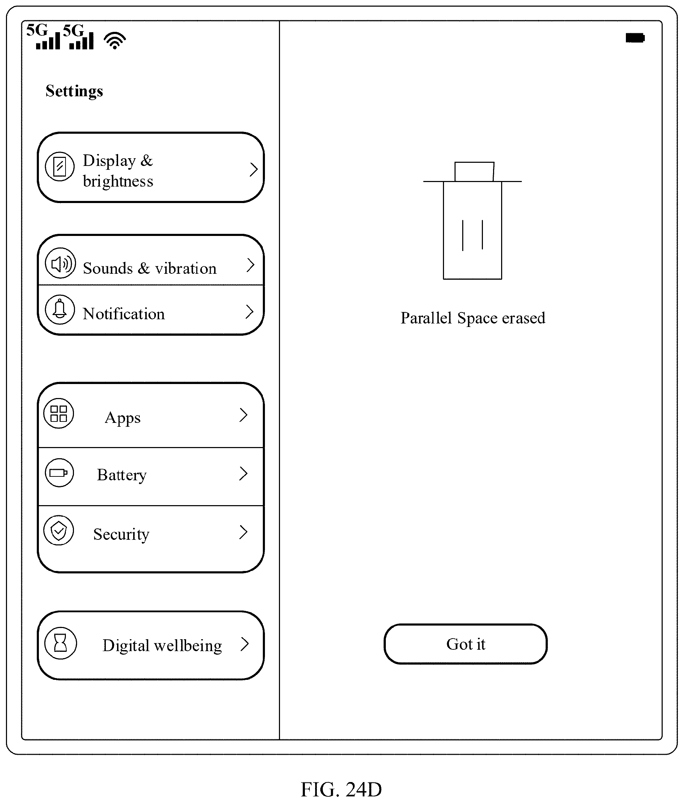

As shown in FIG. 24C, after the user taps the "parallel space on" icon, the display screen of the electronic device displays settings options that can be set in the parallel space, where an option for erasing the parallel space exists in the settings options that can be set in the parallel space. The user can erase the parallel space by tapping the "erase parallel space" option. In response to the operation of tapping the "erase parallel space" option by the user, the electronic device starts to erase the parallel space. After the electronic device completes erasing the parallel space, the display screen of the electronic device displays an interface shown in FIG. 24D. Specifically, the display screen displays a prompt that "the parallel space has been erased", so that the user learns that the parallel space has been erased.

After the parallel space is erased, the "parallel space" icon does not exist on the system home screen of the main system, and data in the parallel space will no longer exist.

In an actual application process, the method for erasing a parallel space from the "settings" application may be any combination of interfaces (both interfaces for split-screen display on the display screen may be each considered as one interface) according to the interfaces in FIG. 2A and FIG. 24A to FIG. 24D, so as to form a new method for erasing a parallel space from the settings application. In addition, the icons and controls in the "settings" application may be recombined, sorted, and displayed as required.

For example, in a scenario, the "erase parallel space" icon in FIG. 24C may be alternatively be set on the interface shown in FIG. 24A. After the user taps the "settings" icon in (a) of FIG. 2, the "erase parallel space" icon may directly appear on the display interface of the electronic device. After the user taps the "erase parallel space" icon, the electronic device displays an interface shown in FIG. 24D.

In another embodiment, before the parallel space is erased, the identity of the user needs to be verified to ensure secure erasing of the parallel space. In addition, after the parallel space is erased, content in the parallel space is erased together. To avoid content loss in the parallel space, content in the parallel space may be migrated to the main space between the erasing of the parallel space.

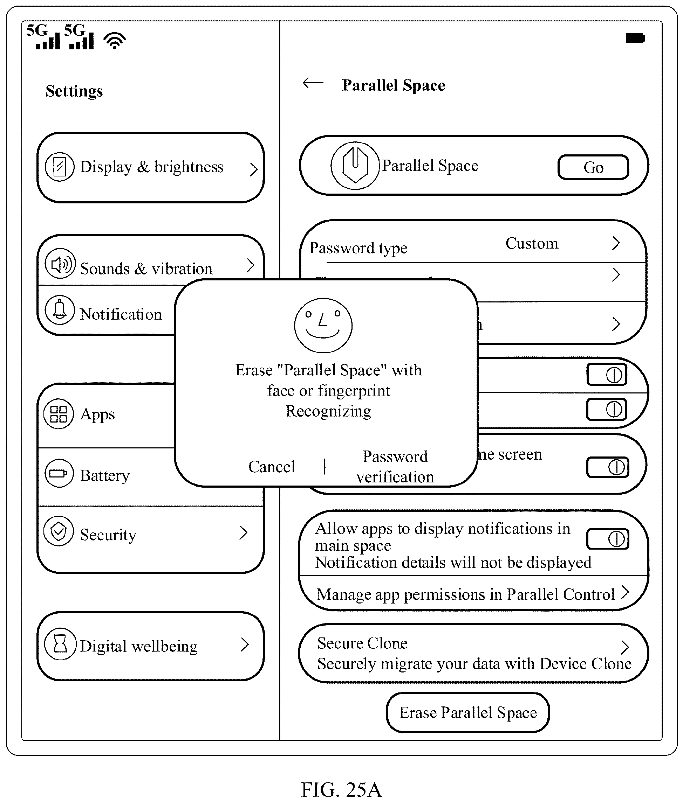

Specifically, after the user taps the option of "erase parallel space" in FIG. 24C, the electronic device verifies the identity of the user, and displays, on the display screen, prompt information of face recognition or fingerprint verification in a form of a floating window. For details, refer to FIG. 25A. Certainly, if the user needs to use a password to perform verification, the user may tap the "password verification" option in FIG. 25A, so that the display screen of the electronic device displays a password entry interface to perform password verification. If the user wants to stop erasing the parallel space at the current moment, the user may tap the "cancel" option in FIG. 25A to indicate the electronic device to stop erasing the parallel space.

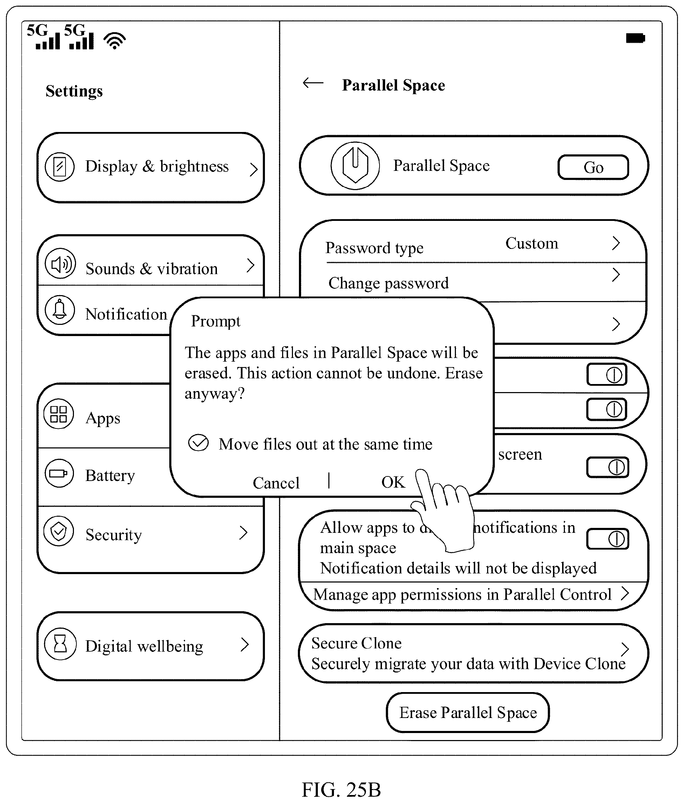

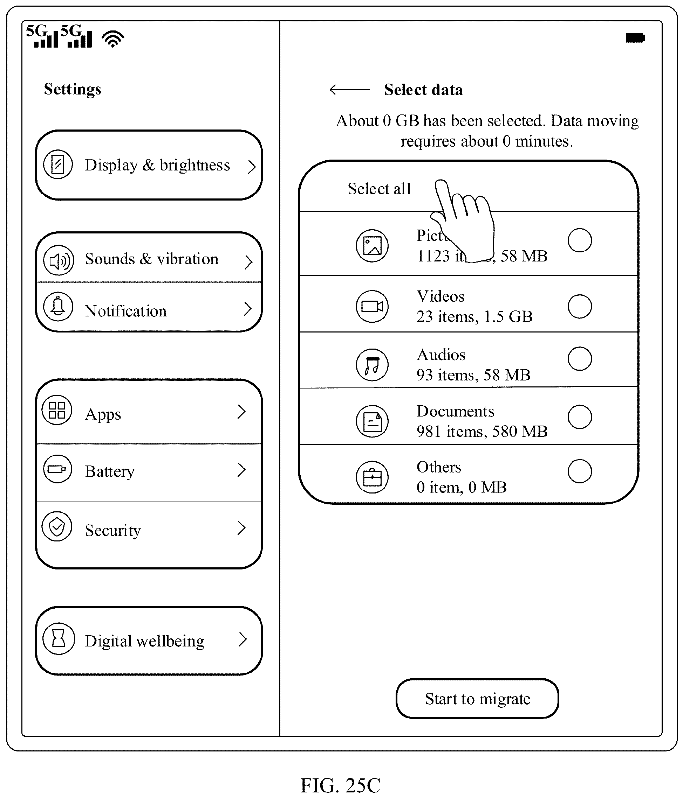

After the electronic device successfully verifies the identity of the user, the display screen of the electronic device displays query information, so as to query whether the user needs to move data out of the parallel space. For example, in FIG. 25B, the display screen displays the query information in a form of a floating window. If the user needs to move data out of the parallel space, the user needs to tap an "agree to remove" option (an option of "move files out at the same time" in the interface) to select the option. After selecting the option of "move files out at the same time", the user may tap the "OK" option in the interface. If the user does not need to move the data out of the parallel space, the user does not need to tap the option of "move files out at the same time". If the option of "move files out at the same time" is not selected, the user may tap the "OK" option in the interface. If the user taps the "OK" option, the display screen of the electronic device displays an interface of FIG. 25C in response to the user tapping the "OK" option in the interface.

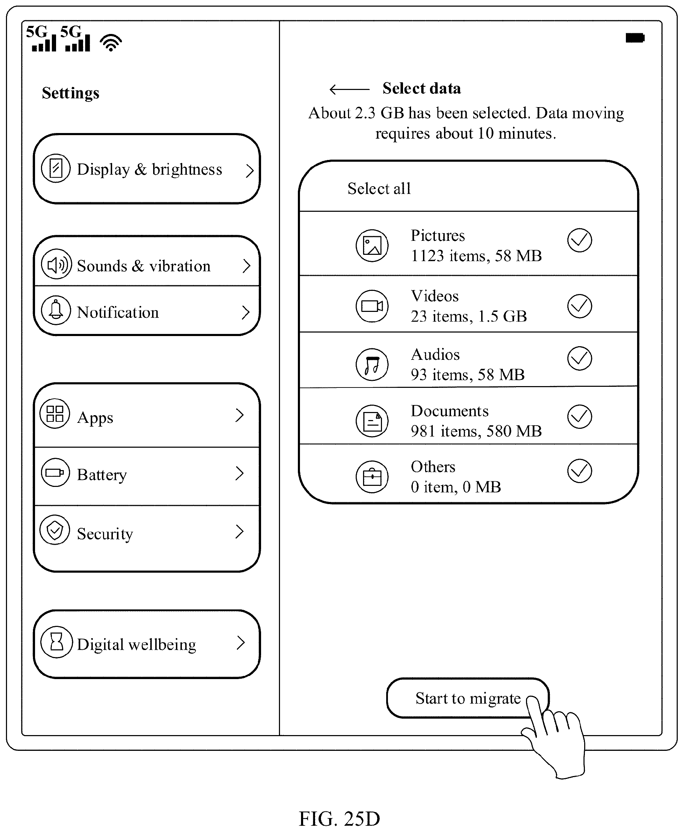

As shown in FIG. 25C, after the user taps the "OK" option, the display screen of the electronic device displays a category label (file category) of data that can be moved to the main space in the parallel space, for example, a picture label, a video label, an audio label, a document label, and a label of other data shown in FIG. 25C. By tapping the category label corresponding to the data that needs to be moved, the user can select this category of data. The user can alternatively select all categories of data by tapping the "select all" option in the interface. The display screen of the electronic device displays an interface shown in FIG. 25D in response to the operation of tapping the "select all" option in FIG. 25C by the user.

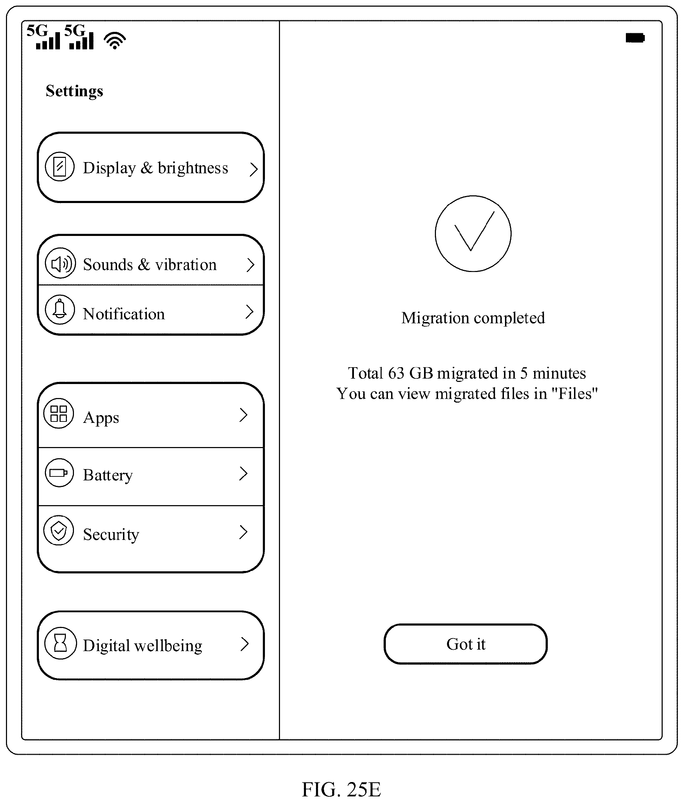

As shown in FIG. 25D, after the user taps the "select all" option in FIG. 25C, all categories of data that can be moved out of the parallel space are in a selected state. The display screen of the electronic device displays an interface shown in FIG. 25E in response to an operation of tapping an OK option ("start to migrate" option) in the interface by the user.

After the user taps the "start to migrate" option, the electronic device starts to migrate data that the user needs to move out of the parallel space. After the electronic device completes migration of all data that needs to be moved out, the display screen of the electronic device displays the interface shown in FIG. 25E, so as to prompt the user that data migration is completed.

In response to the user tapping the OK option ("got it" option) in the interface shown in FIG. 25E, the electronic device starts to erase the parallel space, and after the erasing is completed, the display screen of the electronic device displays the interface shown in FIG. 24D.

In another embodiment, when the parallel space is erased, the display screen of the electronic device may not perform split-screen display, and the display screen displays only content corresponding to an operation step.

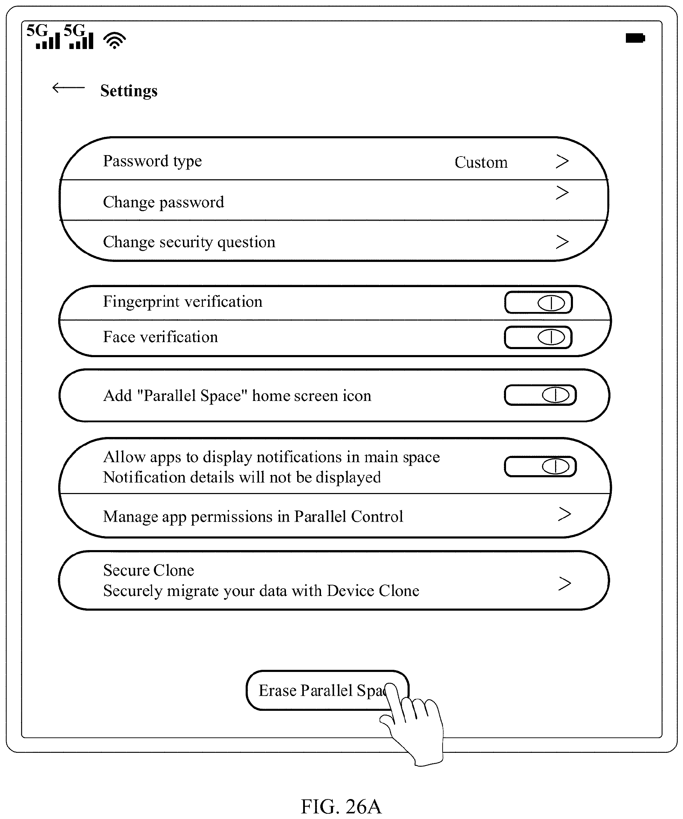

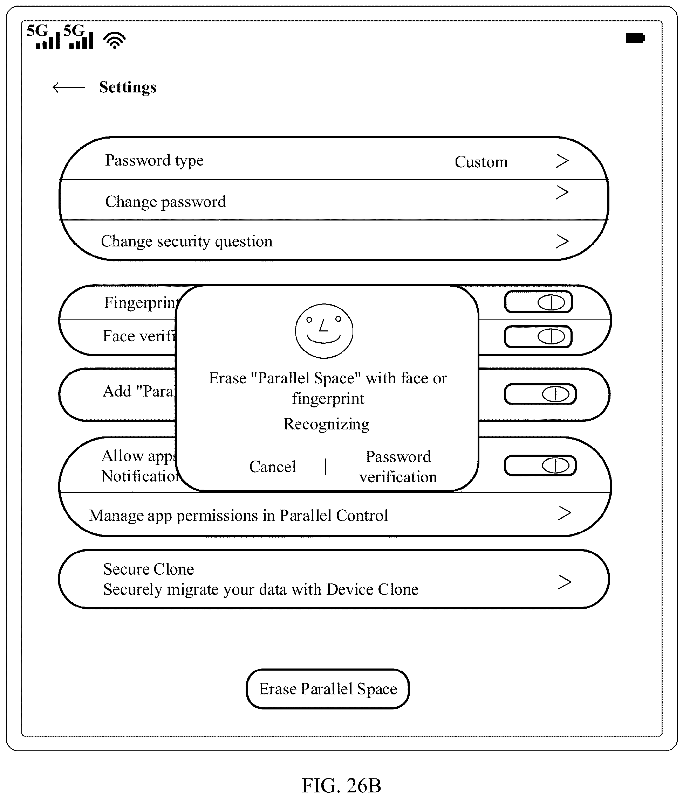

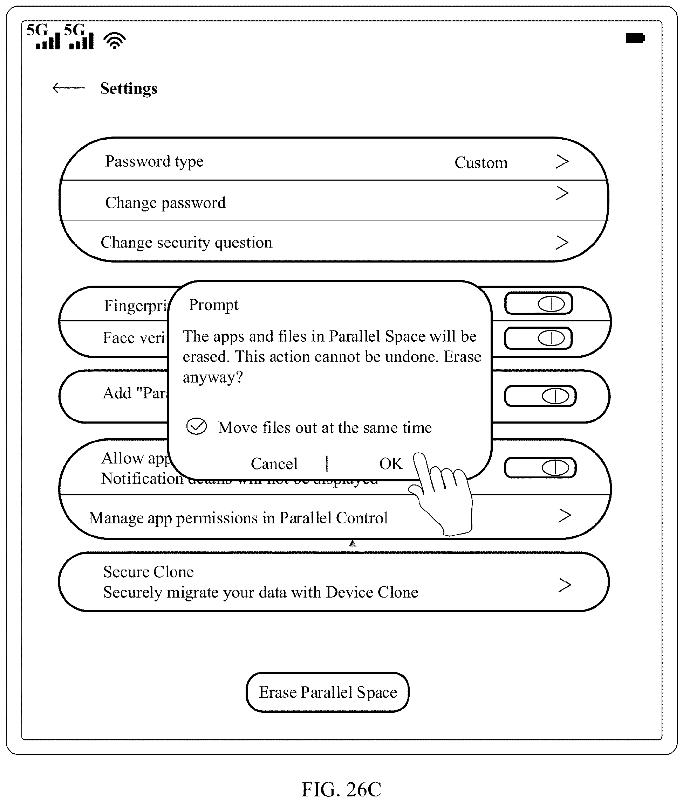

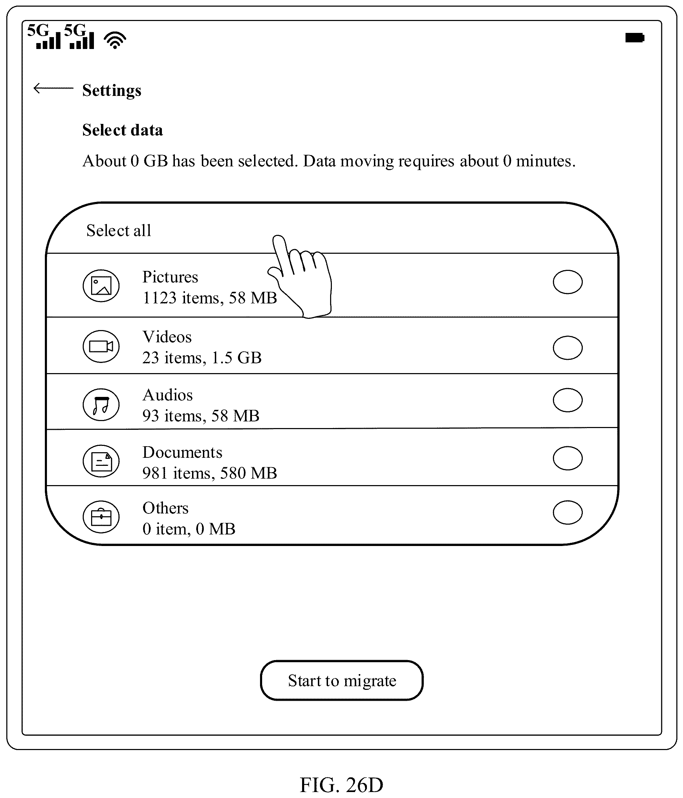

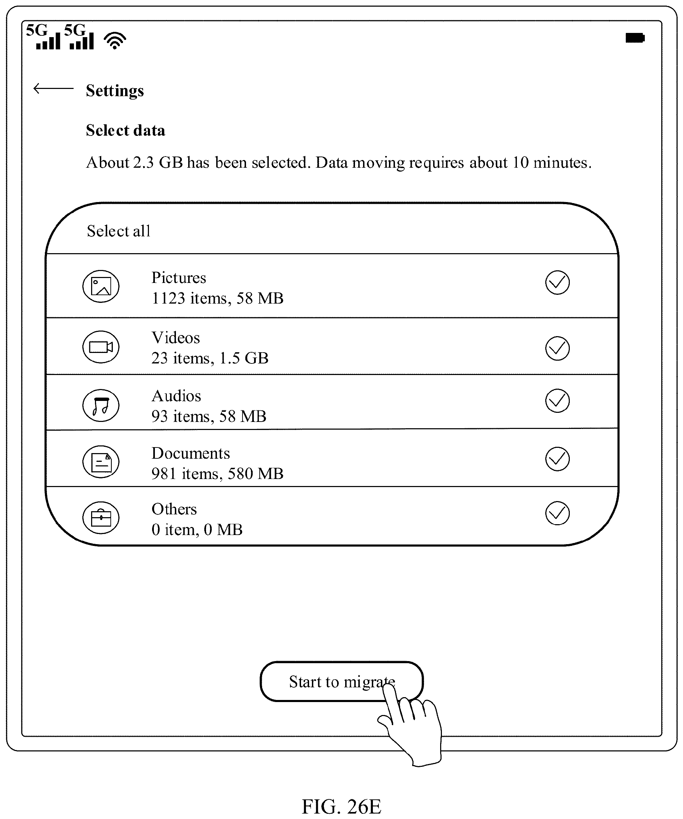

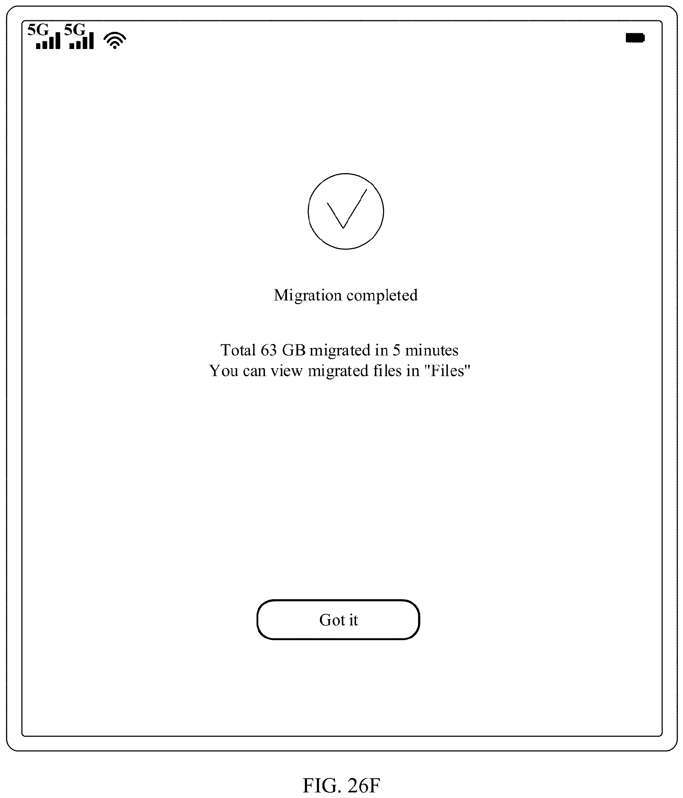

For example, after the operation in FIG. 24B is performed, the display screen of the electronic device displays the interface of FIG. 26A. There is no entrance icon for the parallel space in the interface of FIG. 26A (the entrance icon is hidden, and certainly, the entrance icon may not be hidden as shown in FIG. 25A). A function option corresponding to the parallel space is displayed in an interface of FIG. 26A. If the user wants to erase the parallel space, the user may tap the "erase parallel space" option in the interface shown in FIG. 26A. In response to the operation of tapping the "erase parallel space" option by the user, the display screen of the electronic device displays an interface of FIG. 26B, so as to prompt the user that the electronic device is performing face recognition or fingerprint verification. After the electronic device successfully verifies the identity of the user, the display screen of the electronic device displays an interface of FIG. 26C. The display screen of the electronic device displays an interface of FIG. 26D in response to an operation of tapping the "OK" option in the interface of FIG. 26C by the user. The display screen of the electronic device displays an interface of FIG. 26D in response to an operation of tapping the "select all" option in the interface of FIG. 26E by the user. In response to an operation of tapping the "start to migrate" option in the interface of FIG. 26E by the user, the electronic device starts to migrate data that needs to be migrated in the parallel space, and after all data is migrated, the display screen of the electronic device displays an interface of FIG. 26F, so as to prompt the user that data migration is completed. For introductions to FIG. 26B to FIG. 26F, refer to the introductions to FIG. 25A to FIG. 25E. Details are not described herein again.

The steps and interfaces in the process of erasing the parallel space may be randomly combined to form a new method and interface for erasing the parallel space.

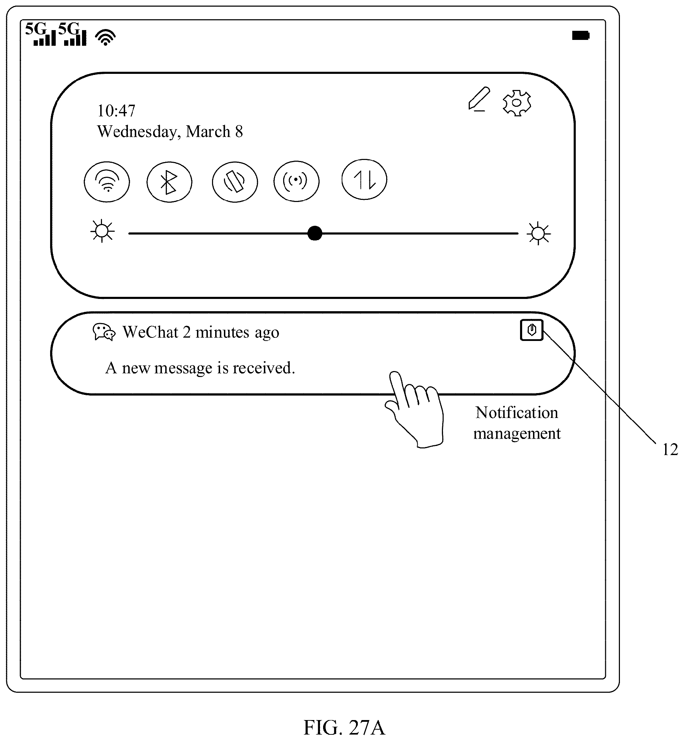

To meet requirements of different users, after creating a parallel space, the user may set to display a new message prompt in the parallel space when opening the main system, or not display a new message prompt in the parallel space. If the user sets to display a new message prompt in the parallel space when opening the main system, for example, the user opens the option of "allow applications to display notifications in the main space" in the interface shown in FIG. 26A. When the application in the parallel space receives a new message, the notification bar, the lock screen interface, and the like in the main system give a corresponding prompt, so as to notify the user that a new message exists in the parallel space. For example, as shown in FIG. 27A, when the WeChat application in the parallel space receives a new message, a drop-down notification bar in the main system displays a prompt that "WeChat received a new message 2 minutes ago". In addition, to help the user distinguish whether a message prompt displayed in the notification bar is from the main space or from the parallel space, when the message prompt is from the parallel space, an icon of the parallel space is displayed in the message prompt bar of the parallel space. For example, the right side of the message prompt bar of the parallel space in FIG. 27A displays an icon 12 of the parallel space.

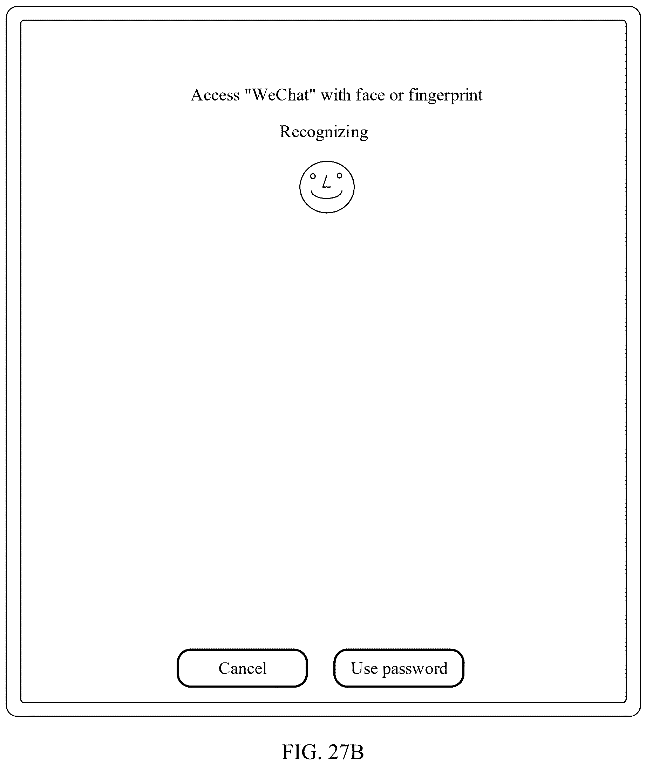

To ensure message security in the parallel space, after the user taps the message prompt bar in the parallel space in the notification bar, the electronic device verifies the identity of the user, and the display screen of the electronic device displays a prompt interface shown in FIG. 27B. Certainly, if the user wants to use a password to perform verification, the user may tap the "use password" option in the interface of FIG. 27B, and the display screen of the electronic device displays a password entry interface for the user to enter the password. The user may also tap the "cancel" option in the interface shown in FIG. 27A to FIG. 27C to stop opening the message in the message prompt bar.

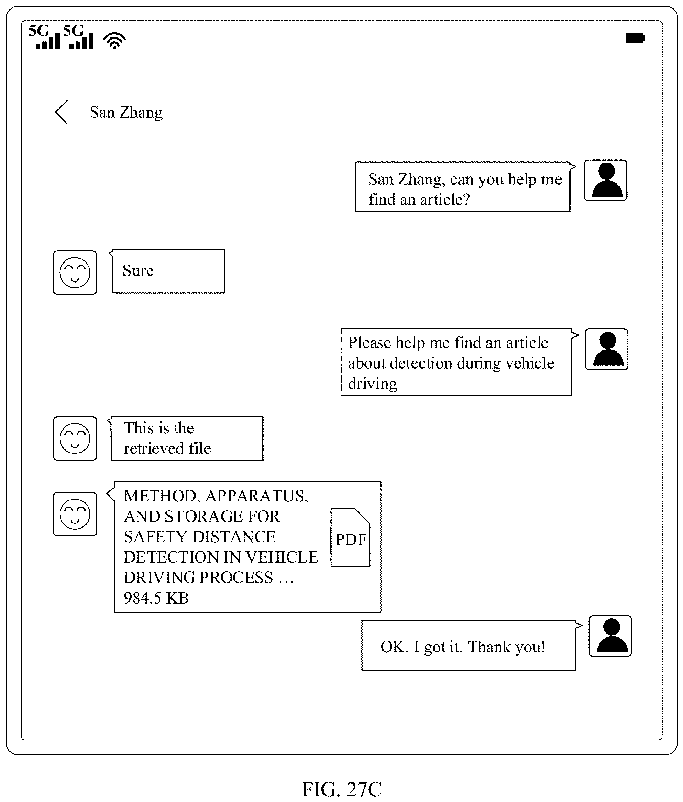

After the electronic device determines that the identity of the user is valid, the display screen of the electronic device displays a latest received message in the parallel space. For example, the display screen of the electronic device displays an interface shown in FIG. 27C. The interface shown in FIG. 27C is a WeChat chat interface. "OK, I have received it, thank you!" is the latest received message.

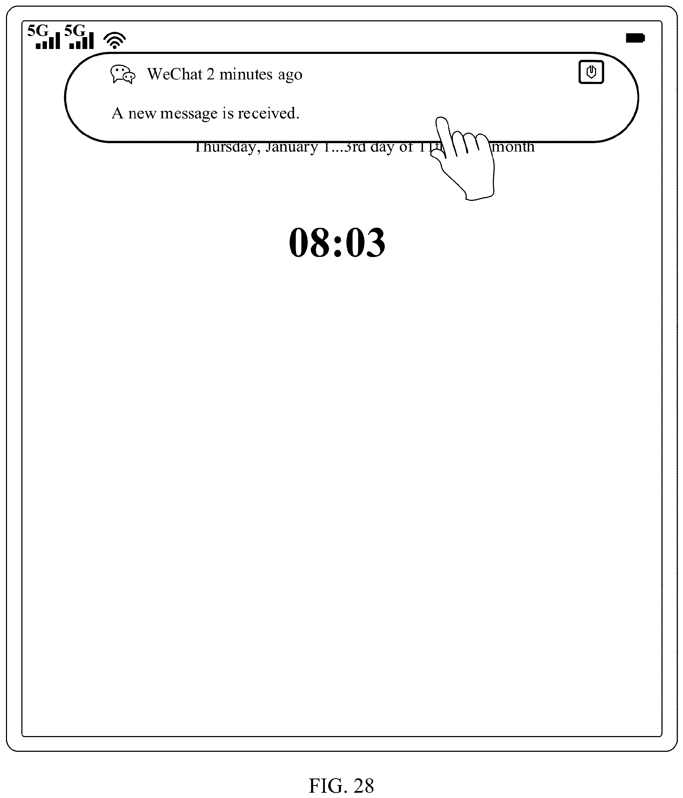

In another embodiment, if the user sets to display a new message prompt in the parallel space when the main system is opened, and when an application in the parallel space receives a new message, if the electronic device is in a lock screen state, a message notification bar indicating receiving a new message in the parallel space is displayed in a lock screen interface of the main system, as shown in an interface shown in FIG. 28. If the user wants to view the new message in the parallel space, the user may tap the message notification bar in the interface. In response to the operation of tapping the message notification bar in the interface by the user, the electronic device verifies the user identity, and after determining that the user identity is valid, the electronic device displays the new message received in the parallel space.

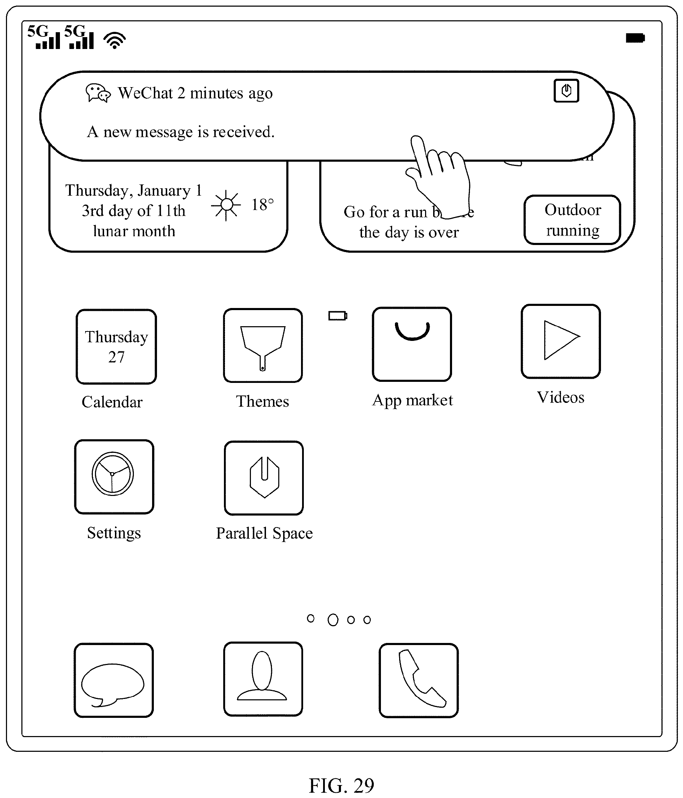

In another embodiment, if the user sets to display a new message prompt in the parallel space when the main system is opened, and when an application in the parallel space receives a new message, if the display screen of the electronic device is displaying the system home screen of the main system, a message notification bar indicating receiving a new message in the parallel space pops up on the system home screen of the main system, as shown in an interface shown in FIG. 29. If the user wants to view the new message in the parallel space, the user may tap the message notification bar in the interface. In response to the operation of tapping the message notification bar in the interface by the user, the electronic device verifies the user identity, and after determining that the user identity is valid, the electronic device displays the new message received in the parallel space.

In another embodiment, if the user sets to display a new message prompt in the parallel space when the main system is opened, and when an application in the parallel space receives a new message, if the display screen of the electronic device is displaying an interface of an application of the main system, a message notification bar indicating receiving a new message in the parallel space is displayed in the interface of the application of the main system. If the user wants to view the new message in the parallel space, the user may tap the message notification bar in the interface. In response to the operation of tapping the message notification bar in the interface by the user, the electronic device verifies the user identity, and after determining that the user identity is valid, the electronic device displays the new message received in the parallel space.

In a process in which the user uses the parallel space, a corresponding application may be opened by tapping an icon (or a control) in the application home screen of the parallel space. The following uses an example in which the user opens the gallery for description.

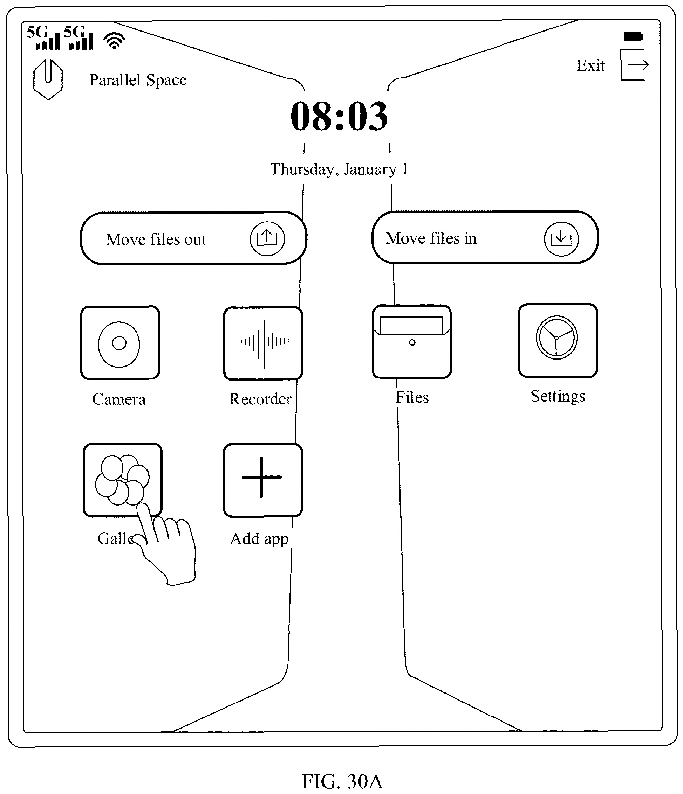

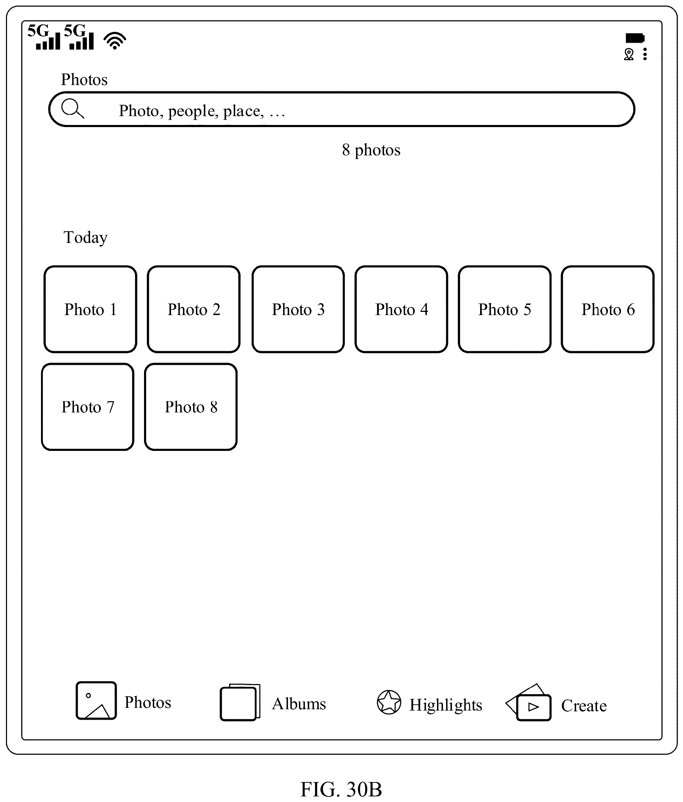

In an embodiment, referring to FIG. 30A, the display screen of the electronic device displays the application home screen of the parallel space. In response to an operation of tapping the icon "gallery" in the interface by the user, the electronic device opens the gallery in the parallel space, and displays an interface shown in FIG. 30B, and the interface displays a photo in the gallery. If the application interface of the application of the parallel space needs to be returned to the application home screen of the parallel space, the application interface of the application of the parallel space returns to the application home screen of the parallel space in a gesture manner. A gesture may be a slide leftward gesture or a slide rightward gesture. For example, if the interface shown in FIG. 30B needs to be returned to the interface shown in FIG. 30A, leftward or rightward sliding may be performed on the interface shown in FIG. 30B.

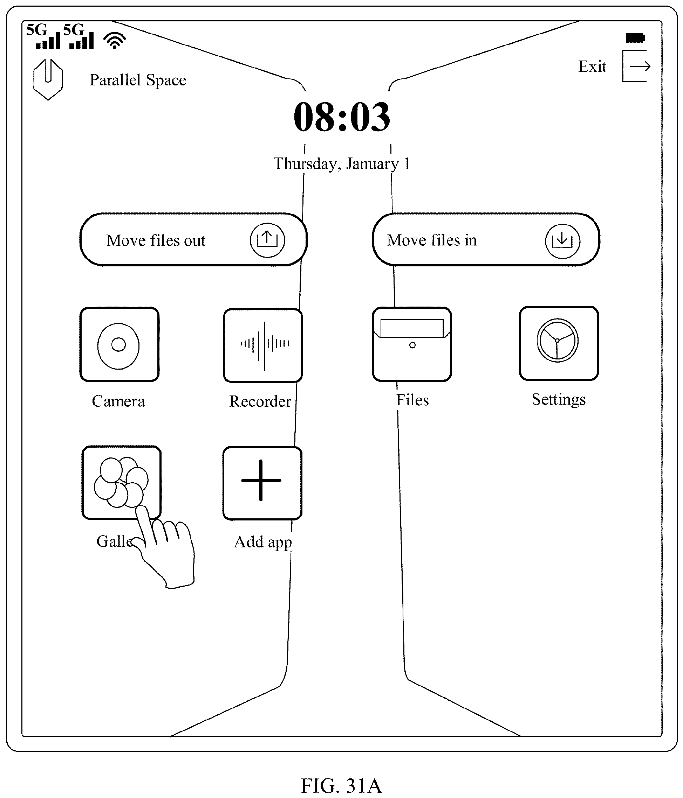

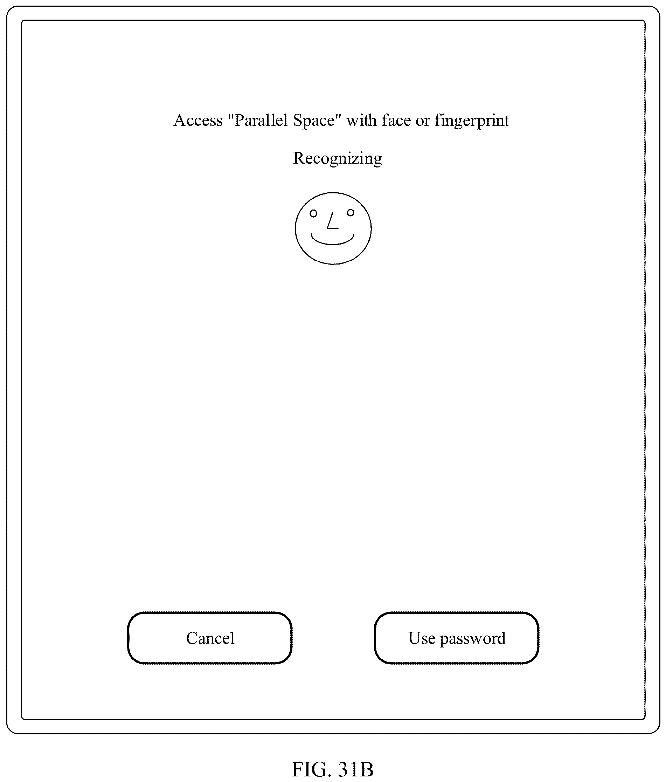

In an embodiment, referring to FIG. 31A, the display screen of the electronic device displays the application home screen of the parallel space. In response to an operation of tapping the icon "gallery" in the interface by the user, the electronic device starts to verify the identity of the user, and displays, in a verification process, an interface shown in FIG. 31B. Certainly, if the user wants to use a password to perform verification, the user may tap the "use password" option in the interface of FIG. 31B, and the display screen of the electronic device displays a password entry interface for the user to enter the password. If the user wants to stop the operation of opening the gallery, the user may tap the "cancel" option in FIG. 31B.

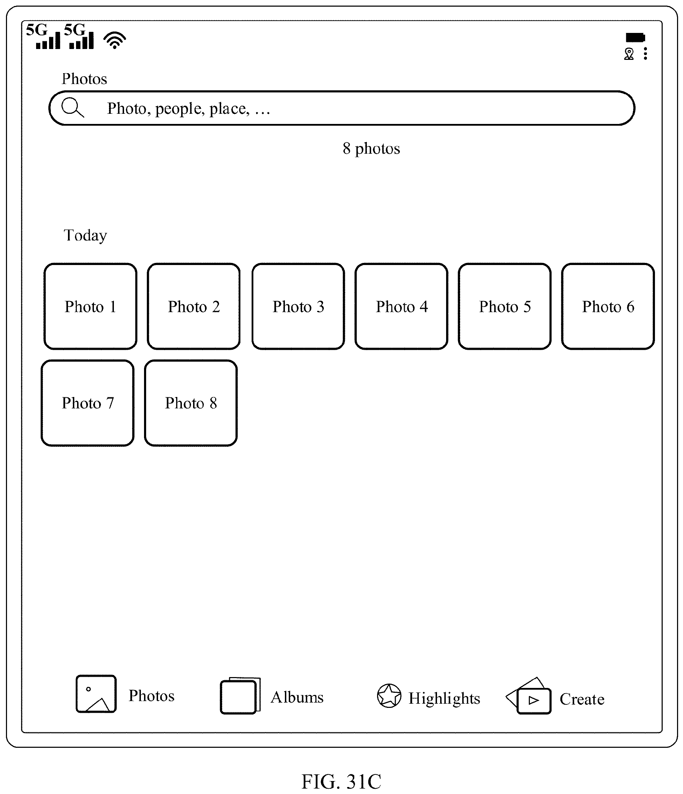

After the electronic device determines that the identity of the user is valid, the display screen of the electronic device displays content in the gallery of the parallel space. Specifically, as shown in FIG. 31C, the content in the gallery may include a photo option, an album option, a moment option, and a create option. A photo stored in the parallel space exists in the photo option. As shown in FIG. 31C, eight photos exist in the photo option. In the album option, photos are classified, and different categories of photos are stored into different folders. All photos in the moment option are distinguished according to a photographing time, and photos taken at a same time are in one region. Different processing and creation may be performed on photos in the create option.

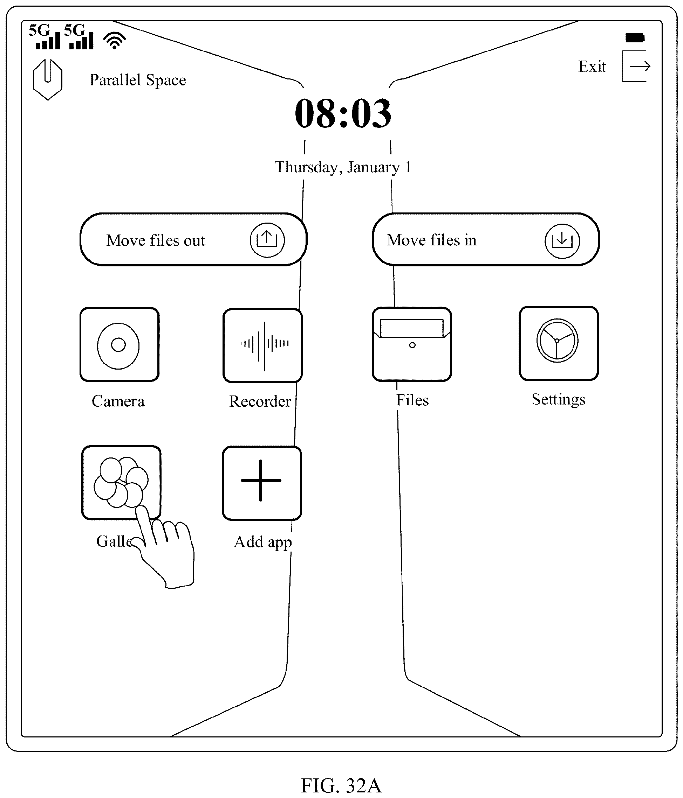

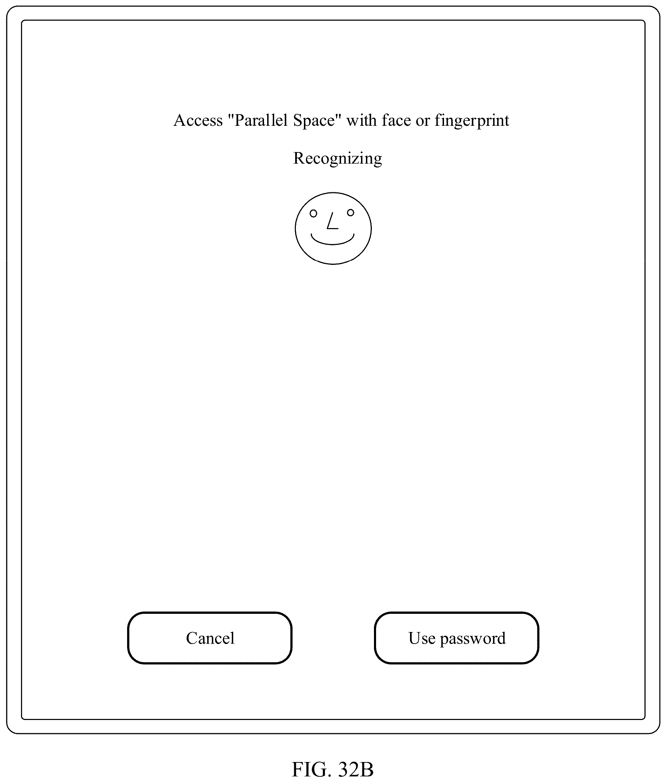

In another embodiment, referring to FIG. 32A, the display screen of the electronic device displays the application home screen of the parallel space. In response to an operation of tapping the icon "gallery" in the interface by the user, the electronic device starts to verify the identity of the user, and displays, in a verification process, an interface shown in FIG. 32B.

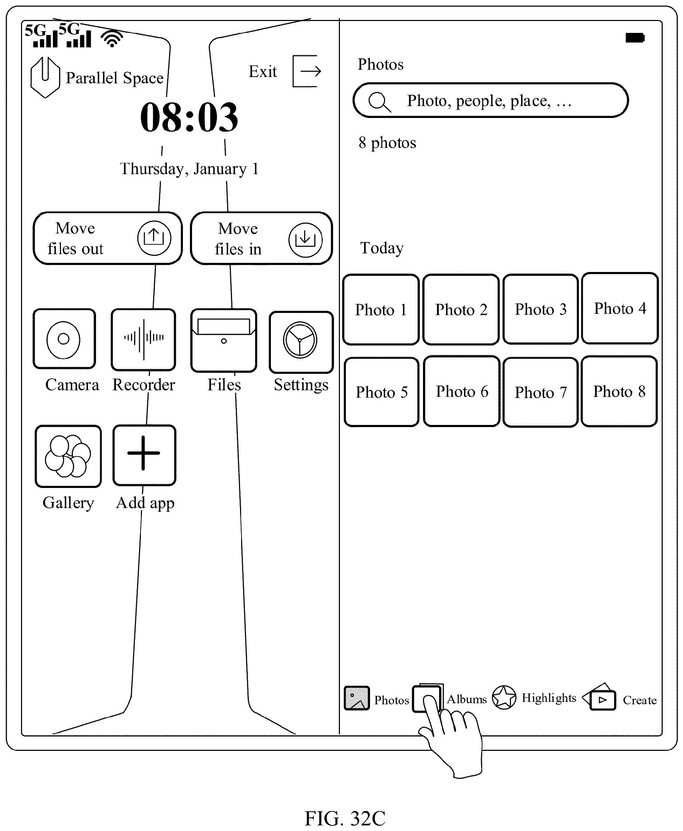

After the electronic device determines that the identity of the user is valid, the display screen of the electronic device performs split-screen display, the left region of the display screen displays the application home screen of the parallel space, and the right region of the parallel space displays content in the gallery. As shown in FIG. 32C, the right region of the display screen of the electronic device displays content in the photo option in the gallery.

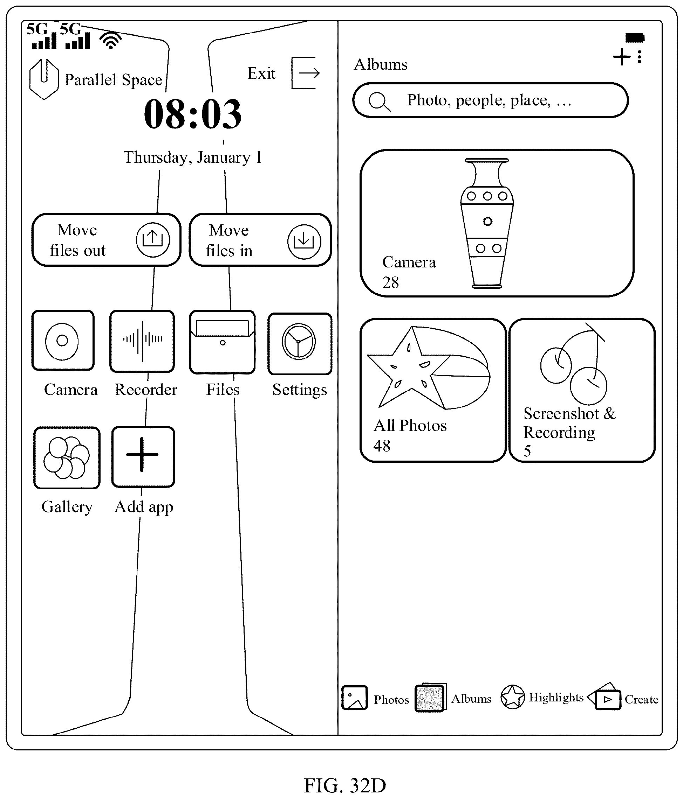

If the user wants to view content in another option in the gallery, the user may tap an option in the corresponding gallery in the interface of FIG. 32C, for example, as shown in the interface of FIG. 32C, the user taps the "album" option. In response to the operation of tapping the "album" option by the user, the display screen of the electronic device displays an interface of FIG. 32D. In the interface of FIG. 32D, the right region of the display screen displays content in the album option.

In this application, to adapt to requirements of different users, the user may further set a function of the parallel space by using the "settings" application in the main system of the electronic device. The following describes a method for setting an application permission of an application in a parallel space.

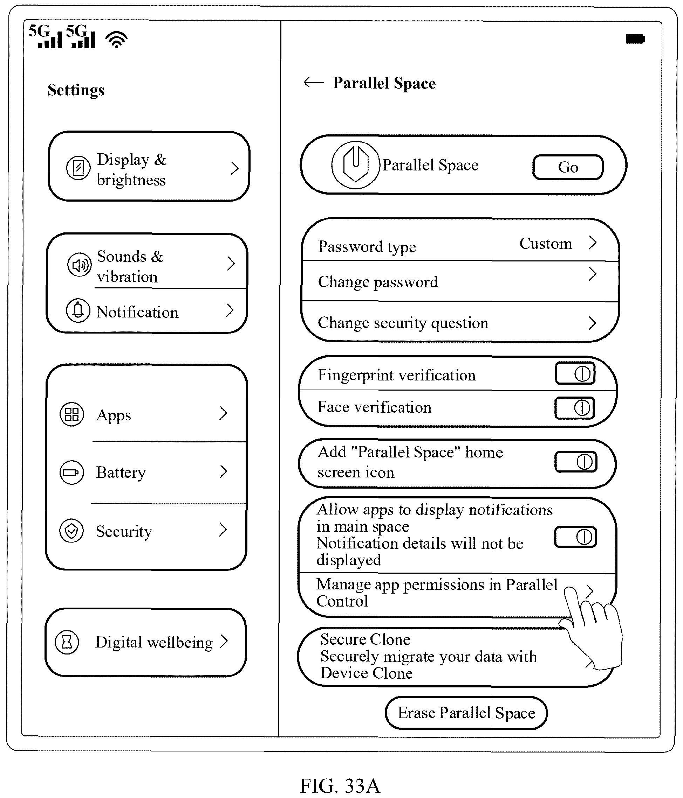

Referring to FIG. 33A, the display screen of the electronic device displays a function option that can be set in the parallel space. A "password type" option may be used by the user to customize a password type, for example, set a password to a number, a letter, or the like. A "change password" option allows the user to change the password of the parallel space. A "change password protection question" option allows the user to change the password protection question. A "fingerprint verification" option allows the user to choose whether to enable fingerprint verification in the parallel space. A "face verification" option allows the user to choose whether to enable face verification in the parallel space. An "add parallel space home screen icon" option allows the user to choose whether to add a parallel space icon to the system home screen of the main system. An "allow applications to display notifications in the main space" allows the user to choose whether to display a new message received in the parallel space in the main space. A "manage application permission in application space" option allows the user to set a permission for each application in the parallel space.

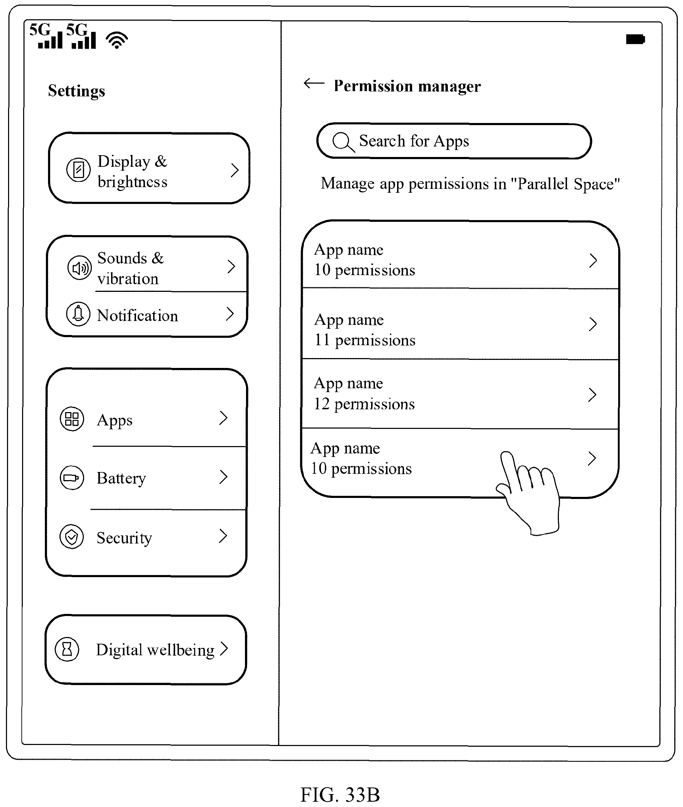

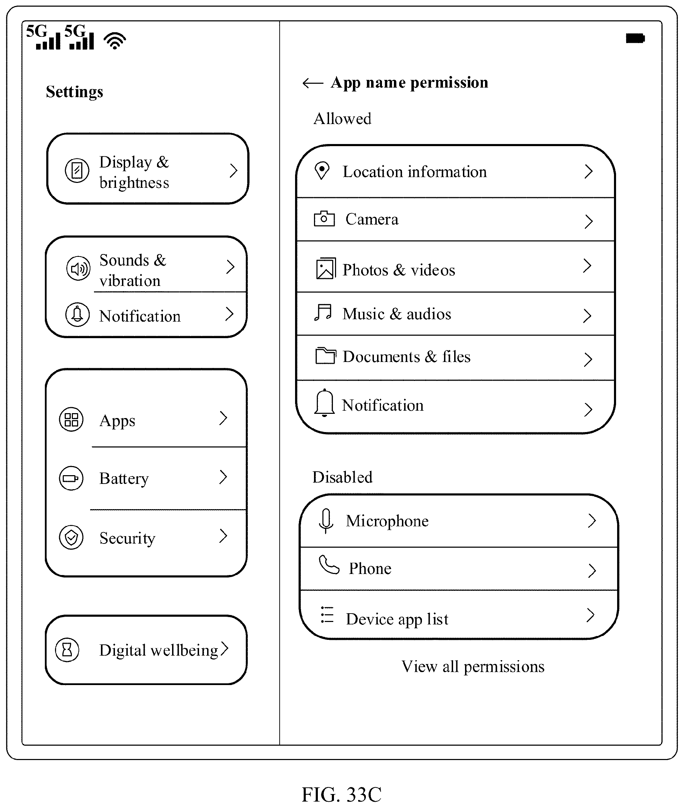

The display screen of the electronic device displays an interface shown in FIG. 33B in response to an operation of tapping the "manage application permission in application space" option in FIG. 33A by the user. The interface of FIG. 33B shows an application name of an application that can be set with a permission. After tapping an application name of an application, the user can set a permission for the application. For example, in response to an operation of tapping an application name of a last application in FIG. 33B by the user, the display screen of the electronic device displays an interface of FIG. 33C. The interface of FIG. 33C displays a permission setting item that is allowed to be performed on a selected application and a permission setting item that is prohibited to be performed on a selected application. For example, position information permission setting, camera permission setting, and photo and video permission setting can be performed on an application as shown in the figure. Microphone permission setting, phone permission setting, and the like are prohibited to be performed on an application. Corresponding permission setting may be completed by tapping a corresponding permission device option.

In actual application, the user may further set the parallel space by using the "settings" application in the application home screen of the parallel space, for example, perform wallpaper setting, sound setting, font and size setting, on/off setting of face recognition, and on/off setting of fingerprint recognition in the parallel space. A specific item that can be set may be set according to a requirement, which is not limited herein.

In actual application, a "security watermark" flag may be set on the display interface of the parallel space, for example, a security watermark is set on a lower right corner of the interface of the parallel space, and content of the security watermark may be set according to a requirement. In addition, the "security watermark" flag may not be set on the display interface of the parallel space. An interface color of the parallel space may be set as required, for example, the interface color of the parallel space may be set to "tech blue" or "luxury gold".

To ensure security in the parallel space, when the electronic device performs multi-task display, content in the parallel space is in a hidden state. If the user needs to view the content in the parallel space, user verification needs to be performed. After the verification succeeds, the electronic device can display the content in the corresponding parallel space.

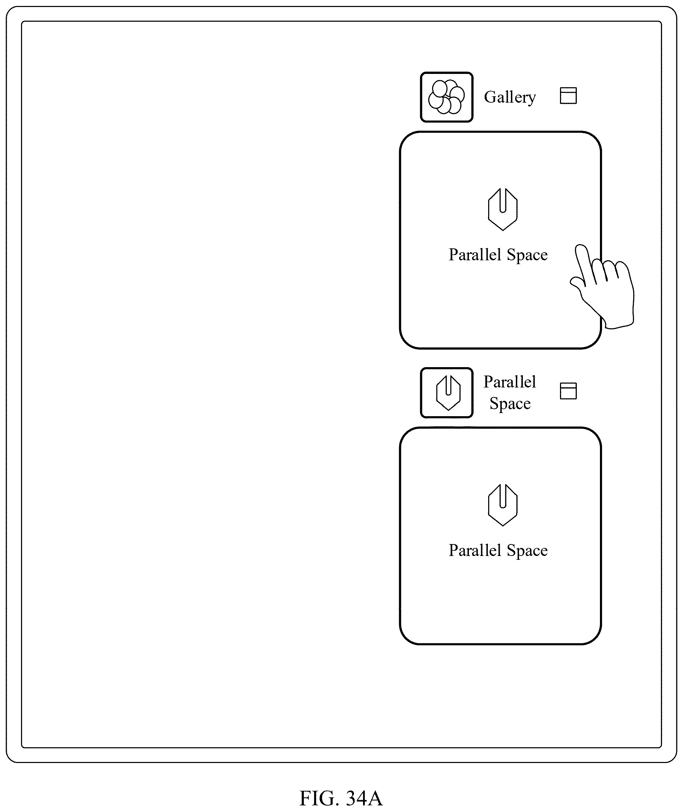

The display screen of the electronic device displays the system home screen of the main system. The user triggers multi-task display by performing a first preset gesture operation. Multi-task display is an interface shown in FIG. 34A. The first preset gesture operation may be that the user slides from the bottom of the display screen to the upper region of the display screen by using one finger, and lifts the finger (slide upward gesture) after the finger reaches the upper region of the display screen.

In addition, the display screen of the electronic device displays the application home screen of the parallel space or an interface of an application in the parallel space, for example, an interface of an application B in the parallel space. The user triggers multi-task display by performing a second preset gesture operation, and multi-task display is an interface shown in FIG. 34A. The second preset gesture operation may be that the user slides from the bottom of the display screen to the middle region of the display screen by using one finger, and lifts the finger after the finger reaches the middle region of the display screen.

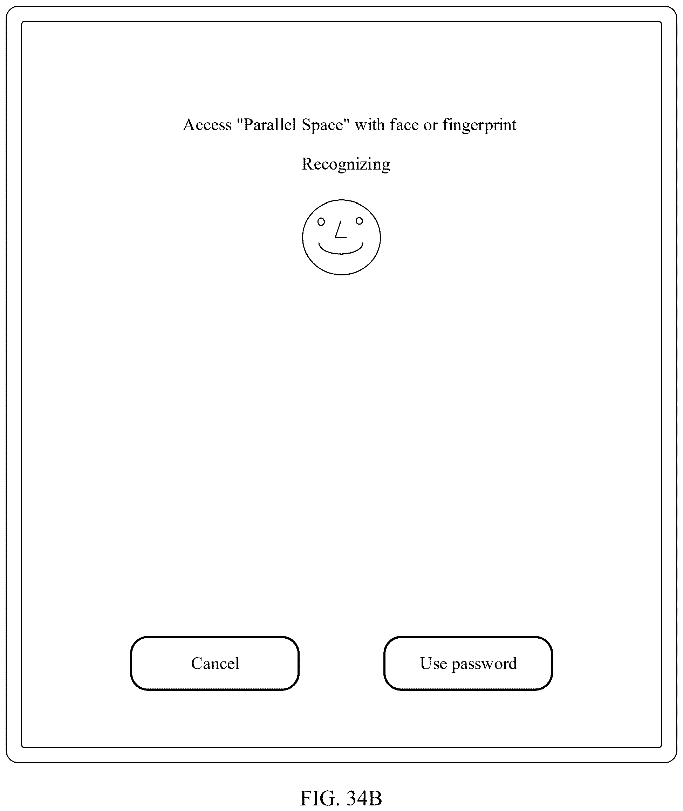

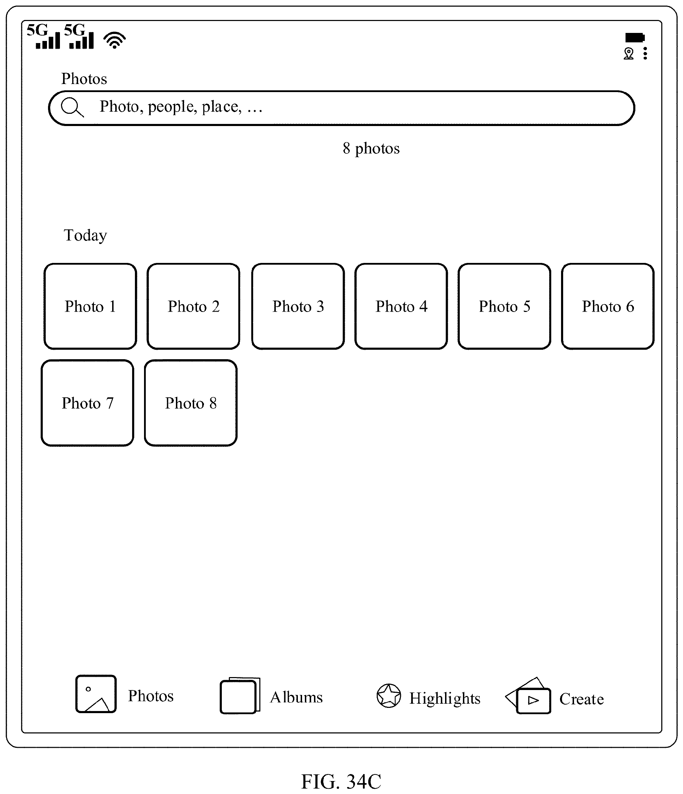

Specifically, as shown in FIG. 34A, multi-task displayed on the display screen of the electronic device includes the gallery of the parallel space and the home screen of the parallel space. If the user needs to view the content in the gallery, the user needs to tap the "gallery" option in multi-task display. In response to the operation of tapping the "gallery" option in multi-task display by the user, the electronic device starts to verify the identity of the user, and displays an interface shown in FIG. 34B during verification. After the electronic device successfully verifies the identity of the user, the electronic device opens the gallery of the parallel space and displays the content in the gallery, as shown in FIG. 34C.

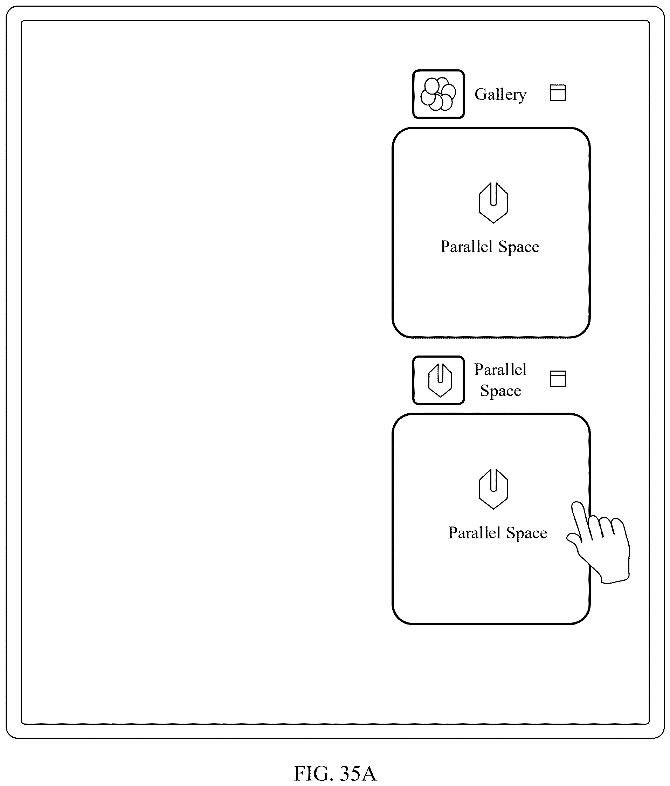

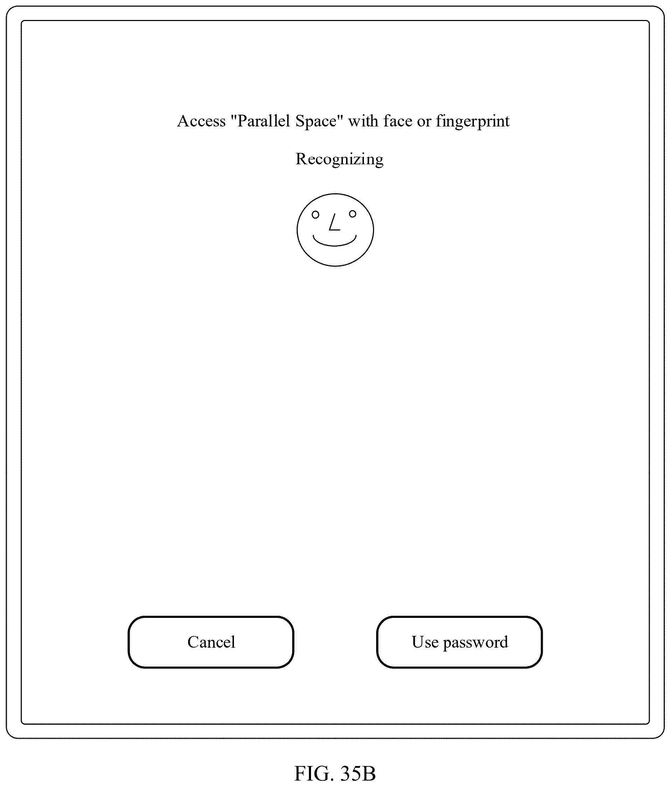

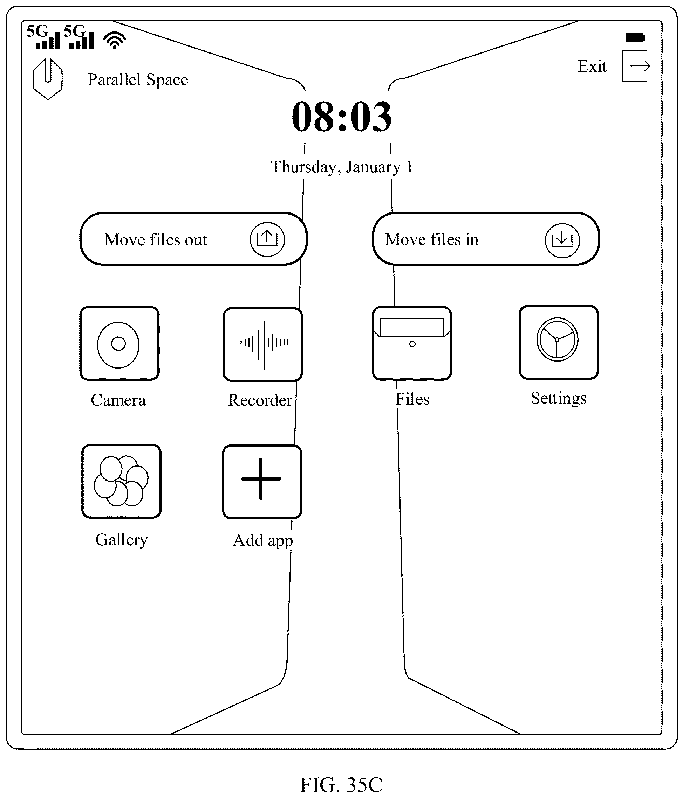

As shown in FIG. 35A, multi-task displayed on the display screen of the electronic device includes the gallery of the parallel space and the home screen of the parallel space. If the user needs to open the parallel space, the user needs to tap the "parallel space" option in multi-task display. In response to the operation of tapping the "parallel space" option in multi-task display by the user, the electronic device starts to verify the identity of the user, and displays an interface shown in FIG. 35B during verification. After the electronic device successfully verifies the identity of the user, the electronic device opens the parallel space and displays the home screen of the parallel space, as shown in FIG. 35C.

It should be noted that all the controls or the options in the foregoing interfaces are examples, and specific controls and options in each interface may be set according to a function of the electronic device. The foregoing tap operation is also merely an example. The foregoing tap operation may alternatively be another operation, for example, a touch and hold operation, a one-tap operation, a double-tap operation, or a slide operation, and may be set as required. A name of the control, the icon, or the option in the foregoing embodiments may be set according to a requirement. The diagram in this application is merely an indication manner, and is not limiting.

The following describes specific steps of a data exchange method provided in this application. Specifically, a data move-in and move-out method includes:

An electronic device displays an application home screen of a subsystem application, where the subsystem application is a subsystem application running in a main system of the electronic device, and the application home screen includes a first control for moving a file in and a second control for moving a file out;
the electronic device receives a first operation performed on the first control, and the electronic device displays a first interface in response to the first operation, where the first interface includes an option of a first file category and an option of a second file category;
the electronic device receives a second operation performed on the option of the first file category, and the electronic device displays a second interface in response to the second operation, where the second interface includes a first file stored in the main system, and a file category of the first file is the first file category;
the electronic device receives a third operation, where the third operation includes an operation of selecting the first file, and the electronic device displays a third interface of the subsystem application in response to the third operation, where the third interface includes the first file;
the electronic device receives a fourth operation performed on the second control, and the electronic device displays a fourth interface of the subsystem application in response to the fourth operation, where the fourth interface includes an option of a third file category and an option of a fourth file category;
the electronic device receives a fifth operation performed on the option of the third file category, and the electronic device displays a fifth interface in response to the fifth operation, where the fifth interface includes a second file stored in the subsystem application, and a file category of the second file is the third file category; and
the electronic device receives a sixth operation, where the sixth operation includes an operation of selecting the second file, and the electronic device displays a sixth interface of the main system in response to the sixth operation, where the sixth interface includes the second file.

The application home screen of the subsystem application displays an icon of an application installed in the subsystem application, such as the interface of FIG. 3M, the interface in FIG. 9F, and the interface in FIG. 22C. The first control for moving a file in is a control for moving a file of the main system into the subsystem application, such as the "move files in" control in FIG. 14A. The second control for moving a file out is a control for moving a file of the subsystem application into the main system, such as the "move files out" control in FIG. 20A. The first operation is an operation of triggering the main system to prepare to migrate data to the subsystem application, such as the operation of tapping the "move files in" control in FIG. 14A, or the operation of tapping the "move files in" control in FIG. 15A. A category label of migratable data exists in the first interface, such as the interface of FIG. 14B, the interface of FIG. 15B, the interface of FIG. 16B, and the interface 19. Both the option of the first file category and the option of the second file category are category labels of migratable data, such as the picture label, the video label, the audio label, and the document label in the interface of FIG. 14B. The second operation is an operation of triggering display of content in the category label. For example, the second operation is the operation of tapping the picture label in FIG. 14B, or the operation of tapping the document label in FIG. 16B. The second interface displays data in the main system in the category label selected by the user, and the data selected by the user in the second interface is the first file. For example, the second interface may be the interface of FIG. 14C, the interface of FIG. 15C, the interface of FIG. 16C, the interface of FIG. 17C, and the interface (c) of FIG. 18. Correspondingly, a picture A to a picture C in the interface of FIG. 14C are the first file, and a document 1 to a document 3 in the interface of FIG. 16C are the first file. The third operation may include an operation of selecting the first file and an operation of triggering data migration. For example, the third operation may be the operation of selecting the picture A, the picture B, and the picture C in FIG. 14C, and the operation of tapping the "migrate" option in FIG. 14C. The third operation may alternatively be the operation of selecting the document 1, the document 2, and the document 3 in FIG. 16C, and the operation of dragging the selected document in FIG. 16C. The third operation may alternatively be an operation of selecting the picture A, the picture B, and the picture C in FIG. 17C (or FIG. 18), and the operation of dragging the selected picture. The third interface is an interface of the subsystem application, and data that has been migrated from the main system to the subsystem application is displayed in the third interface, such as the interface of FIG. 14D, the interface of FIG. 15D, or the interface of FIG. 16D.

The fourth operation is an operation of triggering the subsystem application to prepare to migrate data to the main system, such as the operation of tapping the "move files out" control in FIG. 20A. A category label of migratable data exists in the fourth interface, such as the interface of FIG. 20B or the interface of FIG. 21B. Both the option of the second file category and the option of the third file category are category labels of migratable data, such as the picture label, the video label, the audio label, and the document label in the interface of FIG. 20B. The fifth operation is an operation of triggering display of content in the category label, for example, the fifth operation is the operation of tapping the picture label in FIG. 14C. The fifth interface displays data in the main system in the category label selected by the user, and the data selected by the user in the fifth interface is the second file. For example, the fifth interface may be the interface of FIG. 20C and the interface of FIG. 21C. Correspondingly, the picture A and the picture B in the interface of FIG. 20C are the second file, and the picture A and the picture B in the interface of FIG. 21C are the second file. The sixth operation may include an operation of selecting the second file and an operation of triggering data migration. For example, the sixth operation may be the operation of selecting the picture A and the picture B in FIG. 20C, and the operation of tapping the "migrate" option in FIG. 20C. The sixth operation may alternatively be the operation of selecting the picture A and the picture B in FIG. 21C, and the operation of tapping the "migrate" option in FIG. 21C. The sixth interface is an interface of the main system, and the sixth interface displays data that has been migrated from the subsystem application to the main system, such as the interface of FIG. 20D or the interface of FIG. 21D.

Specifically, an application adding button exists on the application home screen. When the electronic device displays the application home screen of the subsystem application, a method for installing an application in the parallel space includes:

The electronic device receives a seventh operation, where the seventh operation is performed on the application adding button;
the electronic device displays an eighth interface in response to the seventh operation, where the eighth interface includes an icon of a first application;
the electronic device receives an eighth operation, where the eighth operation includes an operation of selecting the first application; and
displays the icon of the first application on the application home screen in response to the eighth operation, where the icon of the first application is used to start the first application.

The application adding button is a button on the application home screen that can trigger an application to be added to the subsystem application, for example, the "add application" button in FIG. 22A. The seventh operation may be a tap operation, a touch and hold press operation, or the like. The eighth interface is an interface that includes an icon of an application that can be added to the subsystem application, and an application that the user needs to add is the first application, for example, "WPS" in FIG. 22B is the first application. The eighth operation is an operation of triggering the electronic device to install the first application, for example, the first operation is the operation of selecting the "WPS" icon and tapping the "OK" option in FIG. 22B.

Specifically, when the electronic device displays the application home screen of the subsystem application, a method for uninstalling an application in the parallel space includes:

The electronic device receives a ninth operation, where the ninth operation is performed on an icon of a second application displayed on the application home screen;
the electronic device displays a ninth interface in response to the ninth operation, where the ninth interface includes a first option of uninstalling the second application;
the electronic device receives a tenth operation, where the tenth operation is performed on the first option; and
the electronic device displays a tenth interface in response to the tenth operation, where the tenth interface includes a prompt that the electronic device is performing identity verification of a user;
where after the electronic device determines that an identity of the user is valid, the application home screen does not display the icon of the second application.

The second application is any application on the application home screen of the subsystem application, and the ninth operation is an operation of triggering the electronic device to enter an uninstalling procedure. For example, the ninth operation is the operation of tapping or touching and holding the "WPS" icon in FIG. 23A, and correspondingly, "WPS" is the second application. The ninth interface includes a first option for uninstalling the second application. FIG. 23B is the ninth interface, and the "uninstall" option in the interface is the first option. The tenth operation is an operation of triggering user identity verification, and identity verification may be face verification, fingerprint verification, or password verification. For example, the tenth operation is the operation of tapping the "uninstall" option in FIG. 23B, and a corresponding tenth interface is the interface of FIG. 23C.

Specifically, a method for creating a parallel space includes:

The electronic device displays the system home screen of the main system;
the electronic device receives an eleventh operation, where the eleventh operation is a first gesture operation, or when an icon of a system settings application exists on the system home screen, the eleventh operation includes an operation performed on the icon of the system settings application;
the electronic device displays an eleventh interface in response to the eleventh operation, where the eleventh interface includes a creation option of the subsystem application;
the electronic device receives a twelfth operation, where the twelfth operation is performed on the creation option; and
the electronic device displays the application home screen of the subsystem application in response to the twelfth operation.

The system home screen of the main system is an interface for displaying an icon of an application installed in the main system, such as the interface shown in FIG. 2A. The eleventh operation is an operation of triggering the electronic device to enter a creation step of the subsystem application. For example, the eleventh operation is a set of all operations from the interface of FIG. 2A to the interface of FIG. 2D, or the eleventh operation may be the gesture operation in FIG. 4A and FIG. 4B, and a corresponding first gesture operation is the zoom-in gesture operation in FIG. 4A and FIG. 4B. The eleventh interface includes a creation option of the subsystem application. For example, the eleventh interface may be the interface of FIG. 2D, or may be the interface of FIG. 4C, and a corresponding creation option is an option for starting to create a parallel space, for example, the "enable" option in FIG. 2D. The twelfth operation is an operation of triggering starting to create a parallel space.

Specifically, a method for entering the parallel space includes:

The electronic device displays the system home screen of the main system;
the electronic device receives a thirteenth operation;
the electronic device displays a twelfth interface in response to the thirteenth operation, where the twelfth interface includes a prompt that identity verification of a user is being performed; and
after the electronic device determines that an identity of the user is valid, the electronic device displays the application home screen of the subsystem application.

The thirteenth operation is an operation of triggering the electronic device to perform user identity verification before entering the parallel space, and an optional thirteenth operation is a second gesture operation, for example, the gesture operation in the interface of FIG. 9A or the gesture operation in the interface of FIG. 9B. The optional thirteenth operation may alternatively be an operation of tapping the icon of the parallel space on the system home screen of the main system, for example, the operation of tapping the icon of the "parallel space" in FIG. 8A. User identity verification may be verification on a face, a fingerprint, or a password. The twelfth interface may be the interface shown in FIG. 9C. Optionally, the method for entering the parallel space may further be: a fourteenth operation and a fifteenth operation, an icon of a system settings application exists on the system home screen, and the fourteenth operation is performed on the icon of the system settings application; and that the electronic device displays a twelfth interface in response to the thirteenth operation includes:

The electronic device displays a thirteenth interface in response to the fourteenth operation, where the thirteenth interface includes an entrance icon for entering the subsystem application;
the electronic device receives a fifteenth operation performed on the entrance icon; and
the electronic device displays the twelfth interface in response to the fifteenth operation.

The fourteenth operation is an operation of triggering display of an entrance icon. For example, the fourteenth operation includes a set of operations from the interface of FIG. 2A to the interface of FIG. 2B, and the operation of tapping the "parallel space on" icon by the user in FIG. 10A. The fourteenth interface includes an entrance icon of the parallel space, such as the icon of the "parallel space entrance" in the interface FIG. 10B, and a corresponding operation of tapping the icon of the "parallel space entrance" in the interface shown in FIG. 10B is the fifteenth operation.

Specifically, the thirteenth interface displays an erase option of the subsystem application, and when the electronic device displays the thirteenth interface, a method for erasing the parallel space includes:

The electronic device receives a sixteenth operation performed on the erase option; and
the electronic device displays a fourteenth interface in response to the sixteenth operation, where the fourteenth interface includes a prompt that the subsystem application has been erased.

The erase option of the subsystem application is used to erase the parallel space. For example, the thirteenth interface may be the interface shown in FIG. 24C, and the "erase parallel space" option in the interface is the erase option of the subsystem application. Correspondingly, the sixteenth operation is the operation of tapping the "erase parallel space" option in FIG. 24C. Content in the fourteenth interface is used to prompt the user that the parallel space has been erased. For example, the fourteenth interface may be the interface shown in FIG. 24D.

Optionally, the sixteenth operation includes a seventeenth operation, an eighteenth operation, a nineteenth operation, and a twentieth operation, and that the electronic device displays a fourteenth interface in response to the sixteenth operation includes:

The electronic device displays a fifteenth interface in response to the seventeenth operation, where the fifteenth interface includes a prompt that identity verification of a user is being performed;
after the electronic device determines that an identity of the user is valid, the electronic device displays a sixteenth interface, where the sixteenth interface includes a second option of determining to migrate data of the subsystem application to the main system;
the electronic device receives the eighteenth operation performed on the second option;
the electronic device displays a seventeenth interface in response to the eighteenth operation, where the seventeenth interface includes an option of a fifth file category and an option of a sixth file category;
the electronic device receives the nineteenth operation, where the nineteenth operation includes selecting the option of the fifth file category and/or the option of the sixth file category;
the electronic device displays an eighteenth interface in response to the nineteenth operation, where the eighteenth interface includes a file migration completion prompt and a third option;
the electronic device receives the twentieth operation performed on the third option; and
the electronic device displays the fourteenth interface in response to the twentieth operation.

Before the parallel space is erased, data in the parallel space may be further migrated to the main system, so as to prevent data loss in the parallel space. Specifically, the seventeenth operation is an operation of triggering user identity verification before data migration, for example, the seventeenth operation is the operation of tapping the "erase parallel space" option in FIG. 24C. The fifteenth interface may be the interface shown in FIG. 25A, and the interface displays that the electronic device is performing face or fingerprint verification. The sixteenth interface is used to query and enable the user to determine whether the data in the subsystem application needs to be migrated to the main system. For example, the "move files out at the same time" option and the "OK" option in FIG. 25B are both the second option, and correspondingly, an operation of tapping the "move files out at the same time" option and the "OK" option in FIG. 25B by the user is the eighteenth operation. The seventeenth interface displays a category label of data that can be migrated from the subsystem application. The category label shown in FIG. 25C may be a picture label, a video label, an audio label, or the like. The fifth file category may be one or more of the picture label, the video label, the audio label, or the like. The sixth file category may be one or more of the picture label, the video label, the audio label, or the like. The nineteenth operation is an operation used to trigger to start data migration, and the nineteenth operation may be an operation performed on the fifth file category and/or the sixth file category and the operation of tapping "start to migrate" in the interface of FIG. 25D. The nineteenth operation may alternatively be an operation performed on the "select all" option in FIG. 25C and the operation of tapping "start to migrate" in the interface of FIG. 25D. The eighteenth interface displays a third option, where the third option is an option for the user to determine that completion of data migration is known. For example, the third option is the "got it" option in FIG. 25E.

Specifically, when the subsystem application is created in the electronic device and the user sets to display a message of the subsystem application in the main system, a method for viewing a new message of the subsystem application from the main system includes:

The electronic device displays a nineteenth interface of the main system, where the nineteenth interface is a system home screen of the main system, a lock screen interface, or an application interface of a third application in the main system, and the nineteenth interface includes a message notification bar in which the subsystem application receives a new message;
the electronic device receives a twenty-first operation, where the twenty-first operation is performed on the message notification bar;
the electronic device displays a twentieth interface in response to the twenty-first operation, where the twentieth interface includes a prompt that the electronic device is performing identity verification of a user; and
after the electronic device determines that an identity of the user is valid, the electronic device displays a twenty-first interface, where the twenty-first interface includes that the subsystem application receives a new message.

The lock screen interface is an interface when the electronic device is in a lock screen state. For example, the lock screen interface may be the interface shown in FIG. 28. A message notification bar of a new message of the subsystem application exists in the nineteenth interface. The message notification bar may be displayed in the notification bar of the main system. For example, the nineteenth interface may be the interface shown in FIG. 27A, and a corresponding message notification bar is a notification bar of "a new message is received". The message notification bar may be displayed on the lock screen, such as the interface shown in FIG. 28. The message notification bar may alternatively be displayed on the system home screen of the main system, such as the interface shown in FIG. 29. The twenty-first operation is an operation of triggering user identity verification before displaying a new message of the subsystem application. For example, the twenty-first operation is the operation of tapping the message notification bar in FIG. 27A. The twelfth interface is the interface shown in FIG. 27B. The twenty-first interface includes a new message received by the subsystem application. For example, the twenty-first interface may be the interface shown in FIG. 27C.

Specifically, the electronic device may return to the system home screen of the main system from the interface of the subsystem application. Therefore, when the electronic device displays the application home screen of the subsystem application or the application interface of the fourth application in the subsystem application, a method for returning to the system home screen of the main system from the interface of the subsystem application includes:

The electronic device receives a twenty-second operation; and
the electronic device displays a system home screen of the main system in response to the twenty-second operation, where the system home screen displays an icon of the subsystem application.

The fourth application is any application of an application installed in the subsystem application. The application interface of the fourth application is any interface in the fourth application. The twenty-second operation is an operation of triggering returning to the system home screen of the main system from the interface of the subsystem application. The twenty-second operation may be a third gesture operation or a lock screen operation. The third gesture operation may be the slide upward operation of sliding from the bottom of the display screen to the upper part of the display screen in the foregoing embodiment.

Specifically, the electronic device may trigger multi-task display from the interface of the subsystem application, and view content in the subsystem application by using a multi-task display window. Therefore, when the electronic device displays the application home screen of the subsystem application or the application interface of the fifth application in the subsystem application, the method may further include:

The electronic device receives a twenty-third operation, where the twenty-third operation is different from the twenty-second operation;
the electronic device displays a twenty-second interface in response to the twenty-third operation, where the twenty-second interface includes a multi-task window, and the multi-task window includes a first task window of the subsystem application;
the electronic device receives a twenty-fourth operation performed on the first task window;
the electronic device displays a twenty-third interface in response to the twenty-fourth operation, where the twenty-third interface includes a prompt that identity verification of a user is being performed; and
after the electronic device determines that an identity of the user is valid, the electronic device displays a twenty-fourth interface, where the twenty-fourth interface includes content corresponding to the first task window in the subsystem application.

The twenty-third operation is an operation of triggering multi-task display. For example, the twenty-third operation may be an operation of sliding upward from the bottom of the display screen until sliding to the middle region of the electronic screen. The twenty-third operation may alternatively be an operation of sliding downward from the top of the electronic screen until sliding to the middle region of the electronic screen. A multi-task window exists in the twenty-second interface, and the multi-task window may include a first task window of the subsystem application and a task window of the main system. For example, the twenty-second interface may be the interface shown in FIG. 34A or the interface shown in FIG. 35A, and the interface includes a gallery window and an application home screen window of the subsystem application. Correspondingly, the first task window is the gallery window or the application home screen window of the subsystem application. The twenty-fourth operation is an operation of triggering the electronic device to perform user identity verification, and after the verification succeeds, displaying content corresponding to the first task window. For example, the twenty-fourth operation is the operation of tapping the gallery window in FIG. 34A, or the operation of tapping the parallel space window in FIG. 35A. The twenty-third interface may be the interface shown in FIG. 34B or FIG. 35B. The twenty-fourth interface includes content of the first task window. For example, the twenty-fourth interface is the interface shown in FIG. 34C, and the interface includes a picture in the gallery. The twenty-fourth interface may alternatively be the application home screen of the subsystem application shown in FIG. 35C.

Optionally, the electronic device may trigger multi-task display from the system home screens of the main system, and view content in the subsystem application by using the multi-task display window. Therefore, when the electronic device displays the system home screen of the main system, the method may further include:

The electronic device receives a twenty-fifth operation;
the electronic device displays a twenty-fifth interface in response to the twenty-fifth operation, where the twenty-fifth interface includes a multi-task window, and the multi-task window includes a second task window of the subsystem application;
the electronic device receives a twenty-sixth operation performed on the second task window;
the electronic device displays a twenty-sixth interface in response to the twenty-sixth operation, where the twenty-sixth interface includes a prompt that identity verification of a user is being performed; and
after the electronic device determines that an identity of the user is valid, the electronic device displays a twenty-seventh interface, where the twenty-seventh interface includes content corresponding to the second task window of the subsystem application.

The twenty-fifth operation may be an operation of sliding upward from the bottom of the display screen to the upper region (or the top) of the display screen. The twenty-fifth interface may be the interface shown in FIG. 34A. The second task window may be any window corresponding to the subsystem application in the interface shown in FIG. 34A, for example, the gallery window or the parallel space window in FIG. 34A. The twenty-sixth interface may be the interface shown in FIG. 34A. The twenty-seventh interface may be the interface shown in FIG. 34C or the interface shown in FIG. 35C. It should be understood that sequence numbers of the steps in the foregoing embodiments do not mean execution sequences. The execution sequences of the procedures should be determined based on functions and internal logic of the procedures, and should not be construed as any limitation on the implementation procedures of the embodiments of this application.

An embodiment of this application further provides a computer-readable storage medium. The computer-readable storage medium stores a computer program, and when the computer program is executed by a processor, the steps in the foregoing method embodiments may be implemented.

An embodiment of this application further provides a computer program product. When the computer program product runs on a first device, the first device is enabled to implement the steps in the foregoing method embodiments.

When an integrated unit is implemented in a form of a software functional unit and sold or used as an independent product, the integrated unit may be stored in a computer-readable storage medium. Based on such an understanding, in this application, all or some of the procedures in the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file form, some intermediate forms, or the like. The computer-readable medium may include at least any entity or apparatus that can carry the computer program code to a first device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practice.

An embodiment of this application further provides a chip system. The chip system includes a processor. The processor is coupled to a memory, and the processor executes a computer program stored in the memory, to implement the steps in any method embodiment of this application. The chip system may be a single chip or a chip module including a plurality of chips.

In the foregoing embodiments, the descriptions of the embodiments have respective focuses. For a part that is not detailed or described in an embodiment, reference may be made to related descriptions in other embodiments.

Persons of ordinary skill in the art may be aware that the example units and method steps described with reference to the embodiments disclosed in this specification can be implemented by electronic hardware or a combination of computer software and electronic hardware. Whether these functions are performed by hardware or software depends on specific applications and design constraints of the technical solutions. Persons skilled in the art may use different methods to implement the described functions for each specific application, but it should not be considered that the implementation goes beyond the scope this application.

The foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in the embodiments of this application, and shall fall within the protection scope of this application.

## Claims

1. A data exchange method, comprising:
displaying, by an electronic device, an application home screen of a subsystem application, wherein the subsystem application is a subsystem application running in a main system of the electronic device, and the application home screen comprises a first control for moving a file in and a second control for moving a file out;
receiving, by the electronic device, a first operation performed on the first control, and displaying, by the electronic device, a first interface in response to the first operation, wherein the first interface comprises an option of a first file category and an option of a second file category;
receiving, by the electronic device, a second operation performed on the option of the first file category, and displaying, by the electronic device, a second interface in response to the second operation, wherein the second interface comprises a first file stored in the main system, and a file category of the first file is the first file category;
receiving, by the electronic device, a third operation, wherein the third operation comprises an operation of selecting the first file, and displaying, by the electronic device, a third interface of the subsystem application in response to the third operation, wherein the third interface comprises the first file;
receiving, by the electronic device, a fourth operation performed on the second control, and displaying, by the electronic device, a fourth interface of the subsystem application in response to the fourth operation, wherein the fourth interface comprises an option of a third file category and an option of a fourth file category;
receiving, by the electronic device, a fifth operation performed on the option of the third file category, and displaying, by the electronic device, a fifth interface in response to the fifth operation, wherein the fifth interface comprises a second file stored in the subsystem application, and a file category of the second file is the third file category; and
receiving, by the electronic device, a sixth operation, wherein the sixth operation comprises an operation of selecting the second file, and displaying, by the electronic device, a sixth interface of the main system in response to the sixth operation, wherein the sixth interface comprises the second file.

2. The method according to claim 1, wherein the displaying, by the electronic device, a first interface comprises:
displaying, by the electronic device, the application home screen and the first interface in a split-screen manner.

3. The method according to claim 1, wherein the application home screen comprises an application adding button, and when the electronic device displays the application home screen of the subsystem application, the method further comprises:
receiving, by the electronic device, a seventh operation, wherein the seventh operation is performed on the application adding button;
displaying, by the electronic device, an eighth interface in response to the seventh operation, wherein the eighth interface comprises an icon of a first application;
receiving, by the electronic device, an eighth operation, wherein the eighth operation comprises an operation of selecting the first application; and
displaying the icon of the first application on the application home screen in response to the eighth operation, wherein the icon of the first application is used to start the first application.

4. The method according to claim 1, wherein when the electronic device displays the application home screen of the subsystem application, the method further comprises:
receiving, by the electronic device, a ninth operation, wherein the ninth operation is performed on an icon of a second application displayed on the application home screen;
displaying, by the electronic device, a ninth interface in response to the ninth operation, wherein the ninth interface comprises a first option of uninstalling the second application;
receiving, by the electronic device, a tenth operation, wherein the tenth operation is performed on the first option; and
displaying, by the electronic device, a tenth interface in response to the tenth operation, wherein the tenth interface comprises a prompt that the electronic device is performing identity verification of a user;
wherein after the electronic device determines that an identity of the user is valid, the application home screen does not comprise the icon of the second application.

5. The method according to claim 1, wherein the displaying, by an electronic device, an application home screen of a subsystem application comprises:
displaying, by the electronic device, a system home screen of the main system;
receiving, by the electronic device, an eleventh operation, wherein the eleventh operation is a first gesture operation, or when an icon of a system settings application exists on the system home screen, the eleventh operation comprises an operation performed on the icon of the system settings application;
displaying, by the electronic device, an eleventh interface in response to the eleventh operation, wherein the eleventh interface comprises a creation option of the subsystem application;
receiving, by the electronic device, a twelfth operation, wherein the twelfth operation is performed on the creation option; and
displaying, by the electronic device, the application home screen of the subsystem application in response to the twelfth operation.

6. The method according to any one of claims 1-5, wherein the displaying, by an electronic device, an application home screen of a subsystem application comprises:
displaying, by the electronic device, the system home screen of the main system;
receiving, by the electronic device, a thirteenth operation;
displaying, by the electronic device, a twelfth interface in response to the thirteenth operation, wherein the twelfth interface comprises a prompt that identity verification of a user is being performed; and
after the electronic device determines that an identity of the user is valid, displaying, by the electronic device, the application home screen of the subsystem application.

7. The method according to claim 6, wherein the thirteenth operation is a second gesture operation.

8. The method according to claim 6, wherein the thirteenth operation comprises a fourteenth operation and a fifteenth operation, an icon of a system settings application exists on the system home screen, and the fourteenth operation is performed on the icon of the system settings application; and
the displaying, by the electronic device, a twelfth interface in response to the thirteenth operation comprises:
displaying, by the electronic device, a thirteenth interface in response to the fourteenth operation, wherein the thirteenth interface comprises an entrance icon for entering the subsystem application;
receiving, by the electronic device, a fifteenth operation performed on the entrance icon; and
displaying, by the electronic device, the twelfth interface in response to the fifteenth operation.

9. The method according to claim 8, wherein the thirteenth interface displays an erase option of the subsystem application; and
when the electronic device displays the thirteenth interface, the method further comprises:
receiving, by the electronic device, a sixteenth operation performed on the erase option; and
displaying, by the electronic device, a fourteenth interface in response to the sixteenth operation, wherein the fourteenth interface comprises a prompt that the subsystem application has been erased.

10. The method according to claim 9, wherein the sixteenth operation comprises a seventeenth operation, an eighteenth operation, a nineteenth operation, and a twentieth operation; and
the displaying, by the electronic device, a fourteenth interface in response to the sixteenth operation comprises:
displaying, by the electronic device, a fifteenth interface in response to the seventeenth operation, wherein the fifteenth interface comprises a prompt that identity verification of a user is being performed;
after the electronic device determines that an identity of the user is valid, displaying, by the electronic device, a sixteenth interface, wherein the sixteenth interface comprises a second option of determining to migrate data of the subsystem application to the main system;
receiving, by the electronic device, the eighteenth operation performed on the second option;
displaying, by the electronic device, a seventeenth interface in response to the eighteenth operation, wherein the seventeenth interface comprises an option of a fifth file category and an option of a sixth file category;
receiving, by the electronic device, the nineteenth operation, wherein the nineteenth operation comprises selecting the option of the fifth file category and/or the option of the sixth file category;
displaying, by the electronic device, an eighteenth interface in response to the nineteenth operation, wherein the eighteenth interface comprises a file migration completion prompt and a third option;
receiving, by the electronic device, the twentieth operation performed on the third option; and
displaying, by the electronic device, the fourteenth interface in response to the twentieth operation.

11. The method according to any one of claims 1 to 10, wherein the method further comprises:
displaying, by the electronic device, a nineteenth interface of the main system, wherein the nineteenth interface is a system home screen of the main system, a lock screen interface, or an application interface of a third application in the main system, and displaying, on the nineteenth interface, a message notification bar in which the subsystem application receives a new message;
receiving, by the electronic device, a twenty-first operation, wherein the twenty-first operation is performed on the message notification bar;
displaying, by the electronic device, a twentieth interface in response to the twenty-first operation, wherein the twentieth interface comprises a prompt that the electronic device is performing identity verification of a user; and
after the electronic device determines that an identity of the user is valid, displaying, by the electronic device, a twenty-first interface, wherein the twenty-first interface comprises that the subsystem application receives a new message.

12. The method according to any one of claims 1 to 11, wherein when the electronic device displays the application home screen of the subsystem application or an application interface of a fourth application in the subsystem application, the method further comprises:
receiving, by the electronic device, a twenty-second operation; and
displaying, by the electronic device, a system home screen of the main system in response to the twenty-second operation, wherein the system home screen comprises an icon of the subsystem application.

13. The method according to claim 12, wherein the twenty-second operation is a third gesture operation or a lock screen operation.

14. The method according to claim 12 or 13, wherein when the electronic device displays the application home screen of the subsystem application or an application interface of a fifth application in the subsystem application, the method further comprises:
receiving, by the electronic device, a twenty-third operation, wherein the twenty-third operation is different from the twenty-second operation;
displaying, by the electronic device, a twenty-second interface in response to the twenty-third operation, wherein the twenty-second interface comprises a multi-task window, and the multi-task window comprises a first task window of the subsystem application;
receiving, by the electronic device, a twenty-fourth operation performed on the first task window;
displaying, by the electronic device, a twenty-third interface in response to the twenty-fourth operation, wherein the twenty-third interface comprises a prompt that identity verification of a user is being performed; and
after the electronic device determines that an identity of the user is valid, displaying, by the electronic device, a twenty-fourth interface, wherein the twenty-fourth interface comprises content corresponding to the first task window in the subsystem application.

15. The method according to any one of claims 1 to 14, wherein when the electronic device displays the system home screen of the main system, the method further comprises:
receiving, by the electronic device, a twenty-fifth operation;
displaying, by the electronic device, a twenty-fifth interface in response to the twenty-fifth operation, wherein the twenty-fifth interface comprises a multi-task window, and the multi-task window comprises a second task window of the subsystem application;
receiving, by the electronic device, a twenty-sixth operation performed on the second task window;
displaying, by the electronic device, a twenty-sixth interface in response to the twenty-sixth operation, wherein the twenty-sixth interface comprises a prompt that identity verification of a user is being performed; and
after the electronic device determines that an identity of the user is valid, displaying, by the electronic device, a twenty-seventh interface, wherein the twenty-seventh interface comprises content corresponding to the second task window of the subsystem application.

16. An electronic device, wherein the electronic device comprises a processor, and the processor is configured to run a computer program stored in a memory, so that the electronic device is enabled to implement the method according to any one of claims 1 to 15.

17. A computer-readable storage medium, wherein the computer-readable storage medium stores a computer program, and when the computer program is executed by one or more processors, the method according to any one of claims 1 to 15 is implemented.
